(19) **Europäisches Patentamt / European Patent Office / Office européen des brevets**

(11) **EP 4 311 131 A1**

(12) # EUROPEAN PATENT APPLICATION
published in accordance with Art. 153(4) EPC

(43) Date of publication:
**24.01.2024 Bulletin 2024/04**

(21) Application number: **22778964.1**

(22) Date of filing: **29.03.2022**

(51) International Patent Classification (IPC):
**H04B 17/309** (2015.01)   **H04W 72/04** (2023.01)

(52) Cooperative Patent Classification (CPC):
**H04B 17/309; H04W 24/02; H04W 24/10;**
**H04W 72/04; H04W 72/54**

(86) International application number:
**PCT/CN2022/083818**

(87) International publication number:
**WO 2022/206782 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.04.2021 CN 202110363822**

(71) Applicant: **Huawei Technologies Co., Ltd.**
**Longgang**
**Shenzhen, Guangdong 518129 (CN)**

(72) Inventors:
• **FAN, Bo**
  **Shenzhen, Guangdong 518129 (CN)**

• **ZHANG, Xi**
  **Shenzhen, Guangdong 518129 (CN)**
• **CHEN, Lei**
  **Shenzhen, Guangdong 518129 (CN)**
• **YUAN, Shitong**
  **Shenzhen, Guangdong 518129 (CN)**
• **LIU, Fengwei**
  **Shenzhen, Guangdong 518129 (CN)**
• **ZHANG, Yongping**
  **Shenzhen, Guangdong 518129 (CN)**

(74) Representative: **Thun, Clemens**
**Mitscherlich PartmbB**
**Patent- und Rechtsanwälte**
**Karlstraße 7**
**80333 München (DE)**

(54) **COMMUNICATION METHOD AND APPARATUS**

(57)   Embodiments of the present invention disclose a communication method and apparatus. The method includes: receiving first configuration information from a radio access network device (401), where the first configuration information includes a plurality of channel measurement resources, and the plurality of channel measurement resources correspond to two groups of channel measurement resources; performing channel measurement based on the plurality of channel measurement resources to obtain a first measurement result (402); and sending the first measurement result to the radio access network device (403), where the first measurement result includes a joint channel measurement result, the joint channel measurement result is a channel measurement result of a first resource pair, the first resource pair includes one or more resource pairs including two channel measurement resources, the two channel measurement resources respectively belong to the two groups of channel measurement resources, and the joint channel measurement result includes information about the first resource pair. In embodiments of the present invention, a case in which the plurality of channel measurement resources simultaneously use different channels is considered in a channel measurement process, so that accuracy of channel measurement can be improved.

FIG. 4

Processed by Luminess, 75001 PARIS (FR)

## Description

This application claims priority to Chinese Patent Application No. 202110363822.6, filed with the China National Intellectual Property Administration on April 2, 2021 and entitled "COMMUNICATION METHOD AND APPARATUS", which is incorporated herein by reference in its entirety.

## TECHNICAL FIELD

Embodiments of the present invention relate to the field of communication technologies, and in particular, to a communication method and apparatus.

## BACKGROUND

In wireless communication, before a transmit end sends data to a receive end, the receive end first needs to perform channel measurement, and send a channel measurement result to the transmit end, so that the transmit end can select a proper channel measurement resource based on the channel measurement result to send the data to the receive end. When only one channel is used at one time, the receive end may obtain an accurate measurement result through channel measurement. However, when a plurality of channels are used at one time, due to interference between the plurality of channels, a measurement result cannot be accurately obtained by using an existing channel measurement method.

## SUMMARY

Embodiments of the present invention disclose a communication method and apparatus, to improve accuracy of channel measurement.

According to a first aspect, a communication method is disclosed. The communication method may be applied to a terminal device, or may be applied to a module (for example, a chip) in the terminal device. An example in which the communication method is applied to the terminal device is used below for description. The communication method may include: receiving first configuration information from a radio access network device, where the first configuration information includes a plurality of channel measurement resources, and the plurality of channel measurement resources correspond to two groups of channel measurement resources; performing channel measurement based on the plurality of channel measurement resources to obtain a first measurement result; and sending the first measurement result to the radio access network device, where the first measurement result includes a joint channel measurement result, the joint channel measurement result is a channel measurement result of a first resource pair, the first resource pair includes one or more resource pairs including two channel measurement resources, the two channel measurement resources respectively belong to the two groups of channel measurement resources, and the joint channel measurement result includes information about the first resource pair.

In this embodiment of the present invention, the terminal device performs channel measurement on the resource pair including the two channel measurement resources, may obtain, through measurement, a measurement result that the two channel measurement resources included in the resource pair simultaneously use different channels to transmit data, and sends the measurement result to the radio access network device, so that the radio access network device can select, based on the measurement result reported by the terminal device, a most appropriate channel measurement resource to transmit data. Because a case in which the plurality of channel measurement resources simultaneously use different channels is considered in a channel measurement process, a problem that the measurement result is inaccurate due to mutual interference in the different channels when the plurality of channel measurement resources simultaneously use the different channels can be avoided, to improve accuracy of channel measurement. One channel measurement resource corresponds to one channel.

In a possible implementation, the first configuration information includes first indication information, the first indication information indicates a quantity $N_1$ of channel measurement resources included in a first group of channel measurement resources in the two groups of channel measurement resources, and $N_1$ is an integer greater than or equal to 1.

In this embodiment of the present invention, the terminal device may determine, based on the plurality of channel measurement resources included in the configuration information and the indication information indicating the quantity of channel measurement resources included in the first group of channel measurement resources in the two groups of channel measurement resources, which channel measurement resources in the plurality of channel measurement resources are included in the first group of channel measurement resources, to determine which channel measurement resources in the plurality of channel measurement resources are included in the second group of channel measurement resources.

In a possible implementation, a channel measurement resource included in a first group of channel measurement resources in the two groups of channel measurement resources is first $N_1$ channel measurement resources or last $N_1$ channel measurement resources in the plurality of channel measurement resources, and a channel measurement resource included in a second group of channel measurement resources in the two groups of channel measurement resources is a channel measurement resource other than the $N_1$ channel measurement resources in the plurality of channel measurement resources.

In this embodiment of the present invention, the terminal device may accurately determine, based on the plurality of channel measurement resources included in the configuration information and the indication information indicating the quantity of channel measurement resources included in the first group of channel measurement resources in the two groups of channel measurement resources, which channel measurement resources in the plurality of channel measurement resources are included in the first group of channel measurement resources, and which channel measurement resources in the plurality of channel measurement resources are included in the second group of channel measurement resources.

In a possible implementation, the first configuration information further includes second indication information, the second indication information indicates a first resource, and the first resource is one or more channel measurement resources used for single channel measurement in the plurality of channel measurement resources.

In this embodiment of the present invention, the terminal device may determine, based on the indication information indicating the channel measurement resource used for single channel measurement, a channel measurement resource on which single channel measurement needs to be performed in the plurality of channel measurement resources, to avoid performing single channel measurement on all of the plurality of channel measurement resources, and reduce a quantity of channel measurement resources on which single channel measurement needs to be performed, thereby reducing power consumption of the terminal device.

In a possible implementation, the second indication information indicates a quantity M of channel measurement resources used for single channel measurement in channel measurement resources included in each of the two groups of channel measurement resources, where M is an integer greater than or equal to 1.

In this embodiment of the present invention, the radio access network device may indicate, by using a value, all channel measurement resources on which single channel measurement needs to be performed in the two groups of channel measurement resources, to reduce an amount of information that needs to be transmitted, thereby saving transmission resources. In addition, because the terminal device may determine, based on a value, all channel measurement resources on which single channel measurement needs to be performed in the two groups of channel measurement resources, a processing process of the terminal device can be reduced, to reduce power consumption of the terminal device.

In a possible implementation, a channel measurement resource used for single channel measurement in each group of channel measurement resources is first M channel measurement resources or last M channel measurement resources in each group of channel measurement resources.

In this embodiment of the present invention, the terminal device may directly determine the first M channel measurement resources or the last M channel measurement resources in each group of channel measurement resources as channel measurement resources on which single channel measurement needs to be performed, and may quickly determine the channel measurement resource on which single channel measurement needs to be performed, so that a rate at which the terminal device performs channel measurement can be increased.

In a possible implementation, the second indication information is a first bitmap.

In this embodiment of the present invention, the terminal device may determine, based on the first bitmap, whether single channel measurement needs to be performed on each of the plurality of channel measurement resources, to accurately determine a channel measurement resource on which single channel measurement needs to be performed in the plurality of channel measurement resources.

In a possible implementation, the first configuration information further includes third indication information, the third indication information indicates a second resource pair, the second resource pair is a resource pair used for joint channel measurement, and the second resource pair includes the first resource pair.

In this embodiment of the present invention, the terminal device may determine, based on the indication information indicating the resource pair used for joint channel measurement, resource pairs on which joint channel measurement needs to be performed, to avoid performing joint channel measurement on all resource pairs including the plurality of channel measurement resources, and reduce a quantity of resource pairs on which joint channel measurement needs to be performed, thereby reducing power consumption of the terminal device. In addition, the terminal device may determine, based on the indication information indicating the resource pair used for joint channel measurement, the resource pairs on which joint channel measurement needs to be performed, to perform joint channel measurement by using these resource pairs, so that the radio access network device can determine, based on a joint channel measurement result, a channel measurement resource or a resource pair that is most suitable for sending data to the terminal device.

In a possible implementation, the third indication information is a second bitmap.

In this embodiment of the present invention, the terminal device may determine, based on the second bitmap, whether joint channel measurement needs to be performed on each of resource pairs, to accurately determine a resource pair on which joint channel measurement needs to be performed.

In a possible implementation, the first bitmap and the second bitmap are two parts of a third bitmap.

In this embodiment of the present invention, the radio access network device may indicate, by using a bitmap, a channel measurement resource and a resource pair that need to be measured, to reduce an amount of indication information that needs to be transmitted, and reduce an amount of data that needs to be transmitted, thereby saving transmission resources. In addition, because the terminal device may determine, based on a bitmap, a channel measurement resource and a resource pair that need to be measured, a processing process of the terminal device can be reduced, to reduce power consumption of the terminal device.

In a possible implementation, an $((i-1)*N_2+j)^{th}$ bit or an $((j-1)*N_1+i)^{th}$ bit in the second bitmap corresponds to a resource pair including an $i^{th}$ channel measurement resource in the first group of channel measurement resources and a $j^{th}$ channel measurement resource in the second group of channel measurement resources, where $N_1$ is a quantity of channel measurement resources included in the first group of channel measurement resources, and $N_2$ is a quantity of channel measurement resources included in the second group of channel measurement resources.

In this embodiment of the present invention, the terminal device may quickly determine, based on a bit in the second bitmap, a resource pair that needs to be measured.

In a possible implementation, when a frequency band used by the radio access network device falls within a frequency range (frequency range, FR) 2, different resource pairs in the second resource pair include different channel measurement resources.

In this embodiment of the present invention, when the frequency band used by the radio access network device falls within the frequency range 2, different resource pairs in resource pairs that need to be measured include different channel measurement resources, to avoid a problem that channel measurement cannot be performed on a resource pair due to a beam problem.

In a possible implementation, the first configuration information further includes fourth indication information, the fourth indication information indicates a reporting mode, and the reporting mode includes at least a first mode and a second mode. The first mode is to report one group of joint channel measurement results and one group of measurement results in at least one group of single channel measurement results. The second mode is to report Y groups of joint channel measurement results and X groups of single channel measurement results, where a value of Y is 1 or is configured by the radio access network device, and a value of X is configured by the radio access network device.

In this embodiment of the present invention, the terminal device can determine a reporting mode based on indication information indicating the reporting mode, and can further determine, based on the reporting mode, a measurement result that needs to be reported, to prevent the terminal device from reporting all measurement results, and reduce a quantity of measurement results that need to be reported, thereby saving transmission resources.

In a possible implementation, the fourth indication information includes two options. When the fourth indication information is a first option, the fourth indication information indicates the first mode. When the fourth indication information is a second option, the fourth indication information indicates the second mode.

In this embodiment of the present invention, the terminal device may quickly determine a reporting mode based on the configuration information, and may further quickly determine a measurement result that needs to be reported, to increase a reporting rate.

In a possible implementation, the reporting mode further includes a third mode, and only a single channel measurement result is reported in the third mode. The fourth indication information includes three options. When the fourth indication information is a first option, the fourth indication information indicates the first mode. When the fourth indication information is a second option, the fourth indication information indicates the second mode. When the fourth indication information is a third option, the fourth indication information indicates the third mode.

In this embodiment of the present invention, the terminal device may quickly determine a reporting mode based on the configuration information, and may further quickly determine a measurement result that needs to be reported, to increase a reporting rate.

In a possible implementation, when a measurement manner is single channel measurement, the first configuration information does not include one or more of the following information: the second indication information, the third indication information, and the fourth indication information.

In this embodiment of the present invention, the measurement manner may be single channel measurement or joint channel measurement. When the measurement manner is single channel measurement, the terminal device needs to perform only single channel measurement, that is, measure only a single channel measurement resource. When the measurement manner is joint channel measurement, the terminal device not only needs to perform joint channel measurement, but also may need to perform single channel measurement. When the measurement manner is joint channel measurement, the configuration information may include the second indication information, the third indication information, and the fourth indication information. When the measurement manner is single channel measurement, the configuration information may not include one or more of the second indication information, the third indication information, and the fourth indication information.

In a possible implementation, when a third resource pair is measured, a reference signal on each of two channel measurement resources in the third resource pair is simultaneously received through receive beams of the two channel measurement resources, where the third resource pair is any resource pair in the second resource pair.

In this embodiment of the present invention, when channel measurement is performed on a resource pair, a reference signal on each of the two channel measurement resources is simultaneously received through receive beams of the two channel measurement resources in the resource pair, so that interference caused by one channel to the other channel can be measured.

In a possible implementation, a quantity of channel state information (channel state information, CSI) processing units (CSI processing unit, CPU) occupied by the measurement is 2*P, Q+2*P, or Q+k*P, where Q is a quantity of channel measurement resources included in the first resource, P is a quantity of resource pairs included in the second resource pair, and k is a value reported by a terminal device or configured by the radio access network device.

In this embodiment of the present invention, when the measurement manner is joint channel measurement, the terminal device may first determine the quantity of CPUs according to the foregoing method, and then may determine whether a quantity of currently idle CPUs is greater than or equal to the determined quantity of CPUs. The terminal device performs channel measurement based on the plurality of channel measurement resources only when determining whether the quantity of currently idle CPUs is greater than or equal to the determined quantity of CPUs, to avoid a case in which the measurement is forcibly stopped after a period of time due to an insufficient quantity of idle CPUs, and reduce unnecessary operations of the terminal device, so that power consumption of the terminal device can be reduced.

In a possible implementation, the first measurement result further includes information about a second resource, and the second resource is a to-be-reported channel measurement resource in the first resource. The information about the second resource is any one of the following: a local index of the second resource in a group of channel measurement resources corresponding to the second resource; a local index of the second resource in a channel measurement resource that belongs to the first resource in the group of channel measurement resources corresponding to the second resource; and an index of a bit corresponding to the second resource in a first bitmap.

In this embodiment of the present invention, the information about the second resource may be the local index of the second resource in the group of channel measurement resources corresponding to the second resource rather than an index of the second resource in the plurality of channel measurement resources, to reduce a quantity of bits required for reporting the information about the second resource, and reduce an amount of data that needs to be transmitted, thereby saving transmission resources. Alternatively, the information about the second resource may be the local index of the second resource in the channel measurement resource that belongs to the first resource in the group of channel measurement resources corresponding to the second resource, neither the local index of the second resource in the group of channel measurement resources corresponding to the second resource nor an index of the second resource in the plurality of channel measurement resources, to further reduce a quantity of bits required for reporting the information about the second resource, and reduce an amount of data that needs to be transmitted, thereby saving transmission resources. Alternatively, the information about the second resource may be the index of the bit corresponding to the second resource in the first bitmap, so that the radio access network device can quickly determine the reported channel measurement resource based on the index of the bit.

In a possible implementation, the information about the first resource pair is an index of a bit corresponding to the first resource pair in the second bitmap.

In this embodiment of the present invention, the information about the first resource pair is the index of the bit corresponding to the first resource pair in the second bitmap, so that the radio access network device can quickly determine the reported resource pair based on the index of the bit.

In a possible implementation, the first measurement result includes at least one group of joint channel measurement results and/or at least one group of single channel measurement results, a first reporting priority exists between the at least one group of joint channel measurement results and/or the at least one group of single channel measurement results, the at least one group of joint channel measurement results is in a one-to-one correspondence with a resource pair included in the first resource pair, and each of the at least one group of single channel measurement results corresponds to one of the two groups of channel measurement resources.

In this embodiment of the present invention, a reporting priority exists between the at least one group of joint channel measurement results and/or the at least one group of single channel measurement results. When there is a large quantity of measurement results or there is a small quantity of transmission resources used to report the measurement result, reporting may be performed based on the reporting priority between the at least one group of joint channel measurement results and/or the at least one group of single channel measurement results, to ensure reporting of a measurement result with a higher reporting priority, that is, reporting of an important measurement result, and reduce impact that all measurement results cannot be reported.

In a possible implementation, the first reporting priority includes: a reporting priority of the at least one group of joint channel measurement results is lower than a reporting priority of the at least one group of single channel measurement results.

In a possible implementation, the first reporting priority includes: a reporting priority of the at least one group of joint channel measurement results and/or a reporting priority of the at least one group of single channel measurement results are/is determined based on a channel quality indicator (channel quality indicator, CQI) corresponding to each group of measurement results.

In this embodiment of the present invention, the reporting priority of the at least one group of joint channel measurement results and/or the reporting priority of the at least one group of single channel measurement results are/is determined based on the CQI corresponding to each group of measurement results, and a measurement result that needs to be preferentially reported may be determined based on the CQI, to reduce impact that all measurement results cannot be reported.

In a possible implementation, that a reporting priority of the at least one group of joint channel measurement results and/or a reporting priority of the at least one group of single channel measurement results are/is determined based on a CQI corresponding to each group of measurement results includes: when CQIs corresponding to two groups of measurement results are different, a measurement result with a larger CQI has a higher reporting priority; or when CQIs corresponding to two groups of measurement results are the same, reporting priorities of the two groups of measurement results are determined based on a configuration sequence of two groups of channel measurement resources corresponding to the two groups of measurement results.

In this embodiment of the present invention, when the CQIs corresponding to the two groups of measurement results are different, the measurement result with the larger CQI has the higher reporting priority, to ensure that the measurement result with the larger CQI is preferentially reported, that is, a measurement result with good channel quality is preferentially reported, and reduce impact that all measurement results cannot be reported.

In a possible implementation, the communication method may further include: receiving second configuration information from the radio access network device, where the first configuration information is different from the second configuration information; and performing channel measurement based on the second configuration information to obtain a second measurement result, where a second reporting priority exists between the first measurement result and the second measurement result; and the terminal device first determines a reporting priority between the first measurement result and the second measurement result based on the second reporting priority, and then separately determines, based on the first reporting priority, a reporting priority between at least two groups of measurement results included in the first measurement result and the second measurement result.

In this embodiment of the present invention, when there are a plurality of pieces of configuration information, reporting priorities of measurement results corresponding to different configuration information may be determined based on reporting priorities corresponding to the different configuration information, and reporting priorities between different groups of measurement results may be determined according to the foregoing method for measurement results corresponding to same configuration information, so that reporting priorities between different configurations can be compatible with internal reporting priorities of a same configuration.

In a possible implementation, when a frequency domain granularity of channel measurement is a subband, a third reporting priority exists between a measurement result corresponding to an even-numbered subband and a measurement result corresponding to an odd-numbered subband in a same group of measurement results in the first measurement result; and the terminal device first determines, based on the first reporting priority, a reporting priority between at least one group of measurement results included in the first measurement result, and then determines, based on the third reporting priority, a reporting priority between a measurement result corresponding to an even-numbered subband and a measurement result corresponding to an odd-numbered subband that are included in each of the at least one group of measurement results.

In this embodiment of the present invention, a reporting priority between different groups of measurement results corresponding to same configuration information, and reporting priorities of measurement results corresponding to an even-numbered subband and an odd-numbered subband in a measurement result may be determined according to the foregoing method, so that reporting priorities between different groups corresponding to a same configuration can be compatible with reporting priorities between different subbands of a same measurement result.

In a possible implementation, the first configuration information further includes at least one interference measurement resource; a quantity of interference measurement resources in the at least one interference measurement resource is equal to a sum of Q and P; and a type of the interference measurement resource is a non-zero power (non-zero power, NZP) channel state information-reference signal (channel state information-reference signal, CSI-RS) resource, a channel state information-interference measurement (channel state information-interference measurement, CSI-IM) resource, or another type of interference measurement resource.

In this embodiment of the present invention, the terminal device may measure, based on the interference measurement resource included in the first configuration information, interference corresponding to each channel measurement resource or resource pair, to determine a CQI corresponding to each channel measurement resource or resource pair.

In a possible implementation, first Q interference measurement resources in the at least one interference measurement resource are in a one-to-one correspondence with Q channel measurement resources included in the first resource, and remaining P interference measurement resources in the at least one interference measurement resource are in a one-to-one correspondence with P resource pairs included in the second resource pair.

In this embodiment of the present invention, an interference measurement resource is in a one-to-one correspondence with a to-be-measured channel measurement resource, so that the terminal device can determine a corresponding CQI for each to-be-measured channel measurement resource. An interference measurement resource is in a one-to-one correspondence with a to-be-measured resource pair, so that the terminal device can determine a corresponding CQI for each to-be-measured resource pair.

In a possible implementation, when a third resource pair is measured, measurement is performed by using spatial reception parameters or quasi-co-location (quasi-co-location, QCL) assumptions of two channel measurement resources in the third resource pair, where the third resource pair is any resource pair in the second resource pair.

In this embodiment of the present invention, when channel measurement is performed on a resource pair, a reference signal on each of the two channel measurement resources is simultaneously received by using the spatial reception parameters or quasi-co-location assumptions of the two channel measurement resources in the resource pair, so that interference caused by one channel to the other channel can be measured.

In a possible implementation, the first configuration information includes a second index, the second index includes the second indication information and the third indication information, and the second index includes P+Q index values.

In this embodiment of the present invention, the radio access network device may indicate, by using an index, a channel measurement resource and a resource pair that need to be measured, to reduce an amount of indication information that needs to be transmitted, and reduce an amount of data that needs to be transmitted, thereby saving transmission resources. In addition, because the terminal device may determine, based on an index, a channel measurement resource and a resource pair that need to be measured, a processing process of the terminal device can be reduced, to reduce power consumption of the terminal device.

In a possible implementation, when the reporting mode is the first mode, the information about the second resource and the information about the first resource pair are represented by using a same parameter or index. When the reporting mode is the second mode, the information about the second resource and the information about the first resource pair are represented by using different parameters or indexes.

In this embodiment of the present invention, the terminal device may indicate, by using an index or a parameter, information about a channel measurement resource and a resource pair that need to be reported, to reduce an amount of information that needs to be transmitted, and reduce an amount of data that needs to be transmitted, thereby saving transmission resources. In addition, because the radio access network device may determine, based on an index or a parameter, a channel measurement resource and a resource pair that need to be reported, a processing process of the radio access network device can be reduced, to reduce power consumption of the radio access network device.

In a possible implementation, the first measurement result further includes a first field, and the first field indicates a rank indicator (rank indicator, RI) of a channel. When the first field indicates one RI, a measurement result included in the first measurement result is a single channel measurement result. When the first field indicates an RI combination including two RIs, a measurement result included in the first measurement result is a joint channel measurement result.

In a possible implementation, when a first interference measurement resource is measured, measurement is performed by using receive beams, spatial reception parameters, or QCL assumptions of two channel measurement resources in the third resource pair, where the first interference measurement resource is an interference measurement resource corresponding to the third resource pair in the at least one interference measurement resource.

In a possible implementation, the first configuration information further includes at least one interference measurement resource; a quantity of interference measurement resources in the at least one interference measurement resource is equal to Q+2*P; and a type of the interference measurement resource is an NZP CSI-RS resource, a CSI-IM resource, or another type of interference measurement resource.

In a possible implementation, Q interference measurement resources in the at least one interference measurement resource are in a one-to-one correspondence with Q channel measurement resources included in the first resource, and remaining 2*P interference measurement resources in the at least one interference measurement resource are in a one-to-one correspondence with 2*P channel measurement resources included in the second resource pair.

In a possible implementation, when a first interference measurement resource is measured, measurement is performed by using receive beams, spatial reception parameters, or QCL assumptions of two channel measurement resources in the third resource pair, where the first interference measurement resource is an interference measurement resource corresponding to the third resource pair in the at least one interference measurement resource.

According to a second aspect, a communication method is disclosed. The communication method may be applied to a radio access network device or a module (for example, a chip) in the radio access network device. An example in which the communication method is applied to the radio access network device is used below for description. The communication method may include: sending first configuration information to a terminal device, where the first configuration information includes a plurality of channel measurement resources, and the plurality of channel measurement resources correspond to two groups of channel measurement resources; and receiving a first measurement result from the terminal device, where the first measurement result includes a joint channel measurement result, the joint channel measurement result is a channel measurement result of a first resource pair, the first resource pair includes one or more resource pairs including two channel measurement resources, the two channel measurement resources respectively belong to the two groups of channel measurement resources, and the joint channel measurement result includes information about the first resource pair.

In this embodiment of the present invention, the radio access network device configures a plurality of channel measurement resources corresponding to the two groups of channel measurement resources, so that the terminal device can perform channel measurement on a resource pair including the two channel measurement resources, obtain a measurement result that the two channel measurement resources included in the resource pair simultaneously use different channels to transmit data, and send the measurement result to the radio access network device. Then, the radio access network device can select, based on the measurement result reported by the terminal device, a most appropriate channel measurement resource to transmit data to the terminal device. Because the terminal device considers, in a channel measurement process, a case in which the plurality of channel measurement resources simultaneously use different channels, a problem that the measurement result is inaccurate due to mutual interference in the different channels when the plurality of channel measurement resources simultaneously use the different channels can be avoided, to improve accuracy of channel measurement. One channel measurement resource corresponds to one channel.

In a possible implementation, the first configuration information includes first indication information, the first indication information indicates a quantity $N_1$ of channel measurement resources included in a first group of channel measurement resources in the two groups of channel measurement resources, and $N_1$ is an integer greater than or equal to 1.

In this embodiment of the present invention, the radio access network device configures, for the terminal device, the plurality of channel measurement resources and the indication information indicating the quantity of channel measurement resources included in the first group of channel measurement resources in the two groups of channel measurement resources, so that the terminal device can determine, based on the plurality of channel measurement resources and the indication information, which channel measurement resources in the plurality of channel measurement resources are included in the first group of channel measurement resources, to determine which channel measurement resources in the plurality of channel measurement resources are included in the second group of channel measurement resources.

In a possible implementation, a channel measurement resource included in a first group of channel measurement resources in the two groups of channel measurement resources is first $N_1$ channel measurement resources or last $N_1$ channel measurement resources in the plurality of channel measurement resources, and a channel measurement resource included in a second group of channel measurement resources in the two groups of channel measurement resources is a channel measurement resource other than the $N_1$ channel measurement resources in the plurality of channel measurement resources.

In this embodiment of the present invention, the radio access network device configures, for the terminal device, the plurality of channel measurement resources and the indication information indicating the quantity of channel measurement resources included in the first group of channel measurement resources in the two groups of channel measurement resources, so that the terminal device can accurately determine, based on the plurality of channel measurement resources and the indication information, which channel measurement resources in the plurality of channel measurement resources are included in the first group of channel measurement resources, and which channel measurement resources in the plurality of channel measurement resources are included in the second group of channel measurement resources.

In a possible implementation, the first configuration information further includes second indication information, the second indication information indicates a first resource, and the first resource is one or more channel measurement resources used for single channel measurement in the plurality of channel measurement resources.

In this embodiment of the present invention, the radio access network device configures, for the terminal device, the indication information indicating the channel measurement resource used for single channel measurement, so that the terminal device can determine, based on the indication information, a channel measurement resource on which single channel measurement needs to be performed in the plurality of channel measurement resources, to avoid performing single channel measurement on all of the plurality of channel measurement resources, and reduce a quantity of channel measurement resources on which single channel measurement needs to be performed, thereby reducing power consumption of the terminal device.

In a possible implementation, the second indication information indicates a quantity M of channel measurement resources used for single channel measurement in channel measurement resources included in each of the two groups of channel measurement resources, where M is an integer greater than or equal to 1.

In this embodiment of the present invention, the radio access network device may indicate, by using a value, all channel measurement resources on which single channel measurement needs to be performed in the two groups of channel measurement resources, to reduce an amount of information that needs to be transmitted, thereby saving transmission resources. In addition, because the terminal device may determine, based on a value configured by the radio access network device, all channel measurement resources on which single channel measurement needs to be performed in the two groups of channel measurement resources, a processing process of the terminal device can be reduced, to reduce power consumption of the terminal device.

In a possible implementation, a channel measurement resource used for single channel measurement in each group of channel measurement resources is first M channel measurement resources or last M channel measurement resources in each group of channel measurement resources.

In this embodiment of the present invention, the terminal device may directly determine, based on the value configured by the radio access network device, the first M channel measurement resources or the last M channel measurement resources in each group of channel measurement resources as channel measurement resources on which single channel measurement needs to be performed, and may quickly determine the channel measurement resource on which single channel measurement needs to be performed, so that a rate at which the terminal device performs channel measurement can be increased.

In a possible implementation, the second indication information is a first bitmap.

In this embodiment of the present invention, the radio access network device may indicate, by using a bitmap, a channel measurement resource on which single channel measurement needs to be performed by the terminal device, so that the terminal device can determine, based on the bitmap, whether single channel measurement needs to be performed on each of the plurality of channel measurement resources, to accurately determine a channel measurement resource on which single channel measurement needs to be performed in the plurality of channel measurement resources.

In a possible implementation, the first configuration information further includes third indication information, the third indication information indicates a second resource pair, the second resource pair is a resource pair used for joint channel measurement, and the second resource pair includes the first resource pair.

In this embodiment of the present invention, the radio access network device configures, for the terminal device, the indication information indicating the resource pair used for joint channel measurement, so that the terminal device can determine, based on the indication information indicating the resource pair used for joint channel measurement, resource pairs on which joint channel measurement needs to be performed, to avoid performing joint channel measurement on all resource pairs including the plurality of channel measurement resources, and reduce a quantity of resource pairs on which joint channel measurement needs to be performed, thereby reducing power consumption of the terminal device. In addition, the radio access network device configures, for the terminal device, the indication information indicating the resource pair used for joint channel measurement, so that the terminal device can determine, based on the indication information, the resource pairs on which joint channel measurement needs to be performed, to perform joint channel measurement by using these resource pairs, so that the radio access network device can determine, based on a joint channel measurement result, that is, a joint channel measurement result, a channel measurement resource or a resource pair that is most suitable for sending data to the terminal device.

In a possible implementation, the third indication information is a second bitmap.

In this embodiment of the present invention, the radio access network device may indicate, by using a bitmap, a resource pair on which joint channel measurement needs to be performed by the terminal device, so that the terminal device can determine, based on the bitmap, whether joint channel measurement needs to be performed on each of the resource pairs, to accurately determine a resource pair on which joint channel measurement needs to be performed.

In a possible implementation, the first bitmap and the second bitmap are two parts of a third bitmap.

In this embodiment of the present invention, the radio access network device may indicate, by using a bitmap, a channel measurement resource and a resource pair that need to be measured by the terminal device, to reduce an amount of indication information that needs to be transmitted, and reduce an amount of data that needs to be transmitted, thereby saving transmission resources. In addition, because the terminal device may determine, based on a bitmap configured by the radio access network device, a channel measurement resource and a resource pair that need to be measured, a processing process of the terminal device can be reduced, to reduce power consumption of the terminal device.

In a possible implementation, an $((i-1)*N_2+j)^{th}$ bit or an $((j-1)*N_1+i)^{th}$ bit in the second bitmap corresponds to a resource pair including an $i^{th}$ channel measurement resource in the first group of channel measurement resources and a $j^{th}$ channel measurement resource in the second group of channel measurement resources, where $N_1$ is a quantity of channel measurement resources included in the first group of channel measurement resources, and $N_2$ is a quantity of channel measurement resources included in the second group of channel measurement resources.

In this embodiment of the present invention, each bit in the second bitmap indicates a resource pair including a channel measurement resource in the first group of channel measurement resources and a channel measurement resource in the second group of channel measurement resources, so that the terminal device can quickly determine, based on the bit in the second bitmap, a resource pair that needs to be measured.

In a possible implementation, when a frequency band used by the radio access network device falls within an FR 2, different resource pairs in the second resource pair include different channel measurement resources.

In this embodiment of the present invention, when the frequency band used by the radio access network device falls within the frequency range 2, different resource pairs in resource pairs that need to be measured include different channel measurement resources, to avoid a problem that channel measurement cannot be performed on a resource pair due to a beam problem.

In a possible implementation, the first configuration information further includes fourth indication information, the fourth indication information indicates a reporting mode, and the reporting mode includes at least a first mode and a second mode. The first mode is to report one group of joint channel measurement results and one group of measurement results in at least one group of single channel measurement results. The second mode is to report Y groups of joint channel measurement results and X groups of single channel measurement results, where a value of Y is 1 or is configured by the radio access network device, and a value of X is configured by the radio access network device.

In this embodiment of the present invention, the radio access network device may configure, for the terminal device, indication information indicating a reporting mode, so that the terminal device can determine the reporting mode based on the indication information, and can further determine, based on the reporting mode, a measurement result that needs to be reported, to prevent the terminal device from reporting all measurement results, and reduce a quantity of measurement results that need to be reported, thereby saving transmission resources.

In a possible implementation, the fourth indication information includes two options. When the fourth indication information is a first option, the fourth indication information indicates the first mode. When the fourth indication information is a second option, the fourth indication information indicates the second mode.

In this embodiment of the present invention, the radio access network device configures a reporting mode for the terminal device, so that the terminal device can quickly determine the reporting mode based on the configuration information, and can further quickly determine a measurement result that needs to be reported, to increase a reporting rate.

In a possible implementation, the reporting mode further includes a third mode, and only a single channel measurement result is reported in the third mode. The fourth indication information includes three options. When the fourth indication information is a first option, the fourth indication information indicates the first mode. When the fourth indication information is a second option, the fourth indication information indicates the second mode. When the fourth indication information is a third option, the fourth indication information indicates the third mode.

In this embodiment of the present invention, the radio access network device configures a reporting mode for the terminal device, so that the terminal device can quickly determine the reporting mode based on the configuration information, and can further quickly determine a measurement result that needs to be reported, to increase a reporting rate.

In a possible implementation, when a measurement manner is single channel measurement, the first configuration information does not include one or more of the following information: the second indication information, the third indication information, and the fourth indication information.

In this embodiment of the present invention, the measurement manner may be single channel measurement or joint channel measurement. When the measurement manner is single channel measurement, the radio access network device may configure only the terminal device to perform single channel measurement, that is, the terminal device measures only a single channel measurement resource. When the measurement manner is joint channel measurement, the radio access network device may configure the terminal device not only to perform joint channel measurement, but also to perform single channel measurement, that is, to measure a resource pair. When the measurement manner is joint channel measurement, the configuration information may include the second indication information, the third indication information, and the fourth indication information. When the measurement manner is single channel measurement, the configuration information may not include one or more of the second indication information, the third indication information, and the fourth indication information.

In a possible implementation, the first measurement result further includes information about a second resource, and the second resource is a to-be-reported channel measurement resource in the first resource. The information about the second resource is any one of the following: a local index of the second resource in a group of channel measurement resources corresponding to the second resource; a local index of the second resource in a channel measurement resource that belongs to the first resource in the group of channel measurement resources corresponding to the second resource; and an index of a bit corresponding to the second resource in a first bitmap.

In this embodiment of the present invention, the information about the second resource may be the local index of the second resource in the group of channel measurement resources corresponding to the second resource rather than an index of the second resource in the plurality of channel measurement resources, to reduce a quantity of bits required for reporting the information about the second resource by the terminal device, and reduce an amount of data that needs to be transmitted, thereby saving transmission resources. Alternatively, the information about the second resource may be the local index of the second resource in the channel measurement resource that belongs to the first resource in the group of channel measurement resources corresponding to the second resource, neither the local index of the second resource in the group of channel measurement resources corresponding to the second resource nor an index of the second resource in the plurality of channel measurement resources, to further reduce a quantity of bits required for reporting the information about the second resource by the terminal device, and reduce an amount of data that needs to be transmitted, thereby saving transmission resources. Alternatively, the information about the second resource may be the index of the bit corresponding to the second resource in the first bitmap, so that the radio access network device can quickly determine the reported channel measurement resource based on the index of the bit.

In a possible implementation, the information about the first resource pair is an index of a bit corresponding to the first resource pair in the second bitmap.

In this embodiment of the present invention, the information about the first resource pair is the index of the bit corresponding to the first resource pair in the second bitmap, so that the radio access network device can quickly determine the reported resource pair based on the index of the bit.

In a possible implementation, the first configuration information further includes at least one interference measurement resource; a quantity of interference measurement resources in the at least one interference measurement resource is equal to a sum of Q and P; and a type of the interference measurement resource is an NZP CSI-RS resource, a CSI-IM resource, or another type of interference measurement resource.

In this embodiment of the present invention, the radio access network device configures, for the terminal device, a quantity of interference measurement resources that is equal to a sum of a quantity of channel measurement resources that need to be measured and a quantity of resource pairs that need to be measured, so that the terminal device can determine, based on the interference measurement resource included in the configuration information, CQIs corresponding to the channel measurement resource and the resource pair that need to be measured.

In a possible implementation, first Q interference measurement resources in the at least one interference measurement resource are in a one-to-one correspondence with Q channel measurement resources included in the first resource, and remaining P interference measurement resources in the at least one interference measurement resource are in a one-to-one correspondence with P resource pairs included in the second resource pair.

In this embodiment of the present invention, an interference measurement resource configured by the radio access network device for the terminal device is in a one-to-one correspondence with a channel measurement resource that needs to be measured, so that the terminal device can determine a corresponding CQI for each channel measurement resource that needs to be measured. An interference measurement resource configured by the radio access network device for the terminal device is in a one-to-one correspondence with a resource pair that needs to be measured, so that the terminal device can determine a corresponding CQI for each resource pair that needs to be measured.

In a possible implementation, the first configuration information includes a second index, the second index includes the second indication information and the third indication information, and the second index includes P+Q index values, where Q is a quantity of channel measurement resources included in the first resource, and P is a quantity of resource pairs included in the second resource pair.

In this embodiment of the present invention, the radio access network device may indicate, by using an index, a channel measurement resource and a resource pair that need to be measured, to reduce an amount of indication information that needs to be transmitted, and reduce an amount of data that needs to be transmitted, thereby saving transmission resources. In addition, because the terminal device may determine, based on an index, a channel measurement resource and a resource pair that need to be measured, a processing process of the terminal device can be reduced, to reduce power consumption of the terminal device.

In a possible implementation, when the reporting mode is the first mode, the information about the second resource and the information about the first resource pair are represented by using a same parameter or index. When the reporting mode is the second mode, the information about the second resource and the information about the first resource pair are represented by using different parameters or indexes.

In this embodiment of the present invention, the terminal device may indicate, by using an index or a parameter, information about a channel measurement resource and a resource pair that need to be reported, to reduce an amount of information that needs to be transmitted, and reduce an amount of data that needs to be transmitted, thereby saving transmission resources. In addition, because the radio access network device may determine, based on an index or a parameter, a channel measurement resource and a resource pair that need to be reported, a processing process of the radio access network device can be reduced, to reduce power consumption of the radio access network device.

In a possible implementation, the first measurement result further includes a first field, and the first field indicates an RI. When the first field indicates one RI, a measurement result included in the first measurement result is a single channel measurement result. When the first field indicates an RI combination including two RIs, a measurement result included in the first measurement result is a joint channel measurement result.

In a possible implementation, the first configuration information further includes at least one interference measurement resource; a quantity of interference measurement resources in the at least one interference measurement resource is equal to Q+2*P; and a type of the interference measurement resource is an NZP CSI-RS resource, a CSI-IM resource, or another type of interference measurement resource.

In a possible implementation, Q interference measurement resources in the at least one interference measurement resource are in a one-to-one correspondence with Q channel measurement resources included in the first resource, and remaining 2*P interference measurement resources in the at least one interference measurement resource are in a one-to-one correspondence with 2*P channel measurement resources included in the second resource pair.

According to a third aspect, a communication apparatus is disclosed. The communication apparatus may be a terminal device or a module (for example, a chip) in the terminal device. The communication apparatus may include: a receiving unit, configured to receive first configuration information from a radio access network device, where the first configuration information includes a plurality of channel measurement resources, and the plurality of channel measurement resources correspond to two groups of channel measurement resources; a measurement unit, configured to perform channel measurement based on the plurality of channel measurement resources to obtain a first measurement result; and a sending unit, configured to send the first measurement result to the radio access network device, where the first measurement result includes a joint channel measurement result, the joint channel measurement result is a channel measurement result of a first resource pair, the first resource pair includes one or more resource pairs including two channel measurement resources, the two channel measurement resources respectively belong to the two groups of channel measurement resources, and the joint channel measurement result includes information about the first resource pair.

In a possible implementation, the first configuration information includes first indication information, and the first indication information indicates a quantity $N_1$ of channel measurement resources included in a first group of channel measurement resources in the two groups of channel measurement resources, where $N_1$ is an integer greater than or equal to 1.

In a possible implementation, a channel measurement resource included in a first group of channel measurement resources in the two groups of channel measurement resources is first $N_1$ channel measurement resources or last $N_1$ channel measurement resources in the plurality of channel measurement resources, and a channel measurement resource included in a second group of channel measurement resources in the two groups of channel measurement resources is a channel measurement resource other than the $N_1$ channel measurement resources in the plurality of channel measurement resources.

In a possible implementation, the first configuration information further includes second indication information, the second indication information indicates a first resource, and the first resource is one or more channel measurement resources used for single channel measurement in the plurality of channel measurement resources.

In a possible implementation, the second indication information indicates a quantity M of channel measurement resources used for single channel measurement in channel measurement resources included in each of the two groups of channel measurement resources, where M is an integer greater than or equal to 1.

In a possible implementation, a channel measurement resource used for single channel measurement in each group of channel measurement resources is first M channel measurement resources or last M channel measurement resources in each group of channel measurement resources.

In a possible implementation, the second indication information is a first bitmap.

In a possible implementation, the first configuration information further includes third indication information, the third indication information indicates a second resource pair, the second resource pair is a resource pair used for joint channel measurement, and the second resource pair includes the first resource pair.

In a possible implementation, the third indication information is a second bitmap.

In a possible implementation, the first bitmap and the second bitmap are two parts of a third bitmap.

In a possible implementation, an $((i-1)*N_2+j)^{th}$ bit or an $((j-1)*N_1+i)^{th}$ bit in the second bitmap corresponds to a resource pair including an $i^{th}$ channel measurement resource in the first group of channel measurement resources and a $j^{th}$ channel measurement resource in the second group of channel measurement resources, where $N_1$ is a quantity of channel measurement resources included in the first group of channel measurement resources, and $N_2$ is a quantity of channel measurement resources included in the second group of channel measurement resources.

In a possible implementation, when a frequency band used by the radio access network device falls within an FR 2, different resource pairs in the second resource pair include different channel measurement resources.

In a possible implementation, the first configuration information further includes fourth indication information, the fourth indication information indicates a reporting mode, and the reporting mode includes at least a first mode and a second mode. The first mode is to report one group of joint channel measurement results and one group of measurement results in at least one group of single channel measurement results. The second mode is to report Y groups of joint channel measurement results and X groups of single channel measurement results, where a value of Y is 1 or is configured by the radio access network device, and a value of X is configured by the radio access network device.

In a possible implementation, the fourth indication information includes two options. When the fourth indication information is a first option, the fourth indication information indicates the first mode. When the fourth indication information is a second option, the fourth indication information indicates the second mode.

In a possible implementation, the reporting mode further includes a third mode, and only a single channel measurement result is reported in the third mode. The fourth indication information includes three options. When the fourth indication information is a first option, the fourth indication information indicates the first mode. When the fourth indication information is a second option, the fourth indication information indicates the second mode. When the fourth indication information is a third option, the fourth indication information indicates the third mode.

In a possible implementation, when a measurement manner is single channel measurement, the first configuration information does not include one or more of the following information: the second indication information, the third indication information, and the fourth indication information.

In a possible implementation, when a third resource pair is measured, a reference signal on each of two channel measurement resources in the third resource pair is simultaneously received through receive beams of the two channel measurement resources, where the third resource pair is any resource pair in the second resource pair.

In a possible implementation, a quantity of CPUs occupied by the measurement is 2*P, Q+2*P, or Q+k*P, where Q is a quantity of channel measurement resources included in the first resource, P is a quantity of resource pairs included in the second resource pair, and k is a value reported by a terminal device or configured by the radio access network device.

In a possible implementation, the first measurement result further includes information about a second resource, and the second resource is a to-be-reported channel measurement resource in the first resource. The information about the second resource is any one of the following: a local index of the second resource in a group of channel measurement resources corresponding to the second resource; a local index of the second resource in a channel measurement resource that belongs to the first resource in the group of channel measurement resources corresponding to the second resource; and an index of a bit corresponding to the second resource in a first bitmap.

In a possible implementation, the information about the first resource pair is an index of a bit corresponding to the first resource pair in the second bitmap.

In a possible implementation, the first measurement result includes at least one group of joint channel measurement results and/or at least one group of single channel measurement results, a first reporting priority exists between the at least one group of joint channel measurement results and/or the at least one group of single channel measurement results, the at least one group of joint channel measurement results is in a one-to-one correspondence with a resource pair included in the first resource pair, and each of the at least one group of single channel measurement results corresponds to one of the two groups of channel measurement resources.

In a possible implementation, the first reporting priority includes: a reporting priority of the at least one group of joint channel measurement results is lower than a reporting priority of the at least one group of single channel measurement results.

In a possible implementation, the first reporting priority includes: a reporting priority of the at least one group of joint channel measurement results and/or a reporting priority of the at least one group of single channel measurement results are/is determined based on a CQI corresponding to each group of measurement results.

In a possible implementation, that a reporting priority of the at least one group of joint channel measurement results and/or a reporting priority of the at least one group of single channel measurement results are/is determined based on a CQI corresponding to each group of measurement results includes: when CQIs corresponding to two groups of measurement results are different, a measurement result with a larger CQI has a higher reporting priority; or when CQIs corresponding to two groups of measurement results are the same, reporting priorities of the two groups of measurement results are determined based on a configuration sequence of two groups of channel measurement resources corresponding to the two groups of measurement results.

In a possible implementation, the receiving unit is further configured to receive second configuration information from the radio access network device, where the first configuration information is different from the second configuration information; and the measurement unit is further configured to perform channel measurement based on the second configuration information to obtain a second measurement result, where a second reporting priority exists between the first measurement result and the second measurement result; and the terminal device first determines a reporting priority between the first measurement result and the second measurement result based on the second reporting priority, and then separately determines, based on the first reporting priority, a reporting priority between at least two groups of measurement results included in the first measurement result and the second measurement result.

In a possible implementation, when a frequency domain granularity of channel measurement is a subband, a third reporting priority exists between a measurement result corresponding to an even-numbered subband and a measurement result corresponding to an odd-numbered subband in a same group of measurement results in the first measurement result; and the terminal device first determines, based on the first reporting priority, a reporting priority between at least one group of measurement results included in the first measurement result, and then determines, based on the third reporting priority, a reporting priority between a measurement result corresponding to an even-numbered subband and a measurement result corresponding to an odd-numbered subband that are included in each of the at least one group of measurement results.

In a possible implementation, the first configuration information further includes at least one interference measurement resource; a quantity of interference measurement resources in the at least one interference measurement resource is equal to a sum of Q and P; and a type of the interference measurement resource is an NZP CSI-RS resource or a CSI-IM resource.

In a possible implementation, first Q interference measurement resources in the at least one interference measurement resource are in a one-to-one correspondence with Q channel measurement resources included in the first resource, and remaining P interference measurement resources in the at least one interference measurement resource are in a one-to-one correspondence with P resource pairs included in the second resource pair.

In a possible implementation, when a third resource pair is measured, measurement is performed by using spatial reception parameters or quasi-co-location (quasi-co-location, QCL) assumptions of two channel measurement resources in the third resource pair, where the third resource pair is any resource pair in the second resource pair.

In a possible implementation, the first configuration information includes a second index, the second index includes the second indication information and the third indication information, and the second index includes P+Q index values.

In a possible implementation, when the reporting mode is the first mode, the information about the second resource and the information about the first resource pair are represented by using a same parameter or index. When the reporting mode is the second mode, the information about the second resource and the information about the first resource pair are represented by using different parameters or indexes.

In a possible implementation, the first measurement result further includes a first field, and the first field indicates a rank indicator (rank indicator, RI) of a channel. When the first field indicates one RI, a measurement result included in the first measurement result is a single channel measurement result. When the first field indicates an RI combination including two RIs, a measurement result included in the first measurement result is a joint channel measurement result.

In a possible implementation, when a first interference measurement resource is measured, measurement is performed by using receive beams, spatial reception parameters, or QCL assumptions of two channel measurement resources in the third resource pair, where the first interference measurement resource is an interference measurement resource corresponding to the third resource pair in the at least one interference measurement resource.

In a possible implementation, the first configuration information further includes at least one interference measurement resource; a quantity of interference measurement resources in the at least one interference measurement resource is equal to Q+2*P; and a type of the interference measurement resource is an NZP CSI-RS resource, a CSI-IM resource, or another type of interference measurement resource.

In a possible implementation, Q interference measurement resources in the at least one interference measurement resource are in a one-to-one correspondence with Q channel measurement resources included in the first resource, and remaining 2*P interference measurement resources in the at least one interference measurement resource are in a one-to-one correspondence with 2*P channel measurement resources included in the second resource pair.

In a possible implementation, when a first interference measurement resource is measured, measurement is performed by using receive beams, spatial reception parameters, or QCL assumptions of two channel measurement resources in the third resource pair, where the first interference measurement resource is an interference measurement resource corresponding to the third resource pair in the at least one interference measurement resource.

According to a fourth aspect, a communication apparatus is disclosed. The communication apparatus may be a radio access network device or a module (for example, a chip) in the radio access network device. The communication apparatus may include: a sending unit, configured to send first configuration information to a terminal device, where the first configuration information includes a plurality of channel measurement resources, and the plurality of channel measurement resources correspond to two groups of channel measurement resources; and a receiving unit, configured to receive a first measurement result from the terminal device, where the first measurement result includes a joint channel measurement result, the joint channel measurement result is a channel measurement result of a first resource pair, the first resource pair includes one or more resource pairs including two channel measurement resources, the two channel measurement resources respectively belong to the two groups of channel measurement resources, and the joint channel measurement result includes information about the first resource pair.

In a possible implementation, the first configuration information includes first indication information, and the first indication information indicates a quantity $N_1$ of channel measurement resources included in a first group of channel measurement resources in the two groups of channel measurement resources, where $N_1$ is an integer greater than or equal to 1.

In a possible implementation, a channel measurement resource included in a first group of channel measurement resources in the two groups of channel measurement resources is first $N_1$ channel measurement resources or last $N_1$ channel measurement resources in the plurality of channel measurement resources, and a channel measurement resource included in a second group of channel measurement resources in the two groups of channel measurement resources is a channel measurement resource other than the $N_1$ channel measurement resources in the plurality of channel measurement resources.

In a possible implementation, the first configuration information further includes second indication information, the second indication information indicates a first resource, and the first resource is one or more channel measurement resources used for single channel measurement in the plurality of channel measurement resources.

In a possible implementation, the second indication information indicates a quantity M of channel measurement resources used for single channel measurement in channel measurement resources included in each of the two groups of channel measurement resources, where M is an integer greater than or equal to 1.

In a possible implementation, a channel measurement resource used for single channel measurement in each group of channel measurement resources is first M channel measurement resources or last M channel measurement resources in each group of channel measurement resources.

In a possible implementation, the second indication information is a first bitmap.

In a possible implementation, the first configuration information further includes third indication information, the third indication information indicates a second resource pair, the second resource pair is a resource pair used for joint channel measurement, and the second resource pair includes the first resource pair.

In a possible implementation, the third indication information is a second bitmap.

In a possible implementation, the first bitmap and the second bitmap are two parts of a third bitmap.

In a possible implementation, an $((i-1)*N_2+j)^{th}$ bit or an $((j-1)*N_1+i)^{th}$ bit in the second bitmap corresponds to a resource pair including an $i^{th}$ channel measurement resource in the first group of channel measurement resources and a $j^{th}$ channel measurement resource in the second group of channel measurement resources, where $N_1$ is a quantity of channel measurement resources included in the first group of channel measurement resources, and $N_2$ is a quantity of channel measurement resources included in the second group of channel measurement resources.

In a possible implementation, when a frequency band used by the radio access network device falls within an FR 2, different resource pairs in the second resource pair include different channel measurement resources.

In a possible implementation, the first configuration information further includes fourth indication information, the fourth indication information indicates a reporting mode, and the reporting mode includes at least a first mode and a second mode. The first mode is to report one group of joint channel measurement results and one group of measurement results in at least one group of single channel measurement results. The second mode is to report Y groups of joint channel measurement results and X groups of single channel measurement results, where a value of Y is 1 or is configured by the radio access network device, and a value of X is configured by the radio access network device.

In a possible implementation, the fourth indication information includes two options. When the fourth indication information is a first option, the fourth indication information indicates the first mode. When the fourth indication information is a second option, the fourth indication information indicates the second mode.

In a possible implementation, the reporting mode further includes a third mode, and only a single channel measurement result is reported in the third mode. The fourth indication information includes three options. When the fourth indication information is a first option, the fourth indication information indicates the first mode. When the fourth indication information is a second option, the fourth indication information indicates the second mode. When the fourth indication information is a third option, the fourth indication information indicates the third mode.

In a possible implementation, when a measurement manner is single channel measurement, the first configuration information does not include one or more of the following information: the second indication information, the third indication information, and the fourth indication information.

In a possible implementation, the first measurement result further includes information about a second resource, and the second resource is a to-be-reported channel measurement resource in the first resource. The information about the second resource is any one of the following: a local index of the second resource in a group of channel measurement resources corresponding to the second resource; a local index of the second resource in a channel measurement resource that belongs to the first resource in the group of channel measurement resources corresponding to the second resource; and an index of a bit corresponding to the second resource in a first bitmap.

In a possible implementation, the information about the first resource pair is an index of a bit corresponding to the first resource pair in the second bitmap.

In a possible implementation, the first configuration information further includes at least one interference measurement resource; a quantity of interference measurement resources in the at least one interference measurement resource is equal to a sum of Q and P; and a type of the interference measurement resource is an NZP CSI-RS resource or a CSI-IM resource.

In a possible implementation, first Q interference measurement resources in the at least one interference measurement resource are in a one-to-one correspondence with Q channel measurement resources included in the first resource, and remaining P interference measurement resources in the at least one interference measurement resource are in a one-to-one correspondence with P resource pairs included in the second resource pair.

In a possible implementation, the first configuration information includes a second index, the second index includes the second indication information and the third indication information, and the second index includes P+Q index values, where Q is a quantity of channel measurement resources included in the first resource, and P is a quantity of resource pairs included in the second resource pair.

In a possible implementation, when the reporting mode is the first mode, the information about the second resource and the information about the first resource pair are represented by using a same parameter or index. When the reporting mode is the second mode, the information about the second resource and the information about the first resource pair are represented by using different parameters or indexes.

In a possible implementation, the first measurement result further includes a first field, and the first field indicates an RI. When the first field indicates one RI, a measurement result included in the first measurement result is a single channel measurement result. When the first field indicates an RI combination including two RIs, a measurement result included in the first measurement result is a joint channel measurement result.

In a possible implementation, the first configuration information further includes at least one interference measurement resource; a quantity of interference measurement resources in the at least one interference measurement resource is equal to Q+2*P; and a type of the interference measurement resource is an NZP CSI-RS resource, a CSI-IM resource, or another type of interference measurement resource.

In a possible implementation, Q interference measurement resources in the at least one interference measurement resource are in a one-to-one correspondence with Q channel measurement resources included in the first resource, and remaining 2*P interference measurement resources in the at least one interference measurement resource are in a one-to-one correspondence with 2*P channel measurement resources included in the second resource pair.

According to a fifth aspect, a communication apparatus is disclosed. The communication apparatus may be a terminal device or a module (for example, a chip) in the terminal device. The communication apparatus may include a processor, a memory, and a transceiver. The transceiver is configured to: receive information from a communication apparatus other than the communication apparatus, and output information to the communication apparatus other than the communication apparatus. When the processor executes a computer program stored in the memory, the processor is enabled to perform the communication method according to any one of the first aspect or the implementations of the first aspect.

According to a sixth aspect, a communication apparatus is disclosed. The communication apparatus may be a radio access network device or a module (for example, a chip) in the radio access network device. The communication apparatus may include a processor, a memory, and a transceiver. The transceiver is configured to: receive information from a communication apparatus other than the communication apparatus, and output information to the communication apparatus other than the communication apparatus. When the processor executes a computer program stored in the memory, the processor is enabled to perform the communication method according to any one of the second aspect or the implementations of the second aspect.

According to a seventh aspect, a communication system is disclosed. The communication system includes the communication apparatus according to the fifth aspect and the communication apparatus according to the sixth aspect.

According to an eighth aspect, a computer-readable storage medium is disclosed. The computer-readable storage medium stores a computer program or computer instructions, and when the computer program or the computer instructions are run, the communication method according to the foregoing aspects is implemented.

According to a ninth aspect, a chip is disclosed, and includes a processor, configured to execute a program stored in a memory. When the program is executed, the chip is enabled to perform the foregoing method.

In a possible implementation, the memory is located outside the chip.

According to a tenth aspect, a computer program product is disclosed. The computer program product includes computer program code, and when the computer program code is run, the foregoing communication method is performed.

**BRIEF DESCRIPTION OF DRAWINGS**

FIG. 1 is a schematic diagram of a network architecture according to an embodiment of this application;
FIG. 2 is a schematic diagram of joint channel measurement according to an embodiment of the present invention;
FIG. 3 is another schematic diagram of joint channel measurement according to an embodiment of the present invention;
FIG. 4 is a schematic flowchart of a communication method according to an embodiment of the present invention;
FIG. 5 is another schematic flowchart of a communication method according to an embodiment of the present invention;
FIG. 6 is a schematic diagram of a structure of a communication apparatus according to an embodiment of the present invention;
FIG. 7 is another schematic diagram of a structure of a communication apparatus according to an embodiment of the present invention;
FIG. 8 is still another schematic diagram of a structure of a communication apparatus according to an embodiment of the present invention;

FIG. 9 is still another schematic diagram of a structure of a communication apparatus according to an embodiment of the present invention; and

FIG. 10 is a schematic diagram of a structure of a communication system according to an embodiment of the present invention.

## DESCRIPTION OF EMBODIMENTS

Embodiments of the present invention disclose a communication method and apparatus, to improve accuracy of channel measurement. Descriptions are provided below in detail.

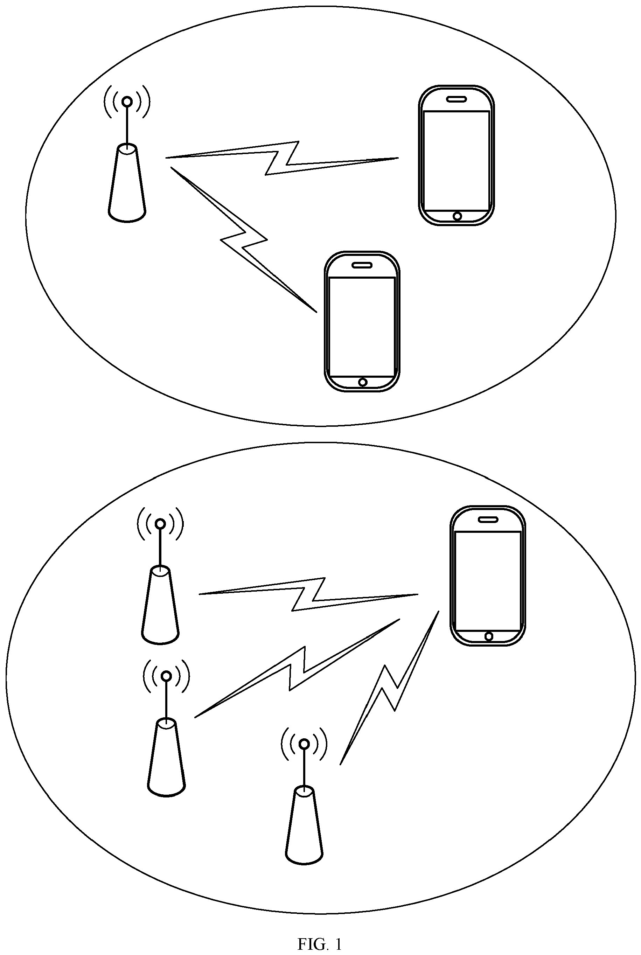

The following first describes a network architecture used in embodiments of the present invention, to better understand the communication method and apparatus disclosed in embodiments of the present invention. FIG. 1 is a schematic diagram of a network architecture according to an embodiment of this application. As shown in FIG. 1, the network architecture may include at least one terminal device and at least one radio access network device. One radio access network device may simultaneously send information to one or more terminal devices. A plurality of radio access network devices may simultaneously send information to one terminal device.

The terminal device, which may also be referred to as UE, a mobile station (mobile station, MS), a mobile terminal (mobile terminal, MT), or the like, is a device that provides voice and/or data connectivity for a user. The terminal device may be a handheld terminal, a notebook computer, a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld (handheld) device, a laptop computer (laptop computer), a cordless phone (cordless phone), a wireless local loop (wireless local loop, WLL) station, a machine type communication (machine type communication, MTC) terminal, a wearable device (for example, a smartwatch, a smart band, or a pedometer), a vehicle-mounted device (for example, an automobile, a bicycle, an electric vehicle, an airplane, a ship, a train, or a high-speed rail), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, workshop equipment, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in smart home (smart home), a flying device (for example, an intelligent robot, a hot air balloon, an unmanned aerial vehicle, or an airplane), or another device that can access a network.

The radio access network device is an apparatus deployed in a radio access network to provide a wireless communication function for the terminal device. The radio access network device may include base stations in various forms, for example, a macro base station, a micro base station (also referred to as a small cell), a relay station, and an access point. In systems that use different radio access technologies, names of radio access network devices may be different, for example, a base transceiver station (base transceiver station, BTS) in a global system for mobile communications (global system for mobile communications, GSM) or a code division multiple access (code division multiple access, CDMA) network, an NB (NodeB) in wideband code division multiple access (wideband code division multiple access, WCDMA), and an eNB or an eNodeB (evolved NodeB) in long term evolution (long term evolution, LTE). Alternatively, the radio access network device may be a radio controller in a cloud radio access network (cloud radio access network, CRAN) scenario. Alternatively, the radio access network device may be a base station device in a future network (such as 6G) or a radio access network device in a future evolved public land mobile network (public land mobile network, PLMN). Alternatively, the radio access network device may be a wearable device or a vehicle-mounted device. Alternatively, the radio access network device may be a transmission and reception point (transmission and reception point, TRP).

It should be noted that, the network architecture shown in FIG. 1 is not limited to including only the radio access network device and the terminal device shown in the figure.

The following first describes related technologies in embodiments of the present invention, to better understand embodiments of the present invention.

In a mobile communication system (for example, 5G), before the radio access network device performs data transmission, the terminal device needs to perform channel measurement to obtain channel information, so as to determine a related parameter of data transmission, such as a modulation order or a coding bit rate. Channel measurement is a measurement procedure in the R15 protocol, and is used to measure channel state information (channel state information, CSI) of a specific measurement resource. The CSI may include a channel quality indicator (channel quality indicator, CQI) or the like. Channel measurement may include downlink channel measurement and uplink channel measurement.

The downlink channel measurement may include the following steps.

1. The radio access network device sends configuration information to the terminal device.

The radio access network device may send the configuration information to the terminal device by using radio resource control (radio resource control, RRC) signaling, where the configuration information may include resource configuration information and reporting configuration information, and the resource configuration information is used to configure information about a measurement resource. In 3GPP (for example, 38.331), configuration may be performed by using a three-level structure, that is, a resource configuration (resourceConfig)-a resource set (resourceSet)-a measurement resource (resource). The radio access network device may configure one or more measurement resource configurations for the terminal device, where each measurement resource configuration may include one or more resource sets, and each resource set may include one or more measurement resources. Each resource configuration/resource set/measurement resource may include an index. In addition, each resource configuration/resource set/measurement resource may further include some other parameters, such as a measurement resource periodicity and a signal type corresponding to a measurement resource. Each measurement resource may further include one or more antenna ports. resourceConfig (that is, a resource configuration) may also be written as resourceSetting, and may correspond to resourceConfigIE in RRC signaling. The measurement resource may include a channel measurement resource and an interference measurement resource.

The reporting configuration information is used to configure information about measurement result reporting. In 3GPP (for example, 38.331), configuration may be performed by using a reporting configuration ReportConfig. The radio access network device may configure one or more reporting configurations ReportConfig for the terminal device, where each reporting configuration may include reporting-related information of at least one of a reporting indicator, a reporting time, a reporting periodicity, a reporting format, and the like. In addition, the reporting configuration information further includes an index of a resource configuration, indicating a resource configuration based on which the reported measurement result is obtained through measurement.

During channel measurement, a corresponding interference signal may be further measured. The interference signal may be measured by measuring the interference measurement resource. The interference measurement resource and the channel measurement resource may be configured for the terminal device together, and are separately configured in different resourceConfig. For example, two resource configurations resourceConfig are configured in the RRC signaling. One is used to configure the channel measurement resource, and the other is used to configure the interference measurement resource. There are two types of interference measurement resources: a non-zero power (non-zero power, NZP) channel state information-reference signal (channel state information reference signal, CSI-RS) resource and a channel state information-interference measurement (channel state information-interference measurement, CSI-IM) resource.

The radio access network device further needs to configure beam information of each channel measurement resource for the terminal device, so that the terminal device can determine a beam corresponding to each channel measurement resource and determine a receive beam that needs to be used to receive the reference signal. The beam information may be encapsulated in a transmission configuration index (transmission configuration index, TCI)-state (state), and each channel measurement resource may include one TCI-state, indicating beam information of the channel measurement resource. Beam information of the interference measurement resource does not need to be configured. Instead, the beam information of the channel measurement resource associated with the interference measurement resource is used by default. For example, when the CSI-IM resource is used as the interference measurement resource, a quantity of CSI-IM resources needs to be equal to a quantity of channel measurement resources, and the CSI-IM resource is in a one-to-one correspondence with the channel measurement resource. Each CSI-IM resource uses, by default, a beam of a channel measurement resource corresponding to the CSI-IM resource. The terminal device may receive the channel measurement resource and the CSI-IM resource through a same receive beam. When the NZP CSI-RS resource is used as the interference measurement resource, it is specified that only one channel measurement resource can be configured, and all NZP CSI-RS resources, that is, interference measurement resources, use a beam of the channel measurement resource. One channel measurement resource may uniquely correspond to one transmit beam. A beam corresponding to a channel measurement resource may be understood as a transmit beam of the radio access network device on the channel measurement resource.

Specific formats of the resource configuration information and the reporting configuration information in R15 (for example, 38.331) are as follows:

```
CSI-ResourceConfig ::=          SEQUENCE {
        csi-ResourceConfigId              CSI-ResourceConfigId,
        csi-RS-ResourceSetList            CHOICE {
```

```
                nzp-CSI-RS-SSB-ResourceSetList              SEQUENCE {
                    nzp-CSI-RS-ResourceSetList          SEQUENCE    (SIZE   (1..maxNrofNZP-CSI-RS-
ResourceSetsPerConfig)) OF
                    NZP-CSI-RS-ResourceSetId
                    csi-SSB-ResourceSetList                  SEQUENCE   (SIZE   (1..maxNrofCSI-SSB-
ResourceSetsPerConfig)) OF CSI-SSB-ResourceSetId
                    },
                    csi-IM-ResourceSetList                   SEQUENCE   (SIZE   (1..maxNrofCSI-IM-
ResourceSetsPerConfig)) OF CSI-IM-ResourceSetId
                },
                bwp-Id                      BWP-Id,
                resourceType                ENUMERATED { aperiodic, semiPersistent, periodic },
                ...
            }


    CSI-ReportConfig ::=                SEQUENCE {
            reportConfigId                       CSI-ReportConfigId,
            resourcesForChannelMeasurement       CSI-ResourceConfigId,
            csi-IM-ResourcesForInterference      CSI-ResourceConfigId
            nzp-CSI-RS-ResourcesForInterference   CSI-ResourceConfigId
            reportQuantity                       CHOICE {

                …
            },
            groupBasedBeamReporting                  CHOICE {
                enabled                                  NULL,
                disabled                                 SEQUENCE {
                    nrofReportedRS                       ENUMERATED {n1, n2, n3, n4}
                }
            },
        }
```

CSI-ResourceConfig is a resource configuration, csi-ResourceConfigId is an index of the resource configuration, csi-RS-ResourceSetList is a resource set list, nzp-CSI-RS-SSB-ResourceSetList is an nzp-CSI-RS-synchronization signal block (synchronization signal block, SSB) resource set list, csi-SSB-ResourceSetList is a csi-IM resource set list, csi-IM-ResourceSetList is a csi-IM resource set list, CSI-IM-ResourceSetId is a csi-IM resource set identifier, bwp (bandwidth part)-Id is an identifier of a bandwidth block, and resourceType is a time domain sending characteristic of a resource in the resource configuration. CSI-ReportConfig is a reporting configuration, and reportConfigId is an index of the reporting configuration. resourcesForChannelMeasurement is a resource configuration used to measure channel information. csi-IM-ResourcesForInterference is a resource configuration used to measure interference information, and all types of resources included in the resource configuration are csi-IM. nzp-CSI-RS-ResourcesForInterference is a resource configuration used to measure interference information, and all types of resources included in the resource configuration is nzp-CSI-RS. reportQuantity is a reported parameter.

Correspondingly, the terminal device receives the configuration information from the radio access network device.

2. The radio access network device sends a reference signal on a resource configured by using the resource configuration information.

3. The terminal device measures the reference signal based on measurement configuration information.

The terminal device may determine a related parameter of the reference signal based on the configuration information. A related parameter of a reference signal is encapsulated in a resource (resource) information element (information element, IE). One resource corresponds to one reference signal, and the resource may include a related parameter of the reference signal. The related parameter of the reference signal may include a sending periodicity, a sending time, a signal type, transmit beam information, and the like.

4. The terminal device sends a measurement result to the radio access network device.

The measurement result may include indexes of one or more channel measurement resources and channel information corresponding to the one or more channel measurement resources. The channel information may include a CQI, a rank indicator (rank indicator, RI) of a channel, a precoding matrix indicator (precoding matrix indicator, PMI), a layer indicator (layer indicator, LI), and the like.

It can be learned that the channel measurement may be understood as follows: The radio access network device sends the reference signal to the terminal device, and the terminal device determines the channel information by measuring the reference signal, and reports the channel information to the radio access network device.

In conclusion, the radio access network device may configure a plurality of channel measurement resources for the terminal device, where the plurality of channel measurement resources may correspond to a plurality of different transmit beams. To be specific, the radio access network device sends, through the different transmit beams, reference signals corresponding to all the channel measurement resources, and the terminal device may obtain, through measurement, channel information corresponding to each transmit beam. Alternatively, the plurality of channel measurement resources may correspond to a plurality of different TRPs. To be specific, the radio access network device may send, through the different TRPs, reference signals corresponding to all the channel measurement resources, and the terminal device may obtain, through measurement, channel information corresponding to each TRP. After measuring the plurality of channel measurement resources, the terminal device may select a channel measurement resource with best channel quality, and report an index of the channel measurement resource and corresponding channel information to the radio access network device, so that the radio access network device can communicate with the terminal device through a beam/TRP corresponding to the channel measurement resource, and determine a transmission parameter based on channel information corresponding to the channel measurement resource. The measurement resource may be briefly referred to as a resource. In a high frequency, one TRP corresponds to one transmit beam.

The TRP may be a radio access network device, or may be a part, for example, a transceiver, of the radio access network device. For example, in a cell using a plurality of TRPs, downlink signals in the cell are simultaneously sent to the terminal device through the plurality of TRPs. In this case, the plurality of TRPs may be considered as radio access network devices, or the plurality of TRPs may be considered as a plurality of transmitters of the entire radio access network device. In this application, two terms, that is, a radio access network device and a TRP, are used to clearly describe the technologies of the present invention. For a relationship between the two terms, refer to the foregoing definitions for understanding.

In addition to separately obtaining channel information of each beam or each TRP (that is, single channel measurement), a plurality of TRPs may perform joint measurement (that is, joint channel measurement) to obtain joint channel information of the plurality of TRPs. The joint channel information is used for multi-TRP joint measurement. To be specific, before the radio access network device needs to simultaneously transmit data to the terminal device through the plurality of TRPs, the radio access network device needs to obtain the joint channel information of the plurality of TRPs. How to perform joint channel measurement has become an urgent technical problem to be resolved.

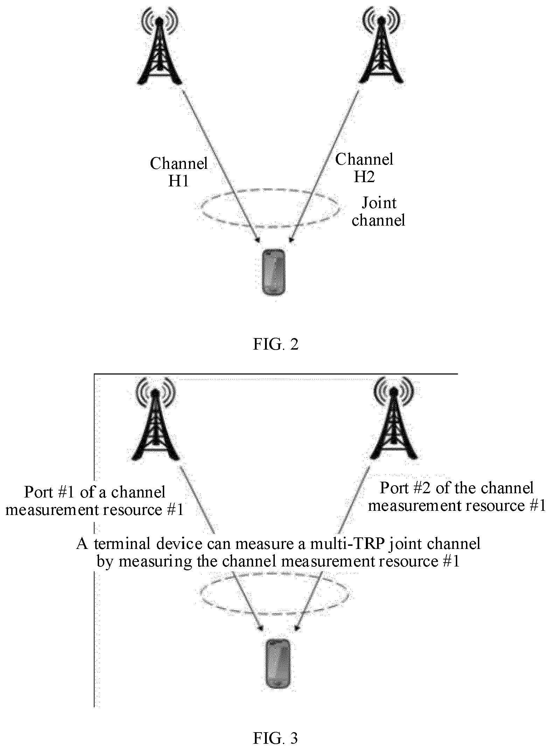

FIG. 2 is a schematic diagram of joint channel measurement according to an embodiment of the present invention. As shown in FIG. 2, joint measurement is performed on a channel H1 and a channel H2.

A radio access network device may configure a channel measurement resource for the terminal device, where the channel measurement resource may include a plurality of ports; and the ports may be divided into two parts, and each part may correspond to one TRP. Each port corresponds to one reference signal, and each TRP sends a reference signal corresponding to a port corresponding to the TRP. The terminal device may jointly perform measurement on all ports, to implement multi-TRP joint measurement (that is, joint channel measurement).

FIG. 3 is another schematic diagram of joint channel measurement according to an embodiment of the present invention. As shown in FIG. 3, it is assumed that one channel measurement resource includes two ports, a port #1 corresponds to a TRP 1, and a port #2 corresponds to a TRP 2. The TRP 1 sends a reference signal corresponding to the port #1, and the TRP 2 sends a reference signal corresponding to the port #2. The terminal device may measure, by measuring the reference signals corresponding to the two ports, joint channel information corresponding to the two TRPs.

However, in a high frequency transmission scenario, both data and a reference signal corresponding to the channel measurement resource need to be transmitted through a specific transmit beam. A transmit beam used for the channel measurement resource is configured by a radio access network device, that is, is configured in the channel measurement resource as a parameter. Currently, only one transmit beam can be configured for one channel measurement resource. However, different ports of one channel measurement resource are sent by using different TRPs, and the different TRPs use different transmit beams. Therefore, at least two transmit beams need to be configured for one channel measurement resource. Because at least two transmit beams cannot be configured for one channel measurement resource, a method for performing multi-TRP joint channel measurement by using one channel measurement resource cannot be applied to a high frequency transmission scenario.

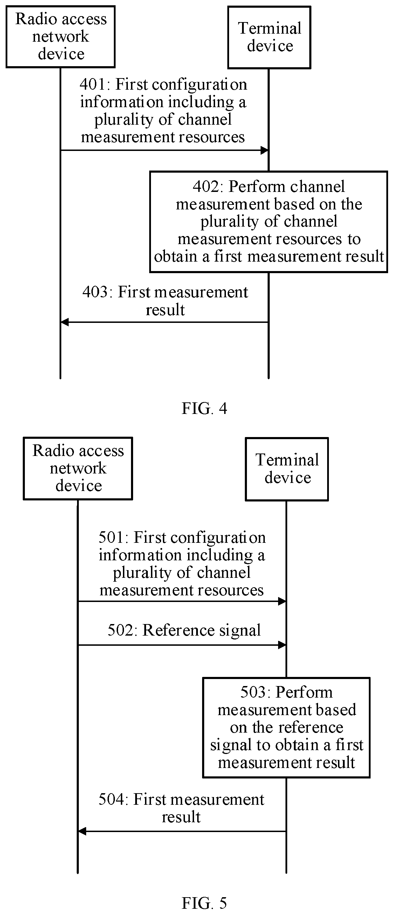

Based on the foregoing network architecture, FIG. 4 is a schematic flowchart of a communication method according to an embodiment of the present invention. As shown in FIG. 4, the communication method may include the following steps.

401: A radio access network device sends, to a terminal device, first configuration information including a plurality of channel measurement resources.

Correspondingly, the terminal device receives the first configuration information from the radio access network device.

Before sending data to the terminal device, the radio access network device may first determine the first configuration information, and then may send the first configuration information to the terminal device, where the first configuration information may include a plurality of channel measurement resources, and the plurality of channel measurement resources may correspond to at least one group of channel measurement resources, that is, one or more groups of channel measurement resources.

The radio access network device may determine a measurement manner of the terminal device. The first configuration information may further include indication information indicating the measurement manner. The measurement manner may be single channel measurement or joint channel measurement. When the measurement manner is single channel measurement, the plurality of channel measurement resources correspond to one group of channel measurement resources, and the terminal device performs single channel measurement. Correspondingly, a measurement result is a single channel measurement result. When the measurement manner is joint channel measurement, the plurality of channel measurement resources correspond to at least two groups of channel measurement resources, and the terminal device performs joint channel measurement. Correspondingly, a measurement result includes a joint channel measurement result. When the measurement manner is joint channel measurement, the terminal device may further perform single channel measurement. Correspondingly, the measurement result may further include a single channel measurement result.

The single channel measurement may be understood as separately measuring each channel measurement resource, determining channel information corresponding to each channel measurement resource, and reporting a single channel measurement result. The single channel measurement result may include one or more of the following: information about a channel measurement resource, an RI, a PMI, a CQI, and an LI. For example, channel measurement resources 1, 2, and 3 are separately measured to obtain channel information of a TRP 1; and channel measurement resources 4 and 5 are separately measured to obtain channel information of a TRP 2. Different channel measurement resources of a same TRP may correspond to different transmit beams, and are used to measure corresponding channel information when the TRP uses different transmit beams. The terminal device may report a channel measurement resource with best quality in channel measurement resources corresponding to TRPs and corresponding channel information, that is, may report a single channel measurement result with best quality in single channel measurement results corresponding to the TRPs. The information about the channel measurement resource may be information that can identify the channel measurement resource, such as an index or an identifier of the channel measurement resource.

The joint channel measurement may be understood as combining channel measurement resources in different groups of channel measurement resources, then measuring each resource combination (or resource pair), determining channel information corresponding to each resource combination (or resource pair), and reporting a joint channel measurement result. The joint channel measurement result may include one or more of the following: information about a resource combination (or a resource pair), an RI, a PMI, a CQI, and an LI. The reported information about the resource pair may be an index of the resource pair, or may be indexes of two channel measurement resources included in the resource pair. For example, a first group of channel measurement resources {1, 2, 3} and a second group of channel measurement resources {4, 5} may form six resource pairs: {1, 4}, {2, 4}, {3, 4}, {1, 5}, {2, 5}, and {3, 5}. Each resource pair represents a corresponding joint channel used when two TRPs perform sending through a specific transmit beam. The terminal device may report a resource pair with best quality in resource pairs and corresponding channel information, that is, may report a group of joint channel measurement results with best quality in joint channel measurement results. When the joint channel measurement resource corresponds to a resource pair, the group of reported joint channel measurement results may include one or more of the following: information about the resource pair, and an RI, a PMI, a CQI, and an LI that correspond to two channel measurement resources included in the resource pair, where the information about the resource combination (or resource pair) may be information that can identify the resource combination (or resource pair), such as an index or an identifier of the resource combination (or resource pair). It should be understood that two groups of channel measurement resources correspond to two TRPs, that is, one group of channel measurement resources is allocated to each TRP. Similarly, three groups of channel measurement resources correspond to three TRPs, and by analogy.

When the plurality of channel measurement resources correspond to the two groups of channel measurement resources, the resource combination may also be referred to as a resource pair, and may include two channel measurement resources belonging to the two groups of channel measurement resources. The resource combination may include at least two channel measurement resources belonging to at least two groups of channel measurement resources. A quantity of channel measurement resources included in the resource combination may be a group quantity of the at least two groups of channel measurement resources, and the channel measurement resources included in the resource combination separately correspond to the at least two groups of channel measurement resources. For example, the plurality of channel measurement resources are resources 1, 2, 3, 4, 5, and 6, and are grouped into two groups of channel measurement resources, where a first group of channel measurement resources is resources 1, 2, and 3, and a second group of channel measurement resources is resources 4, 5, and 6. Resource pairs may be {1, 4}, {1, 5}, {1, 6}, {2, 4}, {2, 5}, {2, 6}, {3, 4}, {3, 5}, and {3, 6}. For another example, the plurality of channel measurement resources are resources 1, 2, 3, 4, 5, and 6, and are grouped into three groups of channel measurement resources, where a first group of channel measurement resources is resources 1 and 2, a second group of channel measurement resources is resources 3 and 4, and a third group of channel measurement resources is resources 5 and 6. Resource combinations may be {1, 3, 5}, {1, 3, 6}, {2, 3, 5}, {2, 3, 6}, {1, 4, 5}, {1, 4, 6}, {2, 4, 5} and {2, 4, 6}.

It should be understood that numbers 1, 2, 3, 4, 5, and 6 in the channel measurement resources 1, 2, 3, 4, 5, and 6 are used to distinguish between different channel measurement resources. These numbers may be information that can distinguish between the different channel measurement resources, such as an identifier, a sequence number, or an index of a channel measurement resource.

Optionally, the first configuration information may include a channel measurement resource set, and the channel measurement resource set may include the plurality of channel measurement resources. The plurality of channel measurement resources may correspond to at least one group of channel measurement resources, that is, the channel measurement resource set may include at least one group of channel measurement resources. Each of the at least one group of channel measurement resources may correspond to one TRP, and each group of channel measurement resources may include one or more channel measurement resources used to measure a channel of the corresponding TRP. For example, it is assumed that the plurality of channel measurement resources correspond to two groups of channel measurement resources, and the radio access network device configures one channel measurement resource set { 1, 2, 3, 4, 5}. A first group of channel measurement resources in the two groups of channel measurement resources may include {1, 2, 3}, that is, {1, 2, 3} is a channel measurement resource of the TRP 1. A second group of channel measurement resources in the two groups of channel measurement resources may include {4, 5}, that is, {4, 5} is a channel measurement resource of the TRP 2.

In one case, the radio access network device may determine a quantity $N_1$ of channel measurement resources included in the first group of channel measurement resources in the two groups of channel measurement resources, and then may determine the first indication information based on $N_1$. The first configuration information may further include first indication information, and the first indication information may indicate the quantity $N_1$ of channel measurement resources included in the first group of channel measurement resources in the two groups of channel measurement resources. A channel measurement resource included in the first group of channel measurement resources in the two groups of channel measurement resources may be first $N_1$ channel measurement resources in the plurality of channel measurement resources, last $N_1$ channel measurement resources in the plurality of channel measurement resources, or $N_1$ channel measurement resources selected from the plurality of channel measurement resources in another manner. This is not limited herein. The $N_1$ channel measurement resources that are $N_1$ channel measurement resources in the plurality of channel measurement resources may be configured by default between the terminal device and the radio access network device or set in a protocol, or may be indicated by the radio access network device to the terminal device. A channel measurement resource included in the second group of channel measurement resources in the two groups of channel measurement resources may be a channel measurement resource other than the $N_1$ channel measurement resources in the plurality of channel measurement resources. The first indication information may be $N_1$, or may include information about $N_1$, that is, $N_1$ may be indicated by using one piece of information. Herein, $N_1$ is an integer greater than or equal to 1.

The radio access network device may further determine a quantity $N_2$ of channel measurement resources included in the second group of channel measurement resources in the two groups of channel measurement resources, and then may determine the first indication information based on $N_1$ and $N_2$. The first indication information may include $N_1$ and $N_2$, or may include information about $N_1$ and information about $N_2$, that is, quantities of channel measurement resources included in the two groups of channel measurement resources are directly configured. Values of $N_1$ and $N_2$ may be set by the radio access network device based on a requirement. The radio access network device may set the values based on a ratio of quantities of beams on the two TRPs. For example, when the ratio of quantities of beams on the two TRPs is 2:1, $N_1$ and $N_2$ also need to be set to 2:1. The radio access network device may also set the values based on other information. This is not limited herein. A sum of $N_1$ and $N_2$ is equal to a quantity of the plurality of channel measurement resources. When $N_1$ is 0 or N, the plurality of channel measurement resources may correspond to one group of channel measurement resources. When $N_1$ is not 0 or N, the plurality of channel measurement resources may correspond to two groups of channel measurement resources. Similarly, when $N_2$ is 0 or N, the plurality of channel measurement resources may correspond to one group of channel measurement resources. When $N_2$ is not 0 or N, the plurality of channel measurement resources may correspond to two groups of channel measurement resources. N is a sum of $N_1$ and $N_2$, and may be a quantity of channel measurement resources in the plurality of channel measurement resources. The quantity of channel measurement resources may be understood as a number of channel measurement resources. When both $N_1$ and $N_2$ are configured for the radio access network device, $N_1$ or $N_2$ is an integer greater than or equal to 0 and less than or equal to N. However, to ensure configuration effectiveness and reduce unnecessary configurations, the network device may configure $N_2$ only when the two groups of channel measurement resources are configured. In this case, $N_1$ or $N_2$ may be an integer greater than 0 and less than N.

When the plurality of channel measurement resources correspond to A groups of channel measurement resources, the first indication information may include information about $N_1$, $N_2$, ..., and $N_{A-1}$ (or $N_1$, $N_2$, ..., and $N_{A-1}$), or may include information about $N_1$, $N_2$, ..., $N_{A-1}$, and $N_A$ (or $N_1$, $N_2$, ..., $N_{A-1}$, and $N_A$). A is an integer greater than or equal to 3. When the first indication information includes the information about $N_1$, $N_2$, ..., and $N_{A-1}$, $N_i$ is a quantity of channel measurement resources included in an $i^{th}$ group of channel measurement resources in the A groups of channel measurement resources, where i=1, 2, ..., and A-1, and an $A^{th}$ group of channel measurement resources in the A groups of channel measurement resources is a channel measurement resource other than the $i^{th}$ group of channel measurement resources in the plurality of channel measurement resources. When the first indication information includes the information about $N_1$, $N_2$, ..., $N_{A-1}$, and $N_A$, $N_i$ is a quantity of channel measurement resources included in an $i^{th}$ group of channel measurement resources in the A groups of channel measurement resources, where i=1, 2, ..., A-1, and A.

In another case, the radio access network device may set a channel measurement resource subset based on the plurality of channel measurement resources. When the plurality of channel measurement resources correspond to one group of channel measurement resources, one channel measurement resource subset may be set, that is, the channel measurement resource set may include one channel measurement resource subset, that is, the first configuration information may include one channel measurement resource subset.

When the plurality of channel measurement resources correspond to two groups of channel measurement resources, two channel measurement resource subsets may be set, that is, the channel measurement resource set may include two channel measurement resource subsets, that is, the first configuration information may include two channel measurement resource subsets. The two channel measurement resource subsets may respectively correspond to two groups of channel measurement resources (that is, two TRPs), that is, the two channel measurement resource subsets are in a one-to-one correspondence with the two groups of channel measurement resources. Each of the two channel measurement resource subsets may include one or more channel measurement resources in the plurality of channel measurement resources. A quantity of channel measurement resources included in the two channel measurement resource subsets is equal to a quantity of the plurality of channel measurement resources. The two channel measurement resource subsets cannot include a same channel measurement resource, that is, there is no intersection of the two channel measurement resource subsets.

When the plurality of channel measurement resources correspond to A groups of channel measurement resources, A channel measurement resource subsets may be set, that is, the channel measurement resource set may include A channel measurement resource subsets, that is, the first configuration information may include A channel measurement resource subsets. The A channel measurement resource subsets may respectively correspond to A groups of channel measurement resources, that is, the A channel measurement resource subsets are in a one-to-one correspondence with the A groups of channel measurement resources. Each of the A channel measurement resource subsets may include one or more channel measurement resources in the plurality of channel measurement resources. A quantity of channel measurement resources included in the A channel measurement resource subsets is equal to a quantity of the plurality of channel measurement resources. Any two of the A channel measurement resource subsets cannot include a same channel measurement resource, that is, there is no intersection of the any two channel measurement resource subsets.

In still another case, the radio access network device may establish an association relationship (or a correspondence) between each of the plurality of channel measurement resources and an index value of a first index. When the plurality of channel measurement resources correspond to one group of channel measurement resources, the radio access network device may establish an association relationship (or a correspondence) between each channel measurement resource in the group of channel measurement resources and the index value of the first index, that is, index values of the first index corresponding to each channel measurement resource in the group of channel measurement resources are the same, that is, a same index value of the first index corresponds to all channel measurement resources in the group of channel measurement resources.

When the plurality of channel measurement resources correspond to two groups of channel measurement resources, the radio access network device may establish a correspondence between each of the plurality of channel measurement resources and each of two index values of the first index. One of the two index values of the first index may correspond to one or more of the plurality of channel measurement resources, but one channel measurement resource can correspond to or be associated with only one of the two index values of the first index, and cannot correspond to or be associated with the two index values. A sum of quantities of channel measurement resources corresponding to the two index values is a quantity of channel measurement resources in the plurality of channel measurement resources. The two index values of the first index respectively correspond to the two groups of channel measurement resources, that is, the two index values are in a one-to-one correspondence with the two groups of channel measurement resources.

When the plurality of channel measurement resources correspond to A groups of channel measurement resources, the radio access network device may establish a correspondence between each of the plurality of channel measurement resources and each of A index values of the first index. One of the A index values may correspond to one or more of the plurality of channel measurement resources, but one channel measurement resource can correspond to or be associated with only one of the A index values, and cannot correspond to or be associated with two index values. A sum of quantities of channel measurement resources corresponding to the A index values is a quantity of channel measurement resources in the plurality of channel measurement resources. The A index values of the first index respectively correspond to the A groups of channel measurement resources, that is, the A index values are in a one-to-one correspondence with the A groups of channel measurement resources.

It should be understood that the first index may be an index of the TRP, or may be an index of a group of channel measurement resources, or may be another index. This is not limited herein.

In still another case, the radio access network device may determine a quantity B of groups of channel measurement resources. The first configuration information may include B or information about B. B is an integer greater than or equal to 1.

The radio access network device may not indicate a channel measurement resource on which single channel measurement needs to be performed by the terminal device. When the measurement manner is single channel measurement, it may indicate that the terminal device needs to separately measure all channel measurement resources in the plurality of channel measurement resources. When the measurement manner is joint channel measurement, it may indicate that the terminal device needs to separately measure all channel measurement resources in the plurality of channel measurement resources. When the measurement manner is joint channel measurement, it may indicate that the terminal device does not need to separately measure all channel measurement resources in the plurality of channel measurement resources, or may indicate that the terminal device needs to separately measure one of the at least two groups of channel measurement resources, or may indicate another meaning. This is not limited herein. A specific meaning may be determined based on a default configuration between the radio access network device and the terminal device.

Alternatively, the radio access network device may indicate a channel measurement resource on which single channel measurement needs to be performed by the terminal device. Regardless of whether the measurement manner is single channel measurement or joint channel measurement, the radio access network device may indicate the channel measurement resource on which single channel measurement needs to be performed by the terminal device.

The radio access network device may determine the first resource, where the first resource may be one or more channel measurement resources used for single channel measurement in the plurality of channel measurement resources, that is, all channel measurement resources on which single channel measurement needs to be performed by the terminal device in the plurality of channel measurement resources. Then, the radio access network device may determine second indication information based on the first resource, where the first configuration information may include the second indication information, and the second indication information may indicate the first resource.

In one case, the second indication information may indicate a quantity M of channel measurement resources used for single channel measurement in channel measurement resources included in each of the at least one group of channel measurement resources. A channel measurement resource used for single channel measurement in each group of channel measurement resources may be first M channel measurement resources in each group of channel measurement resources, last M channel measurement resources in each group of channel measurement resources, any M channel measurement resources in each group of channel measurement resources, or M channel measurement resources selected in another manner from each group of channel measurement resources. This is not limited herein. M is an integer greater than or equal to 1. When the plurality of channel measurement resources correspond to at least two groups of channel measurement resources, M needs to be greater than or equal to a smallest quantity of channel measurement resources in quantities of channel measurement resources included in all of the at least two groups of channel measurement resources, so that each group of channel measurement resources has sufficient channel measurement resources used for single channel measurement. It can be learned that the second indication information may indicate, by using a value M or information about M, a channel measurement resource that needs to be measured by the terminal device in channel measurement resources included in each of the at least two groups of channel measurement resources.

For example, a first group of channel measurement resources is {1, 2, 3}, a second group of channel measurement resources is {4, 5}, and M is 2. The second indication information may indicate that first two channel measurement resources 1 and 2 in the first group of channel measurement resources are channel measurement resources that need to be measured, and first two channel measurement resources {4, 5} in the second group of channel measurement resources are channel measurement resources that need to be measured.

In another case, when the plurality of channel measurement resources correspond to at least two groups of channel measurement resources, the second indication information may indicate a quantity $M_i$ of channel measurement resources used for single channel measurement in an $i^{th}$ group of channel measurement resources. The $M_i$ channel measurement resources used for single channel measurement in the $i^{th}$ group of channel measurement resources may be first $M_i$ channel measurement resources in the $i^{th}$ group of channel measurement resources, last $M_i$ channel measurement resources in the $i^{th}$ group of channel measurement resources, any $M^i$ channel measurement resources in the $i^{th}$ group of channel measurement resources, or $M_i$ channel measurement resources selected in another manner from the $i^{th}$ group of channel measurement resources. This is not limited herein. $M_i$ is an integer greater than or equal to 0 and less than or equal to a quantity of channel measurement resources included in the $i^{th}$ group of channel measurement resources, where i=2, 3, ..., and a quantity of groups of channel measurement resources.

In still another case, the second indication information may be a first bitmap. A quantity of bits included in the first bitmap is equal to a quantity of channel measurement resources in the plurality of channel measurement resources, and one bit in the first bitmap indicates whether single channel measurement needs to be performed on one of the plurality of channel measurement resources. That is, bits in the first bitmap are in a one-to-one correspondence with the plurality of channel measurement resources, that is, each bit in the first bitmap corresponds to one channel measurement resource. For example, when a value of a bit (bit) is 1, it may indicate that a channel measurement resource corresponding to the bit needs to be measured, or when a value of the bit is 0, it may indicate that a channel measurement resource corresponding to the bit does not need to be measured. For another example, when a value of a bit is 0, it may indicate that a channel measurement resource corresponding to the bit needs to be measured, or when a value of the bit is 1, it may indicate that a channel measurement resource corresponding to the bit does not need to be measured. A mapping relationship between a bit in the first bitmap and a channel measurement resource may be that an $i^{th}$ channel measurement resource in a channel measurement resource set corresponds to an $i^{th}$ bit in the first bitmap. For example, channel measurement resources 1, 2, 3, 4, and 5 in the channel measurement resource set may be indicated by using a 5-bit bitmap.

In still another case, when the plurality of channel measurement resources correspond to at least two groups of channel measurement resources, the second indication information may include at least two bitmaps. The radio access network device may respectively indicate, by using at least two bitmaps, a channel measurement resource that needs to be separately measured by the terminal device in the at least two groups of channel measurement resources, where each bitmap corresponds to one group of channel measurement resources. Each bit in the bitmap corresponds to one channel measurement resource. For example, when a value of a bit is 1, it may indicate that a channel measurement resource corresponding to the bit needs to be measured, or when a value of the bit is 0, it may indicate that a channel measurement resource corresponding to the bit does not need to be measured. For another example, when a value of a bit is 0, it may indicate that a channel measurement resource corresponding to the bit needs to be measured, or when a value of the bit is 1, it may indicate that a channel measurement resource corresponding to the bit does not need to be measured. A mapping relationship between a bitmap and a channel measurement resource may be that a specific channel measurement resource in a group of channel measurement resource corresponds to a specific bit in a corresponding bitmap. For example, the first group of channel measurement resources 1, 2, and 3 may be indicated by using a 3-bit bitmap, and the second group of channel measurement resources 4, 5 may be indicated by using a 2-bit bitmap.

When the measurement manner is joint channel measurement, the radio access network device may not indicate a resource combination (or a resource pair) on which joint channel measurement needs to be performed by the terminal device. In this case, it may indicate that the terminal device needs to jointly measure all resource combinations (or resource pairs) including at least two groups of channel measurement resources.

When the measurement manner is joint channel measurement, the radio access network device may alternatively indicate a resource combination (or a resource pair) on which joint channel measurement needs to be performed by the terminal device. When the plurality of channel measurement resources correspond to two groups of channel measurement resources, the radio access network device may first determine a second resource pair that needs to be measured by the terminal device, and then may determine third indication information based on the second resource pair. The first configuration information may include the third indication information, the third indication information indicates the second resource pair, and the second resource pair is a resource pair used for joint channel measurement. The second resource pair may include one or more resource pairs, and a quantity of resource pairs included in the second resource pair may be greater than or equal to 1 and less than or equal to a quantity of all resource pairs including the first group of channel measurement resources and the second group of channel measurement resources.

When the plurality of channel measurement resources correspond to at least three groups of channel measurement resources, the radio access network device may first determine a resource combination that needs to be measured by the terminal device, and then may determine third indication information based on a determined resource combination. The first configuration information may include the third indication information, the third indication information indicates the determined resource combination, and the determined resource combination is a resource combination used for joint channel measurement. The determined resource combination may include one or more resource combinations, and a quantity of resource combinations included in the determined resource combination may be greater than or equal to 1 and less than or equal to a quantity of all resource combinations including the at least three groups of channel measurement resources.

The third indication information may be a second bitmap. To be specific, the radio access network device may indicate, by using a bitmap, a resource pair (or a resource combination) that needs to be measured. Each bit in the second bitmap may correspond to one resource pair (or resource combination). For example, when a value of the bit is 1, it may indicate that the terminal device needs to measure a corresponding resource pair (or resource combination), or when a value of the bit is 0, it may indicate that the terminal device does not need to measure a corresponding resource pair (or resource combination). For another example, when a value of the bit is 0, it may indicate that the terminal device needs to measure a corresponding resource pair (or resource combination), or when a value of the bit is 1, it may indicate that the terminal device does not need to measure a corresponding resource pair (or resource combination). When the plurality of channel measurement resources correspond to two groups of channel measurement resources, a correspondence between a bit in the second bitmap and a resource pair may be that an $((i-1)*N_2+j)^{th}$ bit in the second bitmap corresponds to a resource pair including an $i^{th}$ channel measurement resource in the first group of channel measurement resources and a $j^{th}$ channel measurement resource in the second group of channel measurement resources, or that a $((j-1)*N_1+i)^{th}$ bit in the second bitmap corresponds to a resource pair including an $i^{th}$ channel measurement resource in the first group of channel measurement resources and a $j^{th}$ channel measurement resource in the second group of channel measurement resources. $N_1$ is a quantity of channel measurement resources included in the first group of channel measurement resources, and $N_2$ is a quantity of channel measurement resources included in the second group of channel measurement resources. The resource pair includes two channel measurement resources, and the two channel measurement resources respectively belong to two groups of channel measurement resources.

When a frequency band used by the radio access network device falls within a frequency range (frequency range, FR) 2, different resource pairs in the second resource pair include different channel measurement resources. That is, any two resource pairs in the second resource pair cannot include a common channel measurement resource, that is, one channel measurement resource cannot simultaneously appear in two resource pairs that need to be measured. That is, when the frequency band used by the radio access network device falls within the FR 2, different to-be-measured resource pairs cannot include a same channel measurement resource. For example, if both resource pairs {1, 4} and {1, 5} include a same channel measurement resource 1, the radio access network device cannot indicate the terminal device to measure the two resource pairs. If the resource pairs { 1, 4} and {2, 5} do not include a common channel measurement resource, the radio access network device may indicate the terminal device to measure the two resource pairs. Alternatively, when the frequency band used by the radio access network device falls within the FR 2, a quantity of resource pairs included in the second resource pair cannot exceed 1, that is, only one resource pair can be measured. In this way, a case in which a plurality of resource pairs that need to be measured include a same channel measurement resource can be avoided.

The first bitmap and the second bitmap may be two parts of the third bitmap. It can be learned that the radio access network device may indicate, by using a bitmap, a channel measurement resource and a resource pair (or a resource combination) that need to be measured by the terminal device. In a bitmap, some bits may indicate a channel measurement resource that needs to be measured, and the other bits may indicate a resource pair (or a resource combination) that needs to be measured. The bits indicating the channel measurement resource may be ranked before the bits that indicate the resource pair (or the resource combination). Alternatively, the bits indicating the channel measurement resource may be ranked after the bits indicating the resource pair (or the resource combination). For a correspondence between the bit in the bitmap and each of the channel measurement resource and the resource pair (or the resource combination), refer to the foregoing related descriptions.

When the measurement manner is joint channel measurement, the radio access network device may determine a reporting mode for the terminal device, and then may determine fourth indication information based on the reporting mode. The first configuration information may further include the fourth indication information, and the fourth indication information indicates the reporting mode. The reporting mode may include a first mode and a second mode.

The first mode is to report one group of joint channel measurement results and one group of channel measurement results in at least one group of single channel measurement results. It can be learned that, when the reporting mode is the first mode, only one of the joint channel measurement result and the single channel measurement result needs to be reported, and only one group of measurement results needs to be reported. For example, the radio access network device configures two groups of channel measurement resources for the terminal device, and may determine, based on the two groups of channel measurement resources, three groups of measurement results, namely, one group of joint measurement results (for example, a measurement result corresponding to a resource pair with best quality) and two groups of single channel measurement results (for example, a measurement result that corresponds to a channel measurement resource with best quality and that is determined in each of the two groups of channel measurement resources). The joint channel measurement result may be understood as a result of joint channel measurement, and the single channel measurement result may be understood as a result of single channel measurement.

The second mode may be to report Y groups of joint channel measurement results and X groups of single channel measurement results. A value of Y may be 1 by default or a value configured by the radio access network device, for example, 0 or 1. This is not limited herein. Whether to report the single channel measurement result and a quantity of groups of to-be-reported single channel measurement results depend on a value of X. The value of X may be configured by the radio access network device. The value of X may be 0, 1, 2, or another value. When X is 0, it indicates that the single channel measurement result does not need to be reported. When X is 1, it indicates that one group of single channel measurement results needs to be reported. When X is 2, it indicates that two groups of single channel measurement results need to be reported, that is, two groups of measurement results in single channel measurement results corresponding to at least two groups of channel measurement resources are to be reported, and channel measurement resources corresponding to the two groups of single channel measurement results respectively belong to two groups of different channel measurement resources. An upper limit value of X is reported by the terminal device to the radio access network device. The upper limit value of X may be reported by the terminal device to the radio access network device in a process in which the terminal device reports capability information. The upper limit value of X may be determined by the terminal device based on capability information of the terminal device.

In one case, when the reporting mode includes only the first mode and the second mode, the radio access network device may configure two options for the fourth indication information, that is, the fourth indication information may include the two options. When the reporting mode is the first mode, the radio access network device may set the fourth indication information to a first option. When the reporting mode is the second mode, the radio access network device may set the fourth indication information to a second option.

In another case, the reporting mode may further include a third mode, and the third mode may be to report only a single channel measurement result. When the reporting mode is the third mode, the radio access network device configures only one group of channel measurement resources for the terminal device, and the terminal device only needs to perform single channel measurement. The radio access network device may configure three options for the fourth indication information, that is, the fourth indication information may include the three options. When the reporting mode is the first mode, the radio access network device may set the fourth indication information to a first option. When the reporting mode is the second mode, the radio access network device may set the fourth indication information to a second option. When the reporting mode is the third mode, the radio access network device may set the fourth indication information to a third option.

The first configuration information may further include first reporting configuration information. The first reporting configuration information may include parameters such as cqi-FormatIndicator, pmi-FormatIndicator, csi-ReportingBand, codebookConfig, CQI-table, non-PMI-PortIndication, subbandSize, and aperiodicTriggeringOffset. In the original standard, these parameters are parameters used for single channel measurement. When the measurement manner is joint channel measurement, if these parameters in the first reporting configuration information need to be retained, meanings and quantities of these parameters need to be redesigned.

In one case, for any one of these parameters, it may be specified that a value of this parameter is applicable to joint channel measurement, that is, is applicable to channel measurement of at least two groups of channel measurement resources. For example, when a value of cqi-FormatIndicator is configured as a wideband CQI, a wideband is used for CQIs in measurement results corresponding to the at least two groups of channel measurement resources.

In another case, for any one of these parameters, at least one same parameter may be added, that is, a quantity of each parameter is increased to at least two, and each of the at least two parameters may correspond to channel measurement of one TRP, or each of the at least two parameters may correspond to channel measurement of one of the at least two groups of channel measurement resources.

The radio access network device may explicitly indicate a measurement manner or may implicitly indicate a measurement manner.

When the plurality of channel measurement resources correspond to at least one group of channel measurement resources, in one case, the radio access network device may indicate the measurement manner by using the first indication information, that is, the first indication information may further indicate the measurement manner. For example, when $N_1$ is 0, the first indication information may indicate that the measurement manner is single channel measurement. When $N_1$ is greater than 0, the first indication information may indicate that the measurement manner is joint channel measurement. In this case, $N_1$ needs to be less than N. For another example, when $N_1$ is 0 or N, the first indication information may indicate that the measurement manner is single channel measurement. When $N_1$ is greater than 0 and less than N, the first indication information may indicate that the measurement manner is joint channel measurement. For another example, when $N_2$ is 0 or N, the first indication information may indicate that the measurement manner is single channel measurement. When $N_2$ is greater than 0 and less than N, the first indication information may indicate that the measurement manner is joint channel measurement.

In another case, the radio access network device may indicate the measurement manner by using a quantity of channel measurement resource subsets. When the first configuration information includes one channel measurement resource subset, it may indicate that the measurement manner is single channel measurement. When the first configuration information includes a plurality of channel measurement resource subsets, it may indicate that the measurement manner is joint channel measurement.

In still another case, the radio access network device may indicate the measurement manner by using a quantity of groups of channel measurement resources. When B is 1, or the first configuration information does not include a quantity of groups of channel measurement resources (or information about a quantity of groups), it may indicate that the measurement manner is single channel measurement. When B is greater than 1, it may indicate that the measurement manner is joint channel measurement.

In still another case, the radio access network device may indicate, by using one parameter, whether the channel measurement resource set includes at least two groups of channel measurement resources. The first configuration information may include this parameter. For example, when the plurality of channel measurement resources correspond to two groups of channel measurement resources, this parameter may indicate whether the channel measurement resource set includes the second group of channel measurement resources (a channel measurement resource/channel measurement resource group of a second TRP). For example, when this parameter is 1, it may indicate that the measurement manner is joint channel measurement. When this parameter is 0 or is not configured, it may indicate that the measurement manner is single channel measurement. For another example, when this parameter is 0, it may indicate that the measurement manner is joint channel measurement. When this parameter is 1 or is not configured, it may indicate that the measurement manner is single channel measurement.

In still another case, the radio access network device may configure the measurement manner by using one parameter. This parameter may include at least two options. When the measurement manner is single channel measurement, the radio access network device may set this parameter to a first option. When the measurement manner is joint channel measurement, the radio access network device may set this parameter to a second option. This parameter may alternatively include one option. When the measurement manner is joint channel measurement, the radio access network device may configure this parameter. When the measurement manner is single channel measurement, the radio access network device may not configure this parameter.

In still another case, the radio access network device may indicate the measurement manner by using the first reporting configuration information. When the measurement manner is joint channel measurement, the radio access network device may configure that the first configuration information includes a plurality of (that is, two or more) first parameters. That is, when the plurality of (that is, two or more) first parameters are included, it indicates that joint channel measurement is performed. When the measurement manner is single channel measurement, the radio access network device may configure that the first configuration information includes one first parameter. That is, when a single first parameter is included, it indicates that single channel measurement is performed. The first parameter may include one or more of the following: cqi-FormatIndicator, pmi-FormatIndicator, csi-ReportingBand, codebookConfig, CQI-table, non-PMI-PortIndication, subbandSize, and aperiodicTriggeringOffset.

In still another case, the radio access network device may indicate the measurement manner by using a reporting quantity (reportQuantity) parameter. When the measurement manner is joint channel measurement, the radio access network device may set a value of the parameter reportQuantity to one or some special values. When the measurement manner is single channel measurement, the radio access network device may set a value of the parameter reportQuantity to a value other than the foregoing values. One or some of the foregoing special values may be values used exclusively for joint channel measurement. When the measurement manner is single channel measurement, the radio access network device does not set the value of the parameter reportQuantity to these values.

In still another case, when the measurement manner is joint channel measurement, the radio access network device may set one or more of the second indication information, the third indication information, and the fourth indication information.

The radio access network device may configure an interference measurement resource for the terminal device, to perform interference measurement. The first configuration information may further include at least one interference measurement resource.

Each channel measurement resource that needs to be measured may correspond to one interference measurement resource. Each resource pair (or resource combination) that needs to be measured may correspond to one interference measurement resource, or each resource pair (or resource combination) that needs to be measured may correspond to C interference measurement resources. C is a quantity of channel measurement resources included in the resource pair (or resource combination), and the C channel measurement resources included in the resource pair (or resource combination) are in a one-to-one correspondence with the C interference measurement resources.

In one case, the radio access network device may determine a quantity of interference measurement resources based on a quantity of channel measurement resources that need to be measured and a quantity of resource pairs (or a quantity of resource combinations) that need to be measured. The radio access network device may determine a quantity of channel measurement resources used for single channel measurement. The radio access network device may further determine a quantity of resource pairs (or a quantity of resource combinations) that need to be measured. Then, the radio access network device may determine, as the quantity of interference measurement resources, a sum of the quantity of channel measurement resources used for single channel measurement and the quantity of resource pairs (or the quantity of resource combinations) that need to be measured. The first configuration information may further include interference measurement resources whose quantity is the quantity of interference measurement resources. The channel measurement resources used for single channel measurement and the resource pairs (or resource combinations) that need to be measured are in a one-to-one correspondence with the interference measurement resources, that is, the channel measurement resources used for single channel measurement are in a one-to-one correspondence with some interference measurement resources, and the resource pairs (or resource combinations) that need to be measured are in a one-to-one correspondence with the other interference measurement resources.

For example, when the first configuration information includes the second indication information and the third indication information, the radio access network device may determine a quantity Q of channel measurement resources included in the first resource. The radio access network device may further determine a quantity P of resource pairs included in the second resource pair. Then, the radio access network device may determine Q+P as the quantity of interference measurement resources. In this case, the first configuration information may further include the Q+P interference measurement resources. The Q+P interference measurement resources are in a one-to-one correspondence with the Q channel measurement resources and the P resource pairs (or resource combinations). For example, first Q interference measurement resources in the Q+P interference measurement resources may be in a one-to-one correspondence with the Q channel measurement resources included in the first resource, and last P interference measurement resources (that is, remaining P interference measurement resources) in the Q+P interference measurement resources may be in a one-to-one correspondence with the P resource pairs included in the second resource pair. For another example, first P interference measurement resources in the Q+P interference measurement resources may be in a one-to-one correspondence with the P resource pairs included in the second resource pair, and last Q interference measurement resources in the Q+P interference measurement resources may be in a one-to-one correspondence with the Q channel measurement resources included in the first resource.

In another case, the radio access network device may determine a quantity of interference measurement resources based on a quantity of configured channel measurement resources and a quantity of configured resource pairs (or a quantity of configured resource combinations). The radio access network device may determine a quantity of channel measurement resources included in the plurality of channel measurement resources, that is, the quantity of channel measurement resources. The radio access network device may further determine a quantity of all resource pairs (or a quantity of all resource combinations) including at least two groups of channel measurement resources corresponding to the plurality of channel measurement resources, that is, the quantity of all the resource pairs (or the quantity of all the resource combinations). Then, the radio access network device may determine, as the quantity of interference measurement resources, a sum of the quantity of channel measurement resources included in the plurality of channel measurement resources and the quantity of all the resource pairs (or the quantity of all the resource combinations). The first configuration information may further include interference measurement resources whose quantity is the quantity of interference measurement resources. The plurality of channel measurement resources and all resource pairs (or all resource combinations) are in a one-to-one correspondence with the interference measurement resources, that is, the plurality of channel measurement resources are in a one-to-one correspondence with some interference measurement resources, and all the resource pairs (or all the resource combinations) are in a one-to-one correspondence with the other interference measurement resources.

For example, the channel measurement resource set is {1, 2, 3, 4, 5}, and the channel measurement resources 1, 2, 3, 4, and 5 correspond to the first group of channel measurement resources { 1, 2, 3} and the second group of channel measurement resources {4, 5}. The radio access network device may determine a quantity 5 of channel measurement resources included in the channel measurement resource set. The radio access network device may further determine a quantity 6 of resource pairs including the first group of channel measurement resources { 1, 2, 3} and the second group of channel measurement resources {4, 5}. Then, the radio access network device may determine that the quantity of interference measurement resources (that is, the quantity of interference measurement resources) is 11 (that is, 5+6). The radio access network device may configure 11 interference measurement resources for the terminal device, that is, the first configuration information may include the 11 interference measurement resources. The channel measurement resources 1, 2, 3, 4, and 5 are in a one-to-one correspondence with five interference measurement resources in the 11 interference measurement resources, which may be first five interference measurement resources in the 11 interference measurement resources, last five interference measurement resources in the 11 interference measurement resources, or five interference measurement resources in the 11 interference measurement resources that are determined in another manner. The six resource pairs including the two groups of channel measurement resources are in a one-to-one correspondence with five interference measurement resources in the 11 interference measurement resources, which may be first six interference measurement resources in the 11 interference measurement resources, last six interference measurement resources in the 11 interference measurement resources, or six interference measurement resources in the 11 interference measurement resources that are determined in another manner.

Each channel measurement resource that needs to be measured may correspond to one interference measurement resource, and each channel measurement resource in each resource pair (or resource combination) that needs to be measured may correspond to one interference measurement resource. It should be understood that a same interference measurement resource does not exist in the interference measurement resources, that is, an interference measurement resource corresponding to a channel measurement resource used for single channel measurement is different from an interference measurement resource corresponding to a channel measurement resource used for joint channel measurement.

In one case, the radio access network device may determine a quantity of channel measurement resources used for single channel measurement. The radio access network device may further determine a quantity of resource pairs (or a quantity of resource combinations) that need to be measured. The radio access network device may multiply a quantity of resource pairs (or resource combinations) that need to be measured by C, then perform summation with the quantity of channel measurement resources used for single channel measurement, and determine a summation result as the quantity of interference measurement resources. C is equal to the quantity of channel measurement resources included in the resource pair (or resource combination). For example, C=2 when the plurality of channel measurement resources correspond to two groups of channel measurement resources. C=3 when the plurality of channel measurement resources correspond to three groups of channel measurement resources. The first configuration information may further include interference measurement resources whose quantity is the quantity of interference measurement resources. A channel measurement resource used for single channel measurement is in a one-to-one correspondence with an interference measurement resource. Each resource pair (or resource combination) that needs to be measured corresponds to C interference measurement resources, and C channel measurement resources in the resource pair (or resource combination) are in a one-to-one correspondence with the C interference measurement resources. A correspondence between each resource pair (or resource combination) and a plurality of interference measurement resources corresponding to the resource pair (or resource combination) may be determined based on a configuration sequence of the plurality of interference measurement resources. For example, a $1^{st}$ resource pair corresponds to a $1^{st}$ interference measurement resource and a $2^{nd}$ interference measurement resource in the plurality of interference measurement resources, a $2^{nd}$ resource pair corresponds to a $3^{rd}$ interference measurement resource and a $4^{th}$ interference measurement resource in the plurality of interference measurement resources, ..., and the like.

For example, when the first configuration information includes the second indication information and the third indication information, the radio access network device may determine a quantity Q of channel measurement resources included in the first resource. The radio access network device may further determine a quantity P of resource pairs included in the second resource pair. Then, the radio access network device may determine Q+2*P as a quantity of interference measurement resources. In this case, the first configuration information may further include the Q+2*P interference measurement resources. The Q+2*P interference measurement resources are in a one-to-one correspondence with the Q channel measurement resources and 2*P channel measurement resources included in the P resource pairs (or resource combinations). For example, first Q interference measurement resources in the Q+2*P interference measurement resources may be in a one-to-one correspondence with the Q channel measurement resources included in the first resource, and last 2*P interference measurement resources (that is, remaining 2*P interference measurement resources) in the Q+2*P interference measurement resources may be in a one-to-one correspondence with P resource pairs included in the second resource pair, that is, are in a one-to-one correspondence with 2*P channel measurement resources in the P resource pairs included in the second resource pair. For another example, first 2*P interference measurement resources in the Q+2*P interference measurement resources may be in a one-to-one correspondence with P resource pairs included in the second resource pair, that is, are in a one-to-one correspondence with 2*P channel measurement resources in the P resource pairs included in the second resource pair. Last Q interference measurement resources in the Q+2*P interference measurement resources may be in a one-to-one correspondence with the Q channel measurement resources included in the first resource.

In another case, the radio access network device may determine a quantity of channel measurement resources included in the plurality of channel measurement resources. The radio access network device may further determine a quantity of all resource pairs (or a quantity of all resource combinations) including at least two groups of channel measurement resources corresponding to the plurality of channel measurement resources. The radio access network device may multiply the quantity of all the resource pairs (or the quantity of all the resource combinations) by C, then perform summation with the quantity of channel measurement resources, and determine a summation result as the quantity of interference measurement resources. The first configuration information may further include interference measurement resources whose quantity is the quantity of interference measurement resources. Each channel measurement resource is in a one-to-one correspondence with an interference measurement resource. Each resource pair (or resource combination) corresponds to C interference measurement resources, and C channel measurement resources in the resource pair (or resource combination) are in a one-to-one correspondence with the C interference measurement resources. For other detailed descriptions, refer to the foregoing related descriptions.

For example, the channel measurement resource set is {1, 2, 3, 4, 5}, and the channel measurement resources 1, 2, 3, 4, and 5 correspond to the first group of channel measurement resources { 1, 2, 3} and the second group of channel measurement resources {4, 5}. The radio access network device may determine a quantity 5 of channel measurement resources included in the channel measurement resource set. The radio access network device may further determine a quantity 6 of resource pairs including the first group of channel measurement resources { 1, 2, 3} and the second group of channel measurement resources {4, 5}. Then, the radio access network device may determine that the quantity of interference measurement resources is 17 (that is, 5+2*6). The radio access network device may configure 17 interference measurement resources for the terminal device, that is, the first configuration information may include the 17 interference measurement resources. The channel measurement resources 1, 2, 3, 4, and 5 are in a one-to-one correspondence with five interference measurement resources in the 17 interference measurement resources, which may be first five interference measurement resources in the 17 interference measurement resources, last five interference measurement resources in the 17 interference measurement resources, or five interference measurement resources in the 17 interference measurement resources that are determined in another manner. The six resource pairs including the two groups of channel measurement resources correspond to 12 interference measurement resources in the 17 interference measurement resources, which may be first 12 interference measurement resources in the 17 interference measurement resources, last 12 interference measurement resources in the 17 interference measurement resources, or 12 interference measurement resources in the 17 interference measurement resources that are determined in another manner.

It can be learned that one resource pair (or resource combination) may correspond to one interference measurement resource, and interference information of each channel measurement resource in the resource pair may be measured by using the interference measurement resource. One resource pair (or resource combination) may alternatively correspond to C interference measurement resources. The C interference measurement resources are in a one-to-one correspondence with C channel measurement resources in the resource pair, and interference information of each channel measurement resource in the resource pair is measured by using each interference measurement resource. Which of the foregoing two methods is specifically used may be determined by the radio access network device, and then may be configured for the terminal device by using configuration information, or may be determined by the terminal device, and then may be reported by the terminal device to the radio access network device. For example, the terminal device may perform reporting in a process of reporting capability information of the terminal device.

In another case, the radio access network device may determine a channel measurement resource used for single channel measurement and a resource pair (or resource combination) used for joint channel measurement. It is assumed that the channel measurement resources used for single channel measurement and channel measurement resources included in the resource pairs (or resource combinations) used for joint channel measurement include a total of D different channel measurement resources. The radio access network device needs to configure D interference measurement resources, where the D channel measurement resources are in a one-to-one correspondence with the D interference measurement resources.

For example, the channel measurement resource set is {1, 2, 3, 4, 5}, and the channel measurement resources 1, 2, 3, 4, and 5 correspond to the first group of channel measurement resources { 1, 2, 3} and the second group of channel measurement resources {4, 5}. Channel measurement resources used for single channel measurement are channel measurement resources 1, 2, and 4. Resource pairs used for joint channel measurement are resource pairs {1, 4} and {2, 5}. The channel measurement resources used for single channel measurement and channel measurement resources included in the resource pairs used for joint channel measurement include a total of four different channel measurement resources 1, 2, 4, and 5. Therefore, the radio access network device needs to configure four interference measurement resources, which are in a one-to-one correspondence with the four channel measurement resources.

If one channel measurement resource is associated with one interference measurement resource, the terminal device needs to measure the interference measurement resource through a receive beam of the channel measurement resource. If one resource pair (or resource combination) is associated with one interference measurement resource, the terminal device needs to measure the interference measurement resource through receive beams of a plurality of channel measurement resources included in the resource pair, for example, simultaneously measure the interference measurement resource through the receive beams of the plurality of channel measurement resources. If one resource pair (or resource combination) is associated with C interference measurement resources, that is, C channel measurement resources included in the resource pair are in a one-to-one correspondence with the C interference measurement resources, each of the C interference measurement resources is measured through a receive beam of a channel measurement resource associated with the interference measurement resource. Related information of the receive beam of the channel measurement resource is configured in configuration information.

Each channel measurement resource in a resource pair (or resource combination) has a corresponding receive beam. When a resource pair (or resource combination) is measured, each channel measurement resource in the resource pair (or resource combination) needs to be simultaneously received through receive beams corresponding to all channel measurement resources in the resource pair (or resource combination). This measurement manner may be referred to as a resource pair (or resource combination) measurement manner 1. For example, receive beams of a resource pair {1, 2} may be a receive beam 1 and a receive beam 2. When measuring a channel measurement resource 1, the terminal device needs to simultaneously receive and measure, through the receive beam 1 and the receive beam 2, a reference signal corresponding to the channel measurement resource 1. Similarly, when measuring the channel measurement resource 2, the terminal device needs to simultaneously receive and measure, through the receive beam 1 and the receive beam 2, a reference signal corresponding to the channel measurement resource 2.

When a resource pair (or resource combination) is measured, any channel measurement resource in the resource pair (or resource combination) may be measured through only a receive beam corresponding to the channel measurement resource, that is, the channel measurement resource is measured without a receive beam of another channel measurement resource in the resource pair (or resource combination). This measurement manner may be referred to as a resource pair (or resource combination) measurement manner 2.

Which of the resource pair (or resource combination) measurement manner 1 and the resource pair (or resource combination) measurement manner 2 is specifically used may be configured by the radio access network device. The network device may configure whether to use the resource pair (or resource combination) measurement manner 1 and whether to use the resource pair (or resource combination) measurement manner 2, or may configure which of the resource pair (or resource combination) measurement manner 1 and the resource pair (or resource combination) measurement manner 2 is used. Which of the resource pair (or resource combination) measurement manner 1 and the resource pair (or resource combination) measurement manner 2 is specifically used may alternatively be reported by the terminal device. For example, the terminal device may perform reporting in a process of reporting capability information of the terminal device. The terminal device may report whether to use the resource pair (or resource combination) measurement manner 1 and whether to use the resource pair (or resource combination) measurement manner 2, or may report which of the resource pair (or resource combination) measurement manner 1 and the resource pair (or resource combination) measurement manner 2 is used.

More generally, the terminal device may report the following information in a process of reporting capability information of the terminal device: whether a plurality of (for example, two) receive beams/spatial reception parameters/quasi-co-location (quasi-co-location, QCL) assumptions are supported to receive/measure one measurement resource/channel. Still further, the terminal device may report the following information in a process of reporting capability information of the terminal device: whether a plurality of (for example, two) receive beams/spatial reception parameters/QCL assumptions on receive antenna panels of a plurality of terminal devices are supported to receive/measure one measurement resource/channel.

The receive beam may be expressed as a spatial reception parameter or a QCL assumption, or may be expressed as a QCL assumption of a type (type) D. Receiving an interference measurement resource by using a receive beam/spatial reception parameter/QCL assumption of a channel measurement resource is equivalent to assuming, by the terminal device, that there is a QCL relationship between the interference measurement resource and the channel measurement resource, for example, a QCL relationship of a type typeD. Receiving an interference measurement resource by using receive beams/spatial reception parameters/QCL assumptions of a plurality of channel measurement resources is equivalent to assuming, by the terminal device, that there is a QCL relationship between the interference measurement resource and the plurality of channel measurement resources, for example, a QCL relationship of a type typeD.

It should be understood that an interference measurement resource corresponding to a channel measurement resource or a resource pair (or resource combination) may be configured by the radio access network device and the terminal device by default, or may be indicated by the radio access network device to the terminal device.

It should be understood that the channel measurement resource used for single channel measurement may be all channel measurement resources in the plurality of channel measurement resources, or may be some channel measurement resources in the plurality of channel measurement resources. The channel measurement resource used for single channel measurement, the channel measurement resource that needs to be measured, the channel measurement resource on which single channel measurement needs to be performed, and the first resource may be replaced with each other.

Similarly, the resource combination (or resource pair) on which joint channel measurement needs to be performed may be all resource combinations (or all resource pairs) including at least two groups of channel measurement resources corresponding to the plurality of channel measurement resources, or may be some resource combinations (or some resource pairs) including at least two groups of channel measurement resources corresponding to the plurality of channel measurement resources. The resource pair (or resource combination) on which joint channel measurement needs to be performed, the resource pair (or resource combination) on which measurement needs to be performed, and the second resource pair (or resource combination) may be replaced with each other.

It should be understood that a type of the interference measurement resource may be an NZP CSI-RS resource, a CSI-IM resource, or another type of interference measurement resource.

402: The terminal device performs channel measurement based on the plurality of channel measurement resources to obtain a first measurement result.

After receiving the first configuration information from the radio access network device, the terminal device may determine the plurality of channel measurement resources and the corresponding interference measurement resources based on the first configuration information, and perform single channel measurement and/or joint channel measurement based on a correspondence and a QCL relationship between the channel measurement resource and the interference measurement resource to obtain the first measurement result. The first measurement result may be a measurement result that needs to be reported in all measurement results obtained by the terminal device through measurement.

The terminal device may further determine, based on the first configuration information, the measurement manner corresponding to the first configuration information. When the measurement manner is single channel measurement, the terminal device may separately measure some or all of the plurality of determined channel measurement resources, to obtain all measurement results. In this case, all the measurement results include only a single channel measurement result, and a quantity of single channel measurement results is a quantity of channel measurement resources that are separately measured.

When the measurement manner is joint channel measurement, the terminal device may first determine a resource combination (or resource pair) that needs to be measured, and then may perform joint measurement on the resource combination (or resource pair) that needs to be measured. The measurement result of the terminal device may include at least one group of joint channel measurement results, and each resource combination (or resource pair) may correspond to one group of joint channel measurement results. In addition to performing joint channel measurement, the terminal device may further perform single channel measurement, which may be performing single channel measurement on some or all channel measurement resources in at least one of the at least two groups of channel measurement resources, or may be performing single channel measurement on some or all channel measurement resources in each of the at least two groups of channel measurement resources. In this case, the measurement result of the terminal device may further include at least one group of single channel measurement results.

The terminal device may first determine the channel measurement resource set included in the first configuration information, then may determine the plurality of channel measurement resources included in the channel measurement resource set, and may further determine the at least one group of channel measurement resources corresponding to the plurality of channel measurement resources.

In one case, the first configuration information may include the first indication information. When the first indication information is $N_1$ or information about $N_1$, the terminal device may first obtain $N_1$ based on the first indication information, then may determine that the first group of channel measurement resources in the two groups of channel measurement resources includes $N_1$ channel measurement resources in the plurality of channel measurement resources, and may determine that the second group of channel measurement resources in the two groups of channel measurement resources includes a channel measurement resource other than the $N_1$ channel measurement resources in the plurality of channel measurement resources. When the first indication information includes $N_1$ and $N_2$, or information about $N_1$ and information about $N_2$, the terminal device may first determine or obtain $N_1$ and $N_2$ based on the first indication information, then may determine that the first group of channel measurement resources in the two groups of channel measurement resources includes $N_1$ channel measurement resources in the plurality of channel measurement resources, and may determine that the second group of channel measurement resources in the two groups of channel measurement resources includes $N_2$ channel measurement resources other than the $N_1$ channel measurement resources in the plurality of channel measurement resources. The $N_1$ channel measurement resources may be first $N_1$ channel measurement resources in the plurality of channel measurement resources, last $N_1$ channel measurement resources in the plurality of channel measurement resources, or $N_1$ channel measurement resources selected in another manner from the plurality of channel measurement resources. This is not limited herein.

When $N_1$ is 0 or N, the plurality of channel measurement resources correspond to one group of channel measurement resources. When $N_1$ is not 0 or N, the plurality of channel measurement resources correspond to two groups of channel measurement resources. After determining or obtaining $N_1$ (and $N_2$) based on the first indication information, the terminal device may first determine whether $N_1$ is 0 or N. When the terminal device determines that $N_1$ is 0 or N, it indicates that the plurality of channel measurement resources correspond to one group of channel measurement resources. In this case, the terminal device may directly determine the plurality of channel measurement resources as the group of channel measurement resources. When the terminal device determines that $N_1$ is not 0 or N, it indicates that the plurality of channel measurement resources correspond to two groups of channel measurement resources. In this case, the terminal device may determine the two groups of channel measurement resources based on $N_1$ and the plurality of channel measurement resources. The terminal device may determine the two groups of channel measurement resources based on a configuration sequence of the plurality of channel measurement resources or a reverse sequence of the configuration sequence. For example, the terminal device may determine first $N_1$ channel measurement resources in the plurality of channel measurement resources as the first group of channel measurement resources, and may determine remaining channel measurement resources in the plurality of channel measurement resources as the second group of channel measurement resources. For another example, the terminal device may determine last $N_1$ channel measurement resources in the plurality of channel measurement resources as the first group of channel measurement resources, and may determine remaining channel measurement resources in the plurality of channel measurement resources as the second group of channel measurement resources.

When the first indication information includes $N_1$, $N_2$, ..., and $N_{A-1}$ or information about $N_1$, $N_2$, ..., and $N_{A-1}$ (or $N_1$, $N_2$, ..., $N_{A-1}$, and $N_A$ or information about $N_1$, $N_2$, ..., $N_{A-1}$, and $N_A$), the terminal device may first determine or obtain $N_1$, $N_2$, ..., and $N_{A-1}$ (or $N_1$, $N_2$, ..., $N_{A-1}$, and $N_A$) based on the first indication information, and then may determine A groups of channel measurement resources based on $N_1$, $N_2$, ..., and $N_{A-1}$ (or $N_1$, $N_2$, ..., $N_{A-1}$, and $N_A$) and the plurality of channel measurement resources. The terminal device may determine the A groups of channel measurement resources based on a configuration sequence of the plurality of channel measurement resources or a reverse sequence of the configuration sequence. For example, the plurality of channel measurement resources are resources 1, 2, 3, 4, 5, and 6, and A is 3. When $N_1$, $N_2$, and $N_3$ are all 2, the terminal device may determine the channel measurement resources 1 and 2 as a first group of channel measurement resources, may determine the channel measurement resources 3 and 4 as a second group of channel measurement resources, and may determine the channel measurement resources 5 and 6 as a third group of channel measurement resources. Alternatively, the terminal device may determine the channel measurement resources 5 and 6 as a first group of channel measurement resources, may determine the channel measurement resources 3 and 4 as a second group of channel measurement resources, and may determine the channel measurement resources 1 and 2 as a third group of channel measurement resources.

It should be understood that, when the first indication information includes a plurality of values or information about the plurality of values, none of the plurality of values can be 0 or N, to make the first indication information valid indication information.

In another case, the terminal device may first determine the channel measurement resource subset included in the first configuration information, and then may determine each channel measurement resource subset as one group of channel measurement resources. When the first configuration information includes one channel measurement resource subset, the terminal device may determine one group of channel measurement resources. When the first configuration information includes two channel measurement resource subsets, the terminal device may determine two groups of channel measurement resources. When the first configuration information includes A channel measurement resource subsets, the terminal device may determine A groups of channel measurement resources. The terminal device may determine each group of channel measurement resources based on a configuration sequence of the channel measurement resource subsets or a reverse sequence of the configuration sequence. For example, when the first configuration information includes two channel measurement resource subsets, the terminal device may determine a first channel measurement resource subset as the first group of channel measurement resources, and may determine a second channel measurement resource subset as the second group of channel measurement resources. For another example, the terminal device may determine a second channel measurement resource subset as the first group of channel measurement resources, and may determine a first channel measurement resource subset as the second group of channel measurement resources.

In still another case, the terminal device may determine or obtain, based on the first configuration information, a first index corresponding to each of the plurality of channel measurement resources, then may group the plurality of channel measurement resources based on index values of the first index corresponding to the channel measurement resources, and may group channel measurement resources corresponding to a same index value into a same group of channel measurement resources. When all of the plurality of channel measurement resources correspond to a same index value, the terminal device may determine a group of channel measurement resources, that is, group all of the plurality of channel measurement resources into a same group of channel measurement resources. When the plurality of channel measurement resources correspond to two index values, the terminal device may determine two groups of channel measurement resources. When the plurality of channel measurement resources correspond to A index values, the terminal device may determine A groups of channel measurement resources. The terminal device may determine each group of measurement resources in descending order of index values or in ascending order of index values. For example, when the plurality of channel measurement resources correspond to two index values, the terminal device may determine a channel measurement resource corresponding to a small index value as the first group of channel measurement resources, and determine a channel measurement resource corresponding to a large index value as the second group of channel measurement resources. For another example, when the plurality of channel measurement resources correspond to two index values, the terminal device may determine a channel measurement resource corresponding to a large index value as the first group of channel measurement resources, and determine a channel measurement resource corresponding to a small index value as the second group of channel measurement resources.

In still another case, when the terminal device and the radio access network device configure one group of channel measurement resources by default, or the radio access network device indicates to the terminal device in advance that one group of channel measurement resources is configured, or a value of P is 1, the terminal device may obtain one group of channel measurement resources based on the plurality of channel measurement resources.

When the terminal device and the radio access network device configure two groups of channel measurement resources by default, or the radio access network device indicates to the terminal device in advance that two groups of channel measurement resources are configured, or a value of P is 2, the terminal device may evenly group the plurality of channel measurement resources into two groups of channel measurement resources. The terminal device may perform grouping based on an arrangement sequence of channel measurement resources. In this case, the terminal device may determine the first half of channel measurement resources in the plurality of channel measurement resources as the first group of channel measurement resources, and may determine the second half of channel measurement resources in the plurality of channel measurement resources as the second group of channel measurement resources, to obtain the two groups of channel measurement resources, and vice versa. Alternatively, the terminal device may perform grouping based on parity of the channel measurement resources. In this case, the terminal device may determine, as the first group of channel measurement resources based on the sequence, a channel measurement resource whose ranking is an odd number in the plurality of channel measurement resources, and may determine, as the second group of channel measurement resources based on the sequence, a channel measurement resource whose ranking is an even number in the plurality of channel measurement resources, to obtain the two groups of channel measurement resources, and vice versa. When a resource quantity of the plurality of channel measurement resources is an even number, quantities of channel measurement resources included in the two groups of channel measurement resources are the same. When a resource quantity of the plurality of channel measurement resources is an odd number, a channel measurement resource included in a group of channel measurement resources corresponding to the first half of the channel measurement resources may include one channel measurement resource more than a channel measurement resource included in a group of channel measurement resources corresponding to the second half of the channel measurement resources, or a channel measurement resource included in a group of channel measurement resources corresponding to the last half of the channel measurement resources may include one channel measurement resource more than a channel measurement resource included in a group of channel measurement resources corresponding to the first half of the channel measurement resources.

When the terminal device and the radio access network device configure A groups of channel measurement resources by default, or the radio access network device indicates to the terminal device in advance that A groups of channel measurement resources are configured, or a value of P is A, the terminal device may evenly group the plurality of channel measurement resources into A groups of channel measurement resources. When a quantity of channel measurement resources in the plurality of channel measurement resources can be an integer A, quantities of channel measurement resources included in the A groups of channel measurement resources are the same. When a quantity of channel measurement resources in the plurality of channel measurement resources cannot be an integer A, a channel measurement resource included in some groups of channel measurement resources in the A groups of channel measurement resources may include one channel measurement resource more than a channel measurement resource included in the other groups of channel measurement resources in the A groups of channel measurement resources. The terminal device may perform grouping based on a sequence of channel measurement resources, or may perform grouping in another manner. For example, assuming that the plurality of channel measurement resources are resources 1, 2, 3, 4, and 5, and A is 3, the channel measurement resources 1 and 4 may be grouped into a group, the channel measurement resources 2 and 5 may be grouped into a group, and the channel measurement resource 3 may be grouped into a group.

The terminal device may determine, based on the first configuration information, the measurement manner corresponding to the first configuration information as follows:

In one case, the terminal device may determine the measurement manner based on the first indication information. After determining $N_1$ based on the first indication information, the terminal device may first determine whether $N_1$ is 0 or N. When determining that $N_1$ is 0 or N, the terminal device may determine that the measurement manner is single channel measurement. When determining that $N_1$ is not 0 or N, the terminal device may determine that the measurement manner is joint channel measurement.

In another case, the terminal device may determine the measurement manner based on a quantity of channel measurement resource subsets included in the first configuration information. After determining the channel measurement resource subset included in the first configuration information, the terminal device may determine whether the quantity of resource subsets is greater than 1. When determining that the quantity of channel measurement resource subsets is greater than 1, the terminal device may determine that the measurement manner is joint channel measurement. When determining that the quantity of channel measurement resource subsets is equal to 1, the terminal device may determine that the measurement manner is single channel measurement.

In still another case, the terminal device may first determine whether the first configuration information includes a quantity B of groups of channel measurement resources or information about B. When determining that the first configuration information includes the quantity B of groups of channel measurement resources or the information about B, the terminal device may continue to determine whether B is greater than 1. When determining that B is greater than 1, the terminal device may determine that the measurement manner is joint channel measurement. When determining that B is equal to 1, or when determining that the first configuration information does not include the quantity B of groups of channel measurement resources or the information about B, the terminal device may determine that the measurement manner is single channel measurement.

In still another case, the terminal device may first determine whether the first configuration information includes a parameter, where the parameter may indicate whether the channel measurement resource set includes at least two groups of channel measurement resources. When determining that the first configuration information includes the parameter, the terminal device may continue to determine whether a value of the parameter is a preset value. When determining that the value of the parameter is the preset value, the terminal device may determine that the measurement manner is joint channel measurement. When determining that the first configuration information does not include the parameter, or the value of the parameter is not the preset value, the terminal device may determine that the measurement manner is single channel measurement. The preset value may be 0, 1, or another value. This is not limited herein.

In still another case, the terminal device may first determine whether the first configuration information includes a parameter, where the parameter may indicate the measurement manner. When determining that the first configuration information includes the parameter, the terminal device may directly determine that the measurement manner is joint channel measurement, and may continue to identify whether the parameter is a first option or a second option. When identifying that the parameter is the second option, the terminal device may determine that the measurement manner is joint channel measurement. When determining that the first configuration information does not include the parameter, or when identifying that the parameter is the first option, the terminal device may determine that the measurement manner is single channel measurement.

In still another case, the terminal device may first determine included first reporting configuration information based on the first configuration information, and then may determine a quantity of first parameters included in the first reporting configuration information. When the quantity of first parameters is greater than 1, the terminal device may determine that the measurement manner is joint channel measurement. When the quantity of first parameters is equal to 1, the terminal device may determine that the measurement manner is single channel measurement.

In still another case, the terminal device may first determine a reporting quantity (reportQuantity) parameter based on the first configuration information. When a value of the parameter reportQuantity is one or some special values, the terminal device may determine that the measurement manner is joint channel measurement. When the value of the parameter reportQuantity is not the foregoing value, the terminal device may determine that the measurement manner is single channel measurement.

In still another case, after determining a quantity of groups of channel measurement resources corresponding to the plurality of channel measurement resources, the terminal device may determine whether the quantity of groups of channel measurement resources is greater than 1. When determining that the quantity of groups of channel measurement resources is greater than 1, the terminal device may determine that the measurement manner is joint channel measurement. When determining that the quantity of groups of channel measurement resources is equal to 1, the terminal device may determine that the measurement manner is single channel measurement.

The terminal device may further determine a channel measurement resource on which single channel measurement needs to be performed. The terminal device may first determine whether the first configuration information includes second indication information. When determining that the first configuration information does not include the second indication information and the measurement manner is single channel measurement, the terminal device may determine that all channel measurement resources in the plurality of channel measurement resources need to be separately measured.

When determining that the first configuration information does not include the second indication information and the measurement manner is joint channel measurement, the terminal device may determine that all channel measurement resources in the plurality of channel measurement resources need to be separately measured, or may determine that all channel measurement resources in the plurality of channel measurement resources do not need to be separately measured, or may determine that one of the at least two groups of channel measurement resources needs to be separately measured, or may determine another meaning. This is not limited herein. A specific meaning may be determined based on a default configuration between the radio access network device and the terminal device.

When determining that the first configuration information includes the second indication information, the terminal device may determine the first resource based on the second indication information. In one case, the terminal device may determine or obtain M based on the second indication information. When the measurement manner is single channel measurement, the terminal device may determine first M channel measurement resources in the plurality of channel measurement resources as the first resource, or may determine last M channel measurement resources in the plurality of channel measurement resources as the first resource, or may determine any M channel measurement resources in the plurality of channel measurement resources as the first resource, or may determine M channel measurement resources in the plurality of channel measurement resources as the first resource in another manner. This is not limited herein. When the measurement manner is joint channel measurement, the terminal device may determine first M channel measurement resources in each of the at least two groups of channel measurement resources as the first resource, or may determine last M channel measurement resources in each of the at least two groups of channel measurement resources as the first resource, or may determine any M channel measurement resources in each of the at least two groups of channel measurement resources as the first resource, or may determine M channel measurement resources in each of the at least two groups of channel measurement resources as the first resource in another manner. This is not limited herein.

In another case, the terminal device may determine or obtain $M_i$ based on the second indication information, and then may determine first $M_i$ channel measurement resources in an $i^{th}$ group of channel measurement resources as the first resource, or may determine last $M_i$ channel measurement resources in an $i^{th}$ group of channel measurement resources as the first resource, or may determine any $M_i$ channel measurement resources in an $i^{th}$ group of channel measurement resources as the first resource, or may determine $M_i$ channel measurement resources in an $i^{th}$ group of channel measurement resources as the first resource in another manner. This is not limited herein. For detailed descriptions of $M_i$ and i, refer to related descriptions in step 401.

In still another case, the terminal device may determine the first resource based on a value of each bit in the first bitmap. For example, the terminal device may determine, as the first resource, a channel measurement resource that is in the plurality of channel measurement resources and that corresponds to a value 1 of the bit in the first bitmap. For another example, the terminal device may determine, as the first resource, a channel measurement resource that is in the plurality of channel measurement resources and that corresponds to a value 0 of the bit in the first bitmap.

In still another case, the terminal device may determine the first resource based on a value of a bit included in at least two bitmaps. For example, the terminal device may determine, as the first resource, a channel measurement resource that is in the at least two groups of channel measurement resources and that corresponds to a value 1 of the bit in the bitmap. For another example, the terminal device may determine, as the first resource, a channel measurement resource that is in the at least two groups of channel measurement resources and that corresponds to a value 0 of the bit in the bitmap.

When the measurement manner is joint channel measurement, the terminal device may further determine a resource combination (or resource pair) on which joint channel measurement needs to be performed. The terminal device may first determine whether the first configuration information includes third indication information. When determining that the first configuration information does not include the third indication information, the terminal device may determine that all resource combinations (or resource pairs) including at least two groups of channel measurement resources need to be measured.

When determining that the first configuration information includes the third indication information, and the plurality of channel measurement resources correspond to two groups of channel measurement resources, the terminal device may determine a second resource pair based on the third indication information. When determining that the first configuration information includes the third indication information, and the plurality of channel measurement resources correspond to at least three groups of channel measurement resources, the terminal device may determine, based on the third indication information, a resource combination that needs to be measured. The terminal device may determine, based on a second bitmap, a second resource pair or a resource combination that needs to be measured. For example, the terminal device may determine, as the second resource pair (or the resource combination that needs to be measured), a resource pair (or resource combination) that is in all resource pairs (or all resource combinations) and that corresponds to a value 1 of a bit in the second bitmap. For another example, the terminal device may determine, as the second resource pair (or the resource combination that needs to be measured), a resource pair (or resource combination) that is in all resource pairs (or all resource combinations) and that corresponds to a value 0 of a bit in the second bitmap.

In one case, the terminal device may first determine a third bitmap based on the first configuration information, then may determine the first bitmap and the second bitmap based on the third bitmap, may further determine the first resource based on the first bitmap, and may determine the second resource pair (or the resource combination that needs to be measured) based on the second bitmap.

When the first configuration information includes fourth indication information, the terminal device may determine a reporting mode based on the fourth indication information. If the reporting mode includes only a first mode and a second mode, when the fourth indication information is a first option, the terminal device may determine that the reporting mode is the first mode, or when the fourth indication information is a second option, the terminal device may determine that the reporting mode is the second mode. If the reporting mode includes a first mode, a second mode, and a third mode, when the fourth indication information is a first option, the terminal device may determine that the reporting mode is the first mode, or when the fourth indication information is a second option, the terminal device may determine that the reporting mode is the second mode, or when the fourth indication information is a third option, the terminal device may determine that the reporting mode is the third mode.

In addition, the terminal device may determine, based on one or more of the second indication information, the third indication information, and the fourth indication information, that the measurement manner is joint channel measurement. For example, when the first configuration information includes the third indication information, the terminal device may determine that the measurement manner is joint channel measurement. For another example, the first configuration information may include the second indication information only when the measurement manner is joint channel measurement. Therefore, when the first configuration information includes the second indication information, the terminal device may determine that the measurement manner is joint channel measurement. For another example, the first configuration information may include the fourth indication information only when the measurement manner is joint channel measurement. Therefore, when the first configuration information includes the fourth indication information, the terminal device may determine that the measurement manner is joint channel measurement.

When the measurement manner determined by the terminal device is single channel measurement, after determining channel measurement resources on which single channel measurement needs to be performed, the terminal device may separately measure each of these channel measurement resources, to obtain all measurement results. In this case, all the measurement results include only a single channel measurement result, and a quantity of single channel measurement results is the same as a quantity of channel measurement resources that need to be measured, that is, one channel measurement resource that needs to be measured corresponds to one single channel measurement result.

When the measurement manner determined by the terminal device is joint channel measurement, and the plurality of channel measurement resources correspond to at least two groups of channel measurement resources, after determining resource pairs (or resource combinations) on which single channel measurement needs to be performed, the terminal device may perform joint measurement on each resource pair (or resource combination) in these resource pairs (or resource combinations), to obtain at least one group of joint channel measurement results. In this case, all the measurement results may include the at least one group of joint channel measurement results, and a quantity of groups of joint channel measurement results is the same as a quantity of resource pairs (or resource combinations) that need to be measured, that is, one resource pair (or resource combination) that needs to be measured corresponds to one group of joint channel measurement results.

When the measurement manner determined by the terminal device is joint channel measurement, the terminal device further needs to determine whether to perform single channel measurement, and may determine whether a channel measurement resource on which channel measurement (or single channel measurement) needs to be performed exists. When the terminal device determines that the channel measurement resource on which channel measurement needs to be performed exists, it indicates that single channel measurement further needs to be performed. The terminal device may separately measure each channel measurement resource in the determined channel measurement resources on which single channel measurement needs to be performed, to obtain at least one group of single channel measurement results. In this case, all the measurement results may further include the at least one group of single channel measurement results, and a quantity of groups of single channel measurement results may be less than or equal to the quantity of groups of channel measurement resources corresponding to the plurality of channel measurement resources. One group of channel measurement resources corresponds to one group of single channel measurement results. When the terminal device determines that the channel measurement resource on which channel measurement needs to be performed does not exist, it indicates that single channel measurement does not need to be performed. In this case, all the measurement results include only at least one group of joint channel measurement results.

When measuring a third resource pair, the terminal device may simultaneously receive a reference signal on each of two channel measurement resources in the third resource pair through receive beams of the two channel measurement resources. The third resource pair is any resource pair in a resource pair that needs to be measured, for example, may be any resource pair in the second resource pair. The receive beams of the two channel measurement resources in the third resource pair may be one or two receive beams.

It can be learned that when measuring a resource pair, the terminal device needs to simultaneously measure each channel measurement resource through receive beams corresponding to two channel measurement resources in the resource pair. When measuring a first channel measurement resource in a resource pair, the terminal device may use a second channel measurement resource as interference. The terminal device measures interference caused by the second channel measurement resource to the first channel measurement resource, and may receive the second channel measurement resource through a receive beam of the first channel measurement resource. Similarly, when measuring a second measurement channel measurement resource in a resource pair, the terminal device may use a first channel measurement resource as interference. The terminal device measures interference caused by the first channel measurement resource to the second channel measurement resource, and may receive the first channel measurement resource through a receive beam of the second channel measurement resource.

For example, when there is a channel measurement resource pair { 1, 4}, the terminal device needs to simultaneously measure the channel measurement resource 1 through receive beams of the channel measurement resources 1 and 4, and simultaneously measure the channel measurement resource 4 through receive beams of the channel measurement resources 1 and 4.

Channel measurement has specific complexity. A larger quantity of to-be-measured channel measurement resources indicates higher complexity. Complexity of channel measurement may be quantized, and may be quantized by using a CPU. Complexity corresponding to one time of channel measurement may be represented as S CPUs, and a larger value of S indicates higher complexity of channel measurement. A quantity of CPUs indicates a computing capability used by the terminal device to process channel measurement. Each terminal device has a corresponding CPU quantity upper limit. Each channel measurement report occupies some CPUs. When the CPUs are insufficient, the terminal device cannot process more channel measurement requirements. The complexity of channel measurement is related to a quantity of to-be-measured channel measurement resources. When a larger quantity of channel measurement resources are to be measured, a larger quantity of CPUs are to be occupied.

Therefore, before performing channel measurement, the terminal device may first calculate a quantity of CPUs occupied by the measurement, and then may determine whether a quantity of currently idle CPUs of the terminal device is greater than or equal to the quantity of CPUs occupied by the measurement. When the terminal device determines that the quantity of currently idle CPUs of the terminal device is greater than or equal to the quantity of CPUs occupied by the measurement, it may indicate that the CPUs are sufficient, and the terminal device may perform channel measurement. When the terminal device determines that the quantity of currently idle CPUs of the terminal device is less than the quantity of CPUs occupied by the measurement, it may indicate that the CPUs are insufficient, and the terminal device may not perform current channel measurement, or may perform current channel measurement after sufficient CPUs are available.

When the measurement manner is single channel measurement, the quantity of CPUs occupied by the measurement is the quantity of channel measurement resources that need to be measured. When the measurement manner is joint channel measurement, the quantity of CPUs occupied by the measurement may be 2*P, Q+2*P, or Q+k*P. Q is a quantity of channel measurement resources included in the first resource, that is, a quantity of channel measurement resources on which single channel measurement needs to be performed. P is a quantity of resource pairs (or resource combinations) on which joint channel measurement needs to be performed, for example, a quantity of resource pairs included in the second resource pair. k is a constant, and is a value reported by the terminal device or configured by the radio access network device. The value of k may be 0, 1, or 2, or may be a value between 0 and 1. P is an integer greater than or equal to 1, and Q is an integer greater than or equal to 0.

Before performing channel measurement, the terminal device further needs to determine at least one interference measurement resource based on the first configuration information. Then, the terminal device may determine, for each to-be-measured channel measurement resource, an interference measurement resource corresponding to the to-be-measured channel measurement resource. The terminal device may determine, for each to-be-measured resource pair (or each to-be-measured resource combination), an interference measurement resource corresponding to the to-be-measured resource pair. Different to-be-measured channel measurement resources correspond to different interference measurement resources, different to-be-measured resource pairs (or resource combinations) correspond to different interference measurement resources, and an interference measurement resource corresponding to a to-be-measured channel measurement resource is different from an interference measurement resource corresponding to a to-be-measured channel measurement pair (or resource combination), that is, the to-be-measured channel measurement resource is in a one-to-one correspondence with the corresponding interference measurement resource, and the to-be-measured resource pair (or resource combination) may be in a one-to-one correspondence with the corresponding interference measurement resource. For example, the first resource includes channel measurement resources 1, 2, and 3, the second resource pair includes resource pairs {1, 4} and {2, 5}, and interference measurement resources are resources 1, 2, 3, 4, and 5. The channel measurement resources 1, 2, and 3 are in a one-to-one correspondence with the interference measurement resources 1, 2, and 3, and the resource pairs {1, 4} and {2, 5} are in a one-to-one correspondence with the interference measurement resources 4 and 5.

The terminal device may perform single channel measurement based on the channel measurement resource and the corresponding interference channel measurement. A channel measurement resource and interference channel measurement corresponding to the channel measurement resource may be simultaneously or separately measured, but a same receive beam may be used for the channel measurement resource and the interference channel measurement.

The terminal device may perform joint channel measurement based on the resource pair (or resource combination) and the corresponding interference channel measurement. A resource pair (or resource combination) and interference channel measurement corresponding to the resource pair (or resource combination) may be simultaneously measured, and a same receive beam may be used for the resource pair (or resource combination) and the interference channel measurement.

After obtaining measurement results through measurement, the terminal device may select, from the measurement results, a measurement result that needs to be reported, to obtain the first measurement result.

403: The terminal device sends the first measurement result to the radio access network device.

After performing channel measurement based on the plurality of channel measurement resources to obtain the first measurement result, the terminal device sends the first measurement result to the radio access network device.

When the measurement manner is single channel measurement, the first measurement result may include all single channel measurement results, or may include one or more of all single channel measurement results. The one or more single channel measurement results may be a single channel measurement result with best channel quality in all the single channel measurement results, or may be a plurality of single channel measurement results with better channel quality in all the single channel measurement results. The single channel measurement result may include information about a channel measurement resource, an RI, a PMI, a CQI, and an LI. The information about the channel measurement resource may be an index of the channel measurement resource in the plurality of channel measurement resources, an index of a bit corresponding to the channel measurement resource in the first bitmap, or other indication information indicating the channel measurement resource.

When the measurement manner is joint channel measurement, the first measurement result may include only one group of channel measurement results. For example, when the reporting mode is the first mode, the terminal device reports only one group of channel measurement results, where the group of channel measurement results may be a single channel measurement result or a joint channel measurement result. The first measurement result may alternatively include a plurality of groups of channel measurement results. For example, when the reporting mode is the second mode, the terminal device reports Y groups of joint channel measurement results and X groups of single channel measurement results. After determining the reporting mode based on the fourth indication information included in the first configuration information, the terminal device may select the first measurement result from all measurement results based on the reporting mode.

When the reporting mode is the first mode, if the plurality of channel measurement resources correspond to two groups of channel measurement resources, the terminal device may select a group of joint channel measurement results, for example, a joint channel measurement result with best channel quality, from joint channel measurement results corresponding to resource pairs used for joint channel measurement, and may determine a group of single channel measurement results, for example, a single channel measurement result with best channel quality, from single channel measurement results corresponding to each of the two groups of channel measurement resources. Then, the terminal device may select one of the plurality of groups of determined measurement results and report the group of measurement results, for example, a group of measurement results with best quality.

When the reporting mode is the second mode, the terminal device may first determine X and Y, then may select Y groups of joint channel measurement results and X groups of single channel measurement results from all measurement results, and may determine the Y groups of joint channel measurement results and the X groups of single channel measurement results as the first measurement result. The Y groups of joint channel measurement results may be Y groups of joint channel measurement results with best channel quality in at least one group of joint channel measurement results included in all measurement results, any Y groups of joint channel measurement results in at least one group of joint channel measurement results included in all measurement results, or Y groups of joint channel measurement results selected in another manner from at least one group of joint channel measurement results included in all measurement results. The X groups of single channel measurement results may be X groups of single channel measurement results with best channel quality in at least one group of single channel measurement results included in all measurement results, any X groups of single channel measurement results in at least one group of single channel measurement results included in all measurement results, or X groups of joint channel measurement results selected in another manner from at least one group of single channel measurement results included in all measurement results.

When the reporting mode is the third mode, the terminal device may determine all single channel measurement results in all measurement results as the first measurement result, or may determine, as the first measurement result, one or more groups of single channel measurement results with best channel quality in at least one group of single channel measurement results included in all measurement results.

The first measurement result may further include information about a second resource, and the second resource is a to-be-reported channel measurement resource in the first resource, that is, a channel measurement resource that needs to be reported. It may be understood that each of the at least one group of single channel measurement results includes information about a channel measurement resource. The information about the channel measurement resource may be an index of the channel measurement resource.

In one case, the information about the second resource may be a local index of the second resource in the channel measurement resource set. For example, the channel measurement resource set may include channel measurement resources {1, 2, 3, 4, 5}, and corresponding local indexes may be #0, #1, #2, #3, and #4. If the channel measurement resource 3 needs to be reported, the corresponding index #2 is reported.

In another case, the information about the second resource may be a local index of the second resource in a group of channel measurement resources corresponding to the second resource. For example, the channel measurement resource set includes channel measurement resources {1, 2, 3, 4, 5}, a first group of channel measurement resources is { 1, 2, 3}, and a second group of channel measurement resources is {4, 5}. Local indexes of three channel measurement resources in the first group of channel measurement resources { 1, 2, 3 } in the group are #0, #1, and #2, and local indexes of two channel measurement resources in the second group of channel measurement resources {4, 5} in the group are #0 and #1. If the channel measurement resource 3 needs to be reported, the local index #2 is reported. If the channel measurement resource 4 needs to be reported, the local index #0 is reported.

In still another case, the information about the second resource may be a local index of the second resource in a channel measurement resource that belongs to the first resource in the group of channel measurement resources corresponding to the second resource. For example, the channel measurement resource set includes channel measurement resources {1, 2, 3, 4, 5}, a first group of channel measurement resources is {1, 2, 3 1, and a second group of channel measurement resources is {4, 5}. A quantity of channel measurement resources that need to be measured in each group of channel measurement resources is 2, that is, only first two channel measurement resources in each group of channel measurement resources are measured, that is, measured channel measurement resources are resources 1, 2, 4, and 5. The index of the channel measurement resource may be a local index of a channel measurement resource in all channel measurement resources that need to be measured. For example, local indexes corresponding to the channel measurement resources 1, 2, 4, and 5 may be #0, #1, #2, and #3. If the channel measurement resource 1 needs to be reported, the local index #0 is reported. If the channel measurement resource 5 needs to be reported, the local index #3 is reported. The index of the channel measurement resource may alternatively be a local index of a channel measurement resource that needs to be measured in a channel measurement resource group in which the channel measurement resource is located. For example, local indexes corresponding to the resources 1 and 2 are #0 and #1, and local indexes corresponding to the resources 4 and 5 are #0 and #1. If the channel measurement resource 1 needs to be reported, the local index #0 is reported. If the channel measurement resource 5 needs to be reported, the local index #1 is reported. In still another case, the information about the second resource may be an index of a bit corresponding to a second resource in a first bitmap. The index of the bit may be an arrangement location of the bit in the first bitmap. For example, a bit index of a bit ranked the third may be #2. When the plurality of channel measurement resources correspond to two groups of channel measurement resources, the first measurement result may include a joint channel measurement result, the joint channel measurement result is a channel measurement result of a first resource pair, the first resource pair may include one or more resource pairs including two channel measurement resources, the two channel measurement resources respectively belong to the two groups of channel measurement resources, and the joint channel measurement result may include information about the first resource pair. The information about the first resource pair may be an index of a bit corresponding to a first resource pair in a second bitmap. For example, resource pairs {1, 4}, {1, 5}, {2, 4}, {2, 5}, {3, 4}, and {3, 5} correspond to a 6-bit bitmap, bits corresponding to the six resource pairs are respectively a first bit to a sixth bit, and indexes of the corresponding bits are respectively #0, #1, #2, #3, #4, and #5. The information about the first resource pair may alternatively be a local index of the first resource pair in all resource pairs. For example, in the foregoing six resource pairs {1, 4}, {1, 5}, {2, 4}, {2, 5}, {3, 4}, and {3, 5}, local indexes of all the resource pairs are respectively #0, #1, #2, #3, #4, and #5. The information about the first resource pair may alternatively be a local index of the first resource pair in resource pairs that need to be measured, for example, a local index in the second resource pair. For example, in the foregoing six resource pairs {1, 4}, {1, 5}, {2, 4}, {2, 5}, {3, 4}, and {3, 5}, resource pairs that need to be measured are {1, 4} and {2, 5}. If the first resource pair is {1, 4}, a local index corresponding to the first resource pair is #0. If the first resource pair is {2, 5}, a local index corresponding to the first resource pair is #1. The information about the first resource pair may alternatively be an index of a channel measurement resource included in the first resource pair. The second resource pair may include the first resource pair. The first resource pair may be understood as a resource pair that needs to be reported, that is, a resource pair that needs to be reported in the second resource pair.

The first configuration information may include a second index, the second index includes the second indication information and the third indication information, and the second index may include P+Q index values. That is, the second resource and the first resource pair may also be represented by using a same index. For example, there are Q channel measurement resources that need to be measured, and there are P resource pairs that need to be measured. Values of the index are #0, #1, ..., and #(P+Q-1), and there are a total of P+Q index values. Each index value corresponds to one channel measurement resource or resource pair. For example, first Q index values correspond to the foregoing Q channel measurement resources, and last P index values correspond to the foregoing P resource pairs. For another example, first P index values correspond to the foregoing P resource pairs, and last Q index values correspond to the foregoing Q channel measurement resources. In a reporting format, a field length corresponding to the index is

$\lceil log_2(\mathrm{P}+\mathrm{Q}) \rceil$ bits . Index values corresponding to the channel measurement resource and the resource pair are different, and whether the second resource or the first resource pair is reported may be identified by using the reported index values. For example, when the reporting mode is the first mode, the channel measurement result reported by the terminal device may be a single channel measurement result or a joint channel measurement result. A specific type may be determined based on the foregoing index. Optionally, it may be specified that when the reporting mode is the first mode, the second resource and the first resource pair are represented by using the foregoing index. In other words, when the reporting mode is the first mode, the information about the second resource and the information about the first resource pair may be represented by using a same parameter or index. When the reporting mode is another mode, for example, the second mode, the information about the second resource and the information about the first resource pair are reported in another manner. In other words, when the reporting mode is the second mode, the information about the second resource and the information about the first resource pair may be separately represented by using different parameters or indexes. In the foregoing method, P may alternatively be replaced with S, where S is a quantity of configured resource pairs, and Q may be replaced with R, where R is a quantity of configured channel measurement resources.

In different reporting modes, measurement results reported by the terminal device may be different. For example, when the reporting mode is the first mode, the terminal device may report a group of single channel measurement results or a group of joint channel measurement results. When the reporting mode is the second mode, the terminal device reports Y groups of joint measurement results and X groups of single channel measurement results. Reporting formats of these measurement results need to be specified. In this way, the terminal device knows a format in which the measurement result is reported, and the radio access network device knows how to interpret the reported measurement result.

In one case, the terminal device reports one group of channel measurement results. This group of channel measurement results may be single channel measurement results or joint channel measurement results. A specific type may be determined based on a value of an index included in the channel measurement result. For example, according to the foregoing method, when the second resource and the first resource pair may be represented by using a same index, index values corresponding to the second resource and the first resource pair are different, and whether the group of channel measurement results is a single channel measurement result or a joint channel measurement result may be determined by using the index values. In this case, the reporting format can be divided into two parts: a first part and a second part. Various information included in the reported channel measurement result is carried in the two parts. The two parts may be transmitted by using different signaling, or may have different reporting priorities. The following describes content of the first part and the second part in detail. This reporting format may be used when the reporting mode is the first mode.

The first part may include one or more of the following:

First information: The first information may indicate a channel measurement resource or a resource pair, and indicate a channel measurement resource or a resource pair based on which the group of channel measurement results is obtained through measurement. Specifically, the first information may be an index value, and a channel measurement resource or a resource pair may be determined by using the index value.

Fourth information: The fourth information indicates whether the group of channel measurement results is a single channel measurement result corresponding to a channel measurement resource or a joint channel measurement result corresponding to a resource pair.

Fifth information: When the terminal device has determined that the group of channel measurement results is a single channel measurement result (for example, determined by using the fourth information), the fifth information further indicates a channel measurement resource group to which channel measurement resources corresponding to the group of single channel measurement results belong.

Sixth information: The sixth channel is information about a channel measurement resource or a resource pair, for example, index information. If the fourth information indicates that the group of channel measurement results is the single channel measurement result corresponding to the channel measurement resource, the sixth information is information about the channel measurement resource. If the fourth information indicates that the group of channel measurement results is the joint channel measurement result corresponding to the resource pair, the sixth information is information about the resource pair. When the sixth information is the information about the channel measurement resource, a specific form of the sixth information may be several specific forms of the information about the second resource described above. When the sixth information is the information about the resource pair, a specific form of the sixth information may be several specific forms of the information about the first resource pair described above.

One or two pieces of RI information: Specifically, whether there is one or two pieces of RI information may be determined by using the first information. If the first information indicates one channel measurement resource, there is only one piece of RI information. If the first information indicates one resource pair, there are two pieces of RI information. The first measurement result may further include a first field, and the first field indicates an RI. When the first field indicates one RI, a measurement result included in the first measurement result is a single channel measurement result. When the first field indicates an RI combination including two RIs, a measurement result included in the first measurement result is a joint channel measurement result. The foregoing one or two pieces of RI information may alternatively be indicated by using a field. The field has a plurality of field values, some field values correspond to a single piece of RI information, and some field values correspond to two pieces of RI information. The network device may determine an amount of reported RI information and a specific RI value based on the field value reported by the terminal device. For example, a length of the field is 3 bits, and includes eight field values, which correspond to eight pieces of RI information: {1, 2, 3, 4, 1+1, 1+2, 2+1, 2+2}, where reporting 1 indicates that a single RI is reported, and a value of the RI is 1. Similarly, reporting 2, 3, or 4 indicates that a single RI is reported, and a value of the RI is 2, 3, or 4. Reporting 1+1 indicates that two RIs are reported, where a value of a first RI is 1, and a value of a second RI is 1. Similarly, a principle of reporting 1+2, 2+1, or 2+2 is similar to the principle of reporting 1+1. Further, in this case, whether the group of channel measurement results is a single channel measurement result or a joint channel measurement result may be determined based on a quantity of RIs. CQI information of a first codeword: The CQI information may include wideband CQI information and subband CQI information, or may include only wideband CQI information.

The second part may include one or more of the following:

CQI information of a second codeword: The CQI information may include wideband CQI information and subband CQI information, or may include only wideband CQI information.

One or two pieces of LI information: Specifically, whether there is one or two pieces of LI information may be determined by using first information. If the first information indicates one channel measurement resource, there is only one piece of LI information. If the first information indicates one resource pair, there are two pieces of LI information.

One or two pieces of PMI information: Specifically, whether there is one or two pieces of PMI information may be determined by using first information. If the first information indicates one channel measurement resource, there is only one piece of PMI information. If the first information indicates one resource pair, there are two pieces of PMI information. The PMI information may include wideband PMI information and subband PMI information, or may include only wideband information.

The second part can be further divided into two parts: a wideband part and a subband part. In this case, subband information in the second part, such as a subband CQI and a subband PMI, may be carried in the subband part, and other information may be carried in the wideband part. Optionally, a CQI of the first codeword may alternatively be placed in the second part. Alternatively, a subband CQI of the first codeword is placed in the second part, for example, the subband part in the second part.

In another case, the terminal device reports Y groups of joint channel measurement results and X groups of single channel measurement results. A value of Y may be 1 by default, or may be configured by the radio access network device, for example, 0 or 1. A value of X may be configured by the radio access network device, for example, 0, 1, or 2. There are two implementations. In one implementation, each of the foregoing Y+X groups of channel measurement results is separately divided into a first part and a second part. In the other implementation, the foregoing Y+X groups of channel measurement results are combined, and then divided into a first part and a second part. Both methods may be used when the reporting mode is the second mode.

In a first implementation, each of the foregoing Y+X groups of channel measurement results is separately divided into a first part and a second part. The Y+X groups of channel measurement results are sorted in sequence. For example, the X groups of single channel measurement results are ranked before the Y groups of joint channel measurement results. Alternatively, the Y groups of joint channel measurement results are ranked before the X groups of single channel measurement results. The X groups of single channel measurement results may be sorted based on an index sequence or a configuration sequence of channel measurement resources included in the single channel measurement result. A single channel measurement result corresponding to a channel measurement resource with a smaller index or having a higher ranking in the configuration sequence has a higher ranking.

A first part of the single channel measurement result may include one or more of the following:

Second information: The second information may indicate a channel measurement resource, and indicate a channel measurement resource that is measured to obtain the group of channel measurement results. The second information may indicate a channel measurement resource by using the foregoing method for indicating the second resource.

One piece of RI information:

CQI information of a first codeword: The CQI information may include wideband CQI information and subband CQI information, or may include only wideband CQI information.

A second part of the single channel measurement result may include one or more of the following:

CQI information of a second codeword: The CQI information may include wideband CQI information and subband CQI information, or may include only wideband CQI information.

One piece of LI information:

One piece of PMI information: The PMI information may include wideband PMI information and subband PMI information, or may include only wideband information.

The second part can be further divided into two parts: a wideband part and a subband part. In this case, subband information in the second part, such as a subband CQI and a subband PMI, may be carried in the subband part, and other information may be carried in the wideband part.

A first part of the joint channel measurement result may include one or more of the following:

Third information: The third information may indicate a resource pair, and indicate a resource pair that is measured to obtain the group of channel measurement results. The third information may indicate a resource pair by using the foregoing method for indicating the first resource pair.

Two pieces of RI information:

CQI information of a first codeword: The CQI information may include wideband CQI information and subband CQI

information, or may include only wideband CQI information.

A second part of the joint channel measurement result may include one or more of the following:
CQI information of a second codeword: The CQI information may include wideband CQI information and subband CQI information, or may include only wideband CQI information.

Two pieces of LI information:
Two pieces of PMI information: The PMI information may include wideband PMI information and subband PMI information, or may include only wideband information.

The second part can be further divided into two parts: a wideband part and a subband part. In this case, subband information in the second part, such as a subband CQI and a subband PMI, may be carried in the subband part, and other information may be carried in the wideband part. Optionally, a CQI of the first codeword may alternatively be placed in the second part. Alternatively, a subband CQI of the first codeword is placed in the second part, for example, the subband part in the second part.

In a second implementation, the foregoing Y+X groups of channel measurement results may alternatively be combined, and then divided into a first part and a second part.

The first part may include one or more of the following:

Y pieces of third information and X pieces of second information: indicate Y resource pairs and X channel measurement resources;
RI information corresponding to the Y resource pairs: is, for example, 2Y pieces of RI information;
RI information corresponding to the X channel measurement resources: is, for example, X pieces of RI information;
first codeword CQI information corresponding to the Y resource pairs: may include wideband CQI information and subband CQI information, or may include only wideband CQI information; and
first codeword CQI information of the X channel measurement resources: may include wideband CQI information and subband CQI information, or may include only wideband CQI information.

The second part may include one or more of the following:

LI information corresponding to Y resource pairs: is, for example, 2Y pieces of LI information;
LI information corresponding to X channel measurement resources: is, for example, X pieces of LI information;
second codeword CQI information corresponding to the Y resource pairs: may include wideband CQI information and subband CQI information, or may include only wideband CQI information;
second codeword CQI information of the X channel measurement resources: may include wideband CQI information and subband CQI information, or may include only wideband CQI information;
PMI information corresponding to the Y resource pairs: is, for example, 2Y pieces of PMI information, and may include wideband PMI information and subband PMI information, or may include only wideband PMI information; and
PMI information corresponding to the X channel measurement resources: may include wideband PMI information and subband PMI information, or may include only wideband PMI information.

The second part can be further divided into two parts: a wideband part and a subband part. In this case, subband information in the second part, such as a subband CQI and a subband PMI, may be carried in the subband part, and other information may be carried in the wideband part. Optionally, a CQI of the first codeword may alternatively be placed in the second part. Alternatively, a subband CQI of the first codeword is placed in the second part, for example, the subband part in the second part.

When the reported result includes both the joint channel measurement result and the single channel measurement result, some measurement results in the joint channel measurement result and the single channel measurement result may be the same. In this case, only one measurement result needs to be reported. An example in which Y=1 and X=2 is used as an example for description. The Y=1 group of joint channel measurement results includes two RIs, and/or two PMIs, and/or two pieces of LI information. Each of the X=2 groups of single channel measurement results also includes one RI, and/or one PMI, and/or one piece of LI information. It may be considered that two RIs in the X=2 groups of single channel measurement results are the same as the two RIs in the Y=1 group of joint channel measurement results. Therefore, the two RIs do not need to be repeatedly reported, and the two RIs in the X=2 groups of single channel measurement results may be omitted, or the two RIs in the Y=1 group of joint channel measurement results may be omitted. For example, the terminal device may not need to report the two RIs in the X=2 groups of single channel measurement results. In this case, the network device separately uses the two RIs in the Y=1 group of joint channel measurement results as the RIs in the X=2 groups of single channel measurement results. For another example, the terminal device may not need to report the two RIs in the Y=1 group of joint channel measurement results. In this case, the network device uses the two RIs in the X=2 groups of single channel measurement results as the two RIs in the Y=1 group of joint channel measurement results. When Y=1 and X=1, there is only one group of single channel measurement results. It may be assumed that an RI in the group of single channel measurement results is the same as an RI in the Y=1 group of joint channel measurement results. In this case, only one of the RIs may be reported and does not need to be repeatedly reported. For example, the terminal device may not need to report the RI in the X=1 group of single channel measurement results. In this case, the network device uses anRI in the Y=1 group of joint channel measurement results as the RI in the X=1 group of single channel measurement results. Which of the two RIs in the Y=1 group of joint channel measurement results is used is determined specifically by using the following method: The foregoing two RIs are separately determined by using two channel measurement resources in a resource pair. The two channel measurement resources respectively belong to two groups of channel measurement resources. Therefore, it may be considered that each RI corresponds to one group of channel measurement resources. If a channel measurement resource corresponding to the X=1 group of single channel measurement results belongs to a specific group of channel measurement resources, an RI corresponding to the group of channel measurement resources is used as the RI in the X=1 group of single channel measurement results. Similarly, the foregoing method is also applicable to reporting the PMI and the LI.

In the foregoing method, the single channel measurement result may not be divided into the first part and the second part, but includes only one part, where the part includes one or more of information about one channel measurement resource, one piece of RI information, one piece of LI information, one piece of PMI information, one piece of CQI information, and the like. In the foregoing method, the joint channel measurement result may not be divided into the first part and the second part, but includes only one part, where the part includes one or more of information about one resource pair, two pieces of RI information, two pieces of LI information, two pieces of PMI information, one or two pieces of CQI information, and the like.

In an example, the terminal device reports only one group of channel measurement results, where the group of channel measurement results may be a single channel measurement result or a joint channel measurement result. When the single channel measurement result is reported, the first part and the second part may be included as described above, or only one part may be included, where the part includes one or more of information about one channel measurement resource, one piece of RI information, one piece of LI information, one piece of PMI information, one piece of CQI information, and the like. When the joint channel measurement result is reported, the first part and the second part may be included as described above, or only one part may be included, where the part includes one or more of information about one resource pair, two pieces of RI information, two pieces of LI information, two pieces of PMI information, one or two pieces of CQI information, and the like. Optionally, whether the single channel measurement result or the joint channel measurement result specifically includes one part or two parts may be determined at a frequency domain granularity of channel measurement. When the frequency domain granularity is a wideband, one part may be used. When the frequency domain granularity is a subband, two parts may be used.

In another example, when the terminal device reports Y groups of joint channel measurement results and X groups of single channel measurement results, each single channel measurement result may include the first part and the second part as described above, or may include only one part, where the part includes one or more of information about one channel measurement resource, one piece of RI information, one piece of LI information, one piece of PMI information, one piece of CQI information, and the like; and each joint channel measurement result may include the first part and the second part as described above, or may include only one part, where the part includes one or more of information about one resource pair, two pieces of RI information, two pieces of LI information, two pieces of PMI information, one or two pieces of CQI information, and the like. Optionally, whether the single channel measurement result or the joint channel measurement result specifically includes one part or two parts may be determined at a frequency domain granularity of channel measurement. When the frequency domain granularity is a wideband, one part may be used. When the frequency domain granularity is a subband, two parts may be used.

It may be specified that if a plurality of groups of measurement results are reported, frequency domain granularity configurations of the plurality of groups of measurement results need to be the same. Alternatively, the plurality of groups of measurement results include only one part or two parts.

The joint channel measurement result may further include joint channel information. Similar to the single channel information, the joint channel information may include only one part, or may include two parts: a first part and a second part. When the joint channel information includes only one part, the joint channel information may include at least two CRIs, at least two RIs, at least two LIs, at least two PMIs, and at least one or two CQIs. When the joint channel information includes two parts, the first part may include at least two CRIs, at least two RIs, and a CQI (including a wideband CQI and a subband CQI) of a first codeword, and the second part may be further divided into wideband information and subband information. The wideband information in the second part may include wideband CQI information of a second codeword, at least two LIs, and at least two pieces of wideband PMI information. The subband information in the second part may include subband CQI information of the second codeword and at least two pieces of subband PMI information.

When the terminal device needs to simultaneously report the plurality of groups of channel information, for example, report one group of joint channel information and at least one group of single channel information, the plurality of parts may be divided in the following manner. In Manner 1, the plurality of groups of channel information may be separately divided. For example, each group of channel information is divided into at least two parts, and content included in each part is the same as that of the single channel information or the joint channel information. In Manner 2, the plurality of groups of channel information are combined for division. For example, first parts of the groups of channel information are combined as a part, and second parts of the groups of channel information are combined as the other part.

When the terminal device cannot report all measurement results in the first measurement result because uplink transmission resources are limited or to save uplink transmission resources, the terminal device may select a measurement result with a higher reporting priority from the first measurement result and report the measurement result.

A reporting priority exists between different groups of measurement results included in the first measurement result. The first measurement result may include at least one group of joint channel measurement results and/or at least one group of single channel measurement results, and a first reporting priority exists between the at least one group of joint channel measurement results and/or the at least one group of single channel measurement results. When the plurality of channel measurement resources correspond to two groups of channel measurement resources, the at least one group of joint channel measurement results is in a one-to-one correspondence with a resource pair included in the first resource pair, that is, each of the at least one group of joint channel measurement results corresponds to one resource pair in the first resource pair, and each of the at least one group of single channel measurement results corresponds to one of the two groups of channel measurement resources. That a first reporting priority exists between the at least one group of joint channel measurement results and/or the at least one group of single channel measurement results may be understood as that a first reporting priority exists between the at least one group of joint channel measurement results and the at least one group of single channel measurement results, or may be understood as that a first reporting priority exists between the at least one group of joint channel measurement result, or may be understood as that a first reporting priority exists between the at least one group of single channel measurement results.

The first reporting priority between the at least one group of single channel measurement results may be determined based on a configuration sequence of corresponding measurement resource groups, and may be that a higher ranking in the configuration sequence corresponds to a higher reporting priority, or may be that a lower ranking in the configuration sequence corresponds to a lower reporting priority. For example, the channel measurement resource set includes channel measurement resources { 1, 2, 3, 4, 5}, a first group of channel measurement resources is { 1, 2, 3}, and a second group of channel measurement resources is {4, 5}. A reporting priority of a group of single channel measurement results corresponding to the first group of channel measurement resources may be higher than a reporting priority of a group of single channel measurement results corresponding to the second group of channel measurement resources, or a reporting priority of a group of single channel measurement results corresponding to the first group of channel measurement resources may be lower than a reporting priority of a group of single channel measurement results corresponding to the second group of channel measurement resources.

The first reporting priority between the at least one group of single channel measurement results may alternatively be determined based on a configuration sequence of or an index value relationship between channel measurement resources corresponding to the channel measurement results, and may be that a channel measurement result having a higher ranking in a configuration sequence of corresponding channel measurement resources or with a smaller index value corresponds to a higher reporting priority, or may be that a channel measurement result having a higher ranking in a configuration sequence of corresponding channel measurement resources or with a smaller index value corresponds to a lower reporting priority. For example, the channel measurement resource set includes channel measurement resources {1, 2, 3, 4, 5}, and channel measurement resources corresponding to two groups of single channel measurement results that need to be reported are respectively 1 and 2. If a single channel measurement result corresponding to a channel measurement resource having a higher ranking in a configuration sequence has a higher reporting priority, a first group of single channel measurement results corresponds to a higher reporting priority. Otherwise, a second group of single channel measurement results corresponds to a higher reporting priority. If a single channel measurement result corresponding to a channel measurement resource with a smaller index value has a higher reporting priority, a first group of single channel measurement results corresponds to a higher reporting priority. Otherwise, a second group of single channel measurement results corresponds to a higher reporting priority.

The first reporting priority between the at least one group of single channel measurement results may alternatively be determined based on a CQI corresponding to each group of measurement results. When CQIs corresponding to two of at least one group of single channel measurement results are different, a group of single channel measurement results with a larger CQI has a higher reporting priority. It may be understood that a larger CQI in different groups of single channel measurement results corresponds to a higher reporting priority. When CQIs corresponding to two of the at least one group of single channel measurement results are the same, reporting priorities of the two groups of single channel measurement results may be determined based on a configuration sequence of two groups of channel measurement resources corresponding to the two groups of single channel measurement results, or may be determined based on a configuration sequence of or an index value relationship between channel measurement resources corresponding to the two groups of channel measurement results. It can be learned that the reporting priority between the different groups of single channel measurement results may be first determined based on the corresponding CQIs. When a same CQI exists, the reporting priority may be determined based on a configuration sequence of corresponding channel measurement resources.

The first reporting priority between the at least one group of joint channel measurement results may be determined based on a configuration sequence of corresponding resource pairs (or resource combinations), and may be that a higher ranking in the configuration sequence corresponds to a higher reporting priority, or may be that a lower ranking in the configuration sequence corresponds to a lower reporting priority. For example, the terminal device may determine that a resource pair corresponding to a bit that has a higher ranking in the second bitmap has a higher reporting priority, or may determine that a resource pair corresponding to a bit that has a lower ranking in the second bitmap has a higher reporting priority.

The first reporting priority between the at least one group of joint channel measurement results may alternatively be determined based on a CQI corresponding to each group of measurement results. When CQIs corresponding to two of the at least one group of joint channel measurement results are different, a group of joint channel measurement results with a larger CQI has a higher reporting priority. When CQIs corresponding to two of the at least one group of joint channel measurement results are the same, reporting priorities of the two groups of joint channel measurement results may be determined based on a configuration sequence of resource pairs (or resource combinations) corresponding to the two groups of joint channel measurement results. It can be learned that the reporting priority between the different groups of joint channel measurement results may be first determined based on the corresponding CQIs. When a same CQI exists, the reporting priority may be determined based on a configuration sequence of corresponding resource pairs (or resource combinations).

For the first reporting priority between the at least one group of joint channel measurement results and the at least one group of single channel measurement results, a reporting priority between a joint channel measurement result and a single channel measurement result may be first determined. For example, a reporting priority of the at least one group of joint channel measurement results may be lower than a reporting priority of the at least one group of single channel measurement results, a reporting priority of the at least one group of joint channel measurement results may be higher than a reporting priority of the at least one group of single channel measurement results, or a reporting priority of the at least one group of joint channel measurement results may be between reporting priorities of the at least one group of single channel measurement results. For example, when one group of joint channel measurement results and two groups of single channel measurement results need to be reported, a reporting priority of the joint channel measurement result may be between reporting priorities of the two groups of single channel measurement results. Then, the reporting priority between the at least one group of single channel measurement results may be determined in the foregoing manner of determining the reporting priority of the single channel measurement result. The reporting priority between the at least one group of joint channel measurement results may be determined in the foregoing manner of determining the reporting priority of the joint channel measurement result.

The first reporting priority between the at least one group of joint channel measurement results and the at least one group of single channel measurement results may alternatively be determined based on a CQI corresponding to each group of measurement results. The terminal device may first determine a CQI corresponding to each of the at least one group of joint channel measurement results and the at least one group of single channel measurement results, and then may determine reporting priorities of the at least one group of joint channel measurement results and the at least one group of single channel measurement results based on corresponding CQIs. A larger CQI corresponds to a higher reporting priority. When CQIs corresponding to two groups of single channel measurement results are the same, reporting priorities of the two groups of single channel measurement results may be determined based on a configuration sequence of two groups of channel measurement resources corresponding to the two groups of single channel measurement results. When CQIs corresponding to two groups of joint channel measurement results are the same, reporting priorities of the two groups of joint channel measurement results may be determined based on a configuration sequence of resource pairs (or resource combinations) corresponding to the two groups of joint channel measurement results. When a CQI corresponding to one group of single channel measurement results is the same as a CQI corresponding to one group of joint channel measurement results, a reporting priority of the single channel measurement result may be higher than a reporting priority of the joint channel measurement result, or a reporting priority of the joint channel measurement result may be higher than a reporting priority of the single channel measurement result.

For the first reporting priority between the at least one group of joint channel measurement results and the at least one group of single channel measurement results, a reporting priority between the joint channel measurement result and the single channel measurement result may be first determined based on a transmission mode, then a reporting priority between the at least one group of single channel measurement results may be determined in the foregoing manner of determining the reporting priority of the single channel measurement result, and a reporting priority between the at least one group of joint channel measurement results may be determined in the foregoing manner of determining the reporting priority of the joint channel measurement result. When the transmission mode is a single-TRP mode, a reporting priority of a single channel measurement result is higher than a reporting priority of the joint channel measurement result. When the transmission mode is a multi-TRP mode, a reporting priority of the joint channel measurement result is higher than a reporting priority of the single channel measurement result. The single-TRP mode may be understood as that the network side communicates with the terminal device through a single TRP. For example, a TCI-state activated for a physical downlink shared channel (physical downlink shared channel, PDSCH) is a single TCI-state, including no TCI-state group. The multi-TRP mode may be understood as that the network side communicates with the terminal device through a plurality of TRPs. For example, a TCI-state activated for a PDSCH includes a TCI-state group. The TCI-state group is a TCI-state group including a plurality of TCI-states, each TCI-state corresponds to one TRP, and transmission of a PDSCH by using the TCI-state group is multi-TRP transmission.

A CQI corresponding to each group of measurement results may be a largest CQI in CQIs corresponding to all measurement results in each group of measurement results, or may be a smallest CQI in CQIs corresponding to all measurement results in each group of measurement results, or may be an average value (or a weighted average value) of CQIs corresponding to all measurement results in each group of measurement results, or may be a sum (or a weighted sum) or a product of CQIs corresponding to all measurement results in each group of measurement results, or may be a variance of CQIs corresponding to all measurement results in each group of measurement results, or may be a value determined in another manner based on CQIs corresponding to all measurement results in each group of measurement results.

When the measurement result is a single channel measurement result, and the single channel information includes only one part, a CQI corresponding to the single channel measurement result may be a CQI included in the part. When the measurement result is a single channel measurement result, and the single channel information includes two parts, a CQI corresponding to the single channel measurement result may be a CQI included in a first part, or may be a wideband CQI included in a second part, or may be a subband CQI included in a second part, or may be a value determined based on a wideband CQI and a subband CQI that are included in a second part, or may be a value determined based on a CQI included in a first part and a wideband CQI and/or a subband CQI that are/is included in a second part.

When the measurement result is a joint channel measurement result, and the joint channel information includes only one part, a CQI corresponding to the joint channel measurement result may be a CQI included in the part. When the measurement result is a joint channel measurement result, and the joint channel information includes two parts, a CQI corresponding to the joint channel measurement result may be a CQI included in a first part, or may be a wideband CQI included in a second part, or may be a subband CQI included in a second part, or may be a value determined based on a wideband CQI and a subband CQI that are included in a second part, or may be a value determined based on a CQI included in a first part and a wideband CQI and/or a subband CQI that are/is included in a second part.

The joint channel measurement result is obtained by measuring a resource pair, and corresponds to channel measurement results of two channel measurement resources in the resource pair, for example, two RIs, two PMIs, and two LIs. The two channel measurement resources respectively belong to two groups of channel measurement resources. Therefore, one group of joint channel measurement results may be further divided into two groups of measurement results, and each group of measurement results corresponds to one channel measurement resource or corresponds to one group of channel measurement resources. A reporting priority also exists between the two groups of measurement results. For example, a reporting priority of a measurement result corresponding to a first group of channel measurement resources is higher than a reporting priority of a measurement result corresponding to a second group of channel measurement resources. For another example, a reporting priority of a measurement result corresponding to a first group of channel measurement resources is lower than a reporting priority of a measurement result corresponding to a second group of channel measurement resources.

Alternatively, the first reporting priority may be indicated by the radio access network device by using RRC signaling, media access control (media access control, MAC) control element (control element, CE) signaling, or downlink control information (downlink control information, DCI) signaling, or may be reported by the terminal device.

When a frequency domain granularity of channel measurement is a subband, a third reporting priority exists between a measurement result corresponding to an even-numbered subband and a measurement result corresponding to an odd-numbered subband in a same group of measurement results in the first measurement result. The terminal device may first determine, based on the first reporting priority, a reporting priority between at least one group of measurement results included in the first measurement result, and then may determine, based on the third reporting priority, a reporting priority between a measurement result corresponding to an even-numbered subband and a measurement result corresponding to an odd-numbered subband that are included in each of the at least one group of measurement results. Alternatively, the terminal device may first determine, based on the third reporting priority, a reporting priority between a measurement result corresponding to an even-numbered subband and a measurement result corresponding to an odd-numbered subband, and then determine, based on the first reporting priority, a reporting priority between measurement results that belong to each group of measurement results in measurement results corresponding to an even-numbered subband and a reporting priority between measurement results that belong to each group of measurement results in measurement results corresponding to an odd-numbered subband. The third reporting priority may be that a reporting priority of the measurement result corresponding to the even-numbered subband is higher than a reporting priority of the measurement result corresponding to the odd-numbered subband, or may be that a reporting priority of the measurement result corresponding to the even-numbered subband is lower than a reporting priority of the measurement result corresponding to the odd-numbered subband. Optionally, the measurement result corresponding to the even-numbered subband may be further defined as a measurement result corresponding to the even-numbered subband in a subband-level measurement result included in a second part in the reporting format, and the measurement result corresponding to the odd-numbered subband is a measurement result corresponding to the odd-numbered subband in the subband-level measurement result included in the second part in the reporting format. That the reporting priority between the at least one group of measurement results included in the first measurement result is determined based on the first reporting priority may further include: If a group of channel measurement results is a joint channel measurement result, reporting priorities of two groups of measurement results (that is, two measurement results respectively corresponding to the two channel measurement resources or the two groups of channel measurement resources) in the group of joint channel measurement results may be further sorted according to the method described above.

For example, a reporting priority of the joint channel measurement result is higher than a reporting priority of the single channel measurement result, and a reporting priority of a measurement result corresponding to the even-numbered subband is higher than a reporting priority of a measurement result corresponding to the odd-numbered subband. For example, the first reporting priority and the third reporting priority may cooperate in a manner shown in Table 1, to determine a reporting priority of each group of measurement results.

**Table 1**

| Reporting priority | Measurement result |
| --- | --- |
| 1 | Measurement result of an even-numbered subband in a joint channel measurement result |
| 2 | Measurement result of an odd-numbered subband in the joint channel measurement result |
| 3 | Measurement result of an even-numbered subband in a single channel measurement result |
| 4 | Measurement result of an odd-numbered subband in the single channel measurement result |

For another example, the first reporting priority and the third reporting priority may cooperate in a manner shown in Table 2, to determine a reporting priority of each group of measurement results.

**Table 2**

| Reporting priority | Measurement result |
| --- | --- |
| 1 | Measurement result of an even-numbered subband in a joint channel measurement result |
| 2 | Measurement result of an even-numbered subband in a single channel measurement result |
| 3 | Measurement result of an odd-numbered subband in the joint channel measurement result |
| 4 | Measurement result of an odd-numbered subband in the single channel measurement result |

The radio access network device may configure the terminal device to simultaneously perform a plurality of types of measurement, for example, channel measurement of a local cell, channel measurement of another cell, CQI measurement, and RSRP measurement. A parameter (such as a channel measurement resource or a frequency domain granularity) related to each type of measurement is configured in a separate piece of configuration information. Measurement results corresponding to a plurality of pieces of configuration information may be reported at different time points, or may be reported at a same time point through same uplink transmission. The uplink transmission may be a physical uplink control channel (physical uplink control channel, PUCCH) or a physical uplink shared channel (physical uplink shared channel, PUSCH).

When the measurement results corresponding to the plurality of pieces of configuration information (that is, a plurality of reporting configurations) need to be reported through one time of uplink transmission, if measurement results corresponding to all configuration information cannot be transmitted because uplink transmission resources are limited, the terminal device may sort, based on reporting priorities corresponding to reporting configuration information included in the configuration information, measurement results corresponding to different configuration information, and may give up a measurement result corresponding to reporting configuration information with a lower reporting priority, to ensure reporting of a measurement result corresponding to reporting configuration information with a higher reporting priority.

The following uses two pieces of configuration information as an example for description, but an amount of configuration information is not limited.

The radio access network device may send second configuration information to the terminal device, where the first configuration information is different from the second configuration information. The terminal device may receive the second configuration information from the radio access network device, and then may perform channel measurement based on the second configuration information to obtain a second measurement result. A second reporting priority exists between the first measurement result and the second measurement result. When the terminal device needs to report the first measurement result and the second measurement result through one time of uplink transmission, the terminal device may first determine, based on the second reporting priority, a reporting priority corresponding to first reporting configuration information corresponding to the first measurement result and a reporting priority corresponding to second reporting configuration information corresponding to the second measurement result, that is, determine a reporting priority between the first measurement result and the second measurement result, and then further determine, for each reporting configuration based on the first reporting priority, a reporting priority between a plurality of groups of measurement results corresponding to each reporting configuration, that is, separately determine, based on the first reporting priority, a reporting priority between at least two groups of measurement results included in the first measurement result and the second measurement result. That the reporting priority between the at least one group of measurement results included in the first measurement result is determined based on the first reporting priority may further include: If a group of channel measurement results is a joint channel measurement result, reporting priorities of two groups of measurement results (that is, two measurement results respectively corresponding to the two channel measurement resources or the two groups of channel measurement resources) in the group of joint channel measurement results may be further sorted according to the method described above.

For example, a reporting priority of a reporting configuration 1 is higher than a reporting priority of a reporting configuration 2, the reporting priority of the reporting configuration 2 is higher than a reporting priority of a reporting configuration 3, ..., and the like. A reporting priority of the joint channel measurement result is higher than a reporting priority of the single channel measurement result. The first reporting priority and the second reporting priority may cooperate in a manner shown in Table 3, to determine reporting priorities of different channel measurement results in each reporting configuration.

**Table 3**

| Reporting priority | Measurement result |
| --- | --- |
| 1 | Joint channel measurement result of a reporting configuration 1 |
| 2 | Single channel measurement result of the reporting configuration 1 |
| 3 | Joint channel measurement result of a reporting configuration 2 |
| 4 | Single channel measurement result of the reporting configuration 2 |
| ... | ... |
| 2n-1 | Joint channel measurement result of a reporting configuration n |
| 2n | Single channel measurement result of the reporting configuration n |

When measurement results corresponding to a plurality of reporting configurations need to be reported through one time of uplink transmission, a reporting configuration may include a plurality of groups of measurement results, and a frequency domain granularity of a measurement result is a subband. In this case, a reporting priority between groups of measurement results in each of all reporting configurations and a reporting priority between channel measurement results corresponding to odd-numbered and even-numbered subbands in each channel measurement result need to be comprehensively determined based on the foregoing three reporting priorities. The terminal device may first determine, based on the second reporting priority, a priority between measurement results corresponding to a plurality of reporting configurations, then may further determine, for each reporting configuration based on the first reporting priority, a reporting priority between a plurality of groups of measurement results corresponding to each reporting configuration, and finally may determine, for each group of measurement results based on the third reporting priority, a reporting priority between measurement results corresponding to odd-numbered and even-numbered subbands in the group of measurement results. Alternatively, the terminal device may first determine, based on the second reporting priority, a reporting priority between measurement results corresponding to a plurality of reporting configurations, may further determine, for each reporting configuration based on the third reporting priority, a reporting priority between a measurement result corresponding to an even-numbered subband and a measurement result corresponding to an odd-numbered subband, and then determine, based on the first reporting priority, a reporting priority between measurement results that belong to each group of measurement results in measurement results corresponding to an even-numbered subband and a reporting priority between measurement results that belong to each group of measurement results in measurement results corresponding to an odd-numbered subband. That the reporting priority between the at least one group of measurement results included in the first measurement result is determined based on the first reporting priority may further include: If a group of channel measurement results is a joint channel measurement result, reporting priorities of two groups of measurement results (that is, two measurement results respectively corresponding to the two channel measurement resources or the two groups of channel measurement resources) in the group of joint channel measurement results may be further sorted according to the method described above.

For example, a reporting priority of a reporting configuration 1 is higher than a reporting priority of a reporting configuration 2, the reporting priority of the reporting configuration 2 is higher than a reporting priority of a reporting configuration 3, ..., and the like. A reporting priority of the joint channel measurement result is higher than a reporting priority of the single channel measurement result. A reporting priority of a measurement result corresponding to the even-numbered subband is higher than a reporting priority of a measurement result corresponding to the odd-numbered subband. The three reporting priorities may cooperate in a manner shown in Table 4, to determine a reporting priority of each group of channel measurement results in each reporting configuration.

**Table 4**

| Reporting priority | Measurement result |
|---|---|
| 1 | Measurement result of an even-numbered subband in a joint channel measurement result of a reporting configuration 1 |
| 2 | Measurement result of an odd-numbered subband in the joint channel measurement result of the reporting configuration 1 |
| 3 | Measurement result of an even-numbered subband in a single channel measurement result of the reporting configuration 1 |
| 4 | Measurement result of an odd-numbered subband in the single channel measurement result of the reporting configuration 1 |
| 5 | Measurement result of an even-numbered subband in a joint channel measurement result of a reporting configuration 2 |
| 6 | Measurement result of an odd-numbered subband in the joint channel measurement result of the reporting configuration 2 |
| 7 | Measurement result of an even-numbered subband in a single channel measurement result of the reporting configuration 2 |
| 8 | Measurement result of an odd-numbered subband in the single channel measurement result of the reporting configuration 2 |
| ... | ... |
| 4n-3 | Measurement result of an even-numbered subband in a joint channel measurement result of a reporting configuration n |
| 4n-2 | Measurement result of an odd-numbered subband in the joint channel measurement result of the reporting configuration n |
| 4n-1 | Measurement result of an even-numbered subband in a single channel measurement result of the reporting configuration n |
| 4n | Measurement result of an odd-numbered subband in the single channel measurement result of the reporting configuration n |

It should be understood that Table 1 to Table 4 are merely examples for describing reporting priorities of different measurement results, and constitute no limitation thereto.

Based on the foregoing network architecture, FIG. 5 is another schematic flowchart of a communication method according to an embodiment of the present invention. As shown in FIG. 5, the communication method may include the following steps.

501: A radio access network device sends, to a terminal device, first configuration information including a plurality of channel measurement resources.

Correspondingly, the terminal device receives the first configuration information from the radio access network device.

502: The radio access network device sends a reference signal to the terminal device based on the plurality of channel measurement resources.

Correspondingly, the terminal device receives the reference signal from the radio access network device based on the plurality of channel measurement resources.

After sending the first configuration information to the terminal device, the radio access network device may send the reference signal to the terminal device based on the plurality of channel measurement resources. The radio access network device may send the reference signal to the terminal device based on a channel measurement resource and/or a resource combination (or a resource pair) on which measurement needs to be performed. The terminal device may receive the reference signal based on the determined channel measurement resource and/or resource combination (or resource pair) on which measurement needs to be performed. One channel measurement resource may correspond to one reference signal, and the channel measurement resource includes a related parameter of the reference signal. The terminal device may determine a transmission resource of the reference signal based on the related parameter of the reference signal that is included in the channel measurement resource, and receive the reference signal on the determined transmission resource.

503: The terminal device performs measurement based on the reference signal to obtain a first measurement result.

After receiving the reference signal based on the determined channel measurement resource and/or resource combination (or resource pair) on which measurement needs to be performed, the terminal device may perform measurement based on the reference signal to obtain the first measurement result.

504: The terminal device sends the first measurement result to the radio access network device.

Correspondingly, the radio access network device receives the first measurement result from the terminal device.

For detailed descriptions of step 501 to step 504, refer to related descriptions of step 401 to step 403.

It should be understood that in the foregoing communication method, a function performed by the radio access network device may alternatively be performed by a module (for example, a chip) in the radio access network device, and a function performed by the terminal device may alternatively be performed by a module (for example, a chip) in the terminal device.

It should be understood that related information (that is, same information or similar information) in the foregoing different embodiments may be mutually referenced.

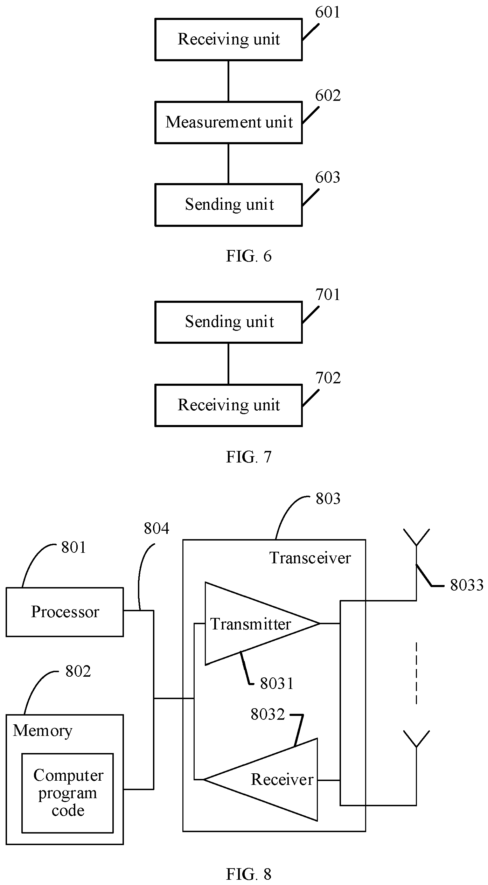

Based on the foregoing network architecture, FIG. 6 is a schematic diagram of a structure of a communication apparatus according to an embodiment of the present invention. As shown in FIG. 6, the communication apparatus may include:

a receiving unit 601, configured to receive first configuration information from a radio access network device, where the first configuration information includes a plurality of channel measurement resources, and the plurality of channel measurement resources correspond to two groups of channel measurement resources;
a measurement unit 602, configured to perform channel measurement based on the plurality of channel measurement resources to obtain a first measurement result; and
a sending unit 603, configured to send the first measurement result to the radio access network device, where the first measurement result includes a joint channel measurement result, the joint channel measurement result is a channel measurement result of a first resource pair, the first resource pair includes one or more resource pairs including two channel measurement resources, the two channel measurement resources respectively belong to the two groups of channel measurement resources, and the joint channel measurement result includes information about the first resource pair.

In an embodiment, the first configuration information includes first indication information, and the first indication information indicates a quantity $N_1$ of channel measurement resources included in a first group of channel measurement resources in the two groups of channel measurement resources, where $N_1$ is an integer greater than or equal to 1.

In an embodiment, a channel measurement resource included in a first group of channel measurement resources in the two groups of channel measurement resources is first $N_1$ channel measurement resources or last $N_1$ channel measurement resources in the plurality of channel measurement resources, and a channel measurement resource included in a second group of channel measurement resources in the two groups of channel measurement resources is a channel measurement resource other than the $N_1$ channel measurement resources in the plurality of channel measurement resources.

In an embodiment, the first configuration information further includes second indication information, the second indication information indicates a first resource, and the first resource is one or more channel measurement resources used for single channel measurement in the plurality of channel measurement resources.

In an embodiment, the second indication information indicates a quantity M of channel measurement resources used for single channel measurement in channel measurement resources included in each of the two groups of channel measurement resources, where M is an integer greater than or equal to 1.

In an embodiment, a channel measurement resource used for single channel measurement in each group of channel measurement resources is first M channel measurement resources or last M channel measurement resources in each group of channel measurement resources.

In an embodiment, the second indication information is a first bitmap.

In an embodiment, the first configuration information further includes third indication information, the third indication information indicates a second resource pair, the second resource pair is a resource pair used for joint channel measurement, and the second resource pair includes the first resource pair.

In an embodiment, the third indication information is a second bitmap.

In an embodiment, the first bitmap and the second bitmap are two parts of a third bitmap.

In an embodiment, an $((i-1)*N_2+j)^{th}$ bit or an $((j-1)*N_1+i)^{th}$ bit in the second bitmap corresponds to a resource pair including an $i^{th}$ channel measurement resource in the first group of channel measurement resources and a $j^{th}$ channel measurement resource in the second group of channel measurement resources, where $N_1$ is a quantity of channel measurement resources included in the first group of channel measurement resources, and $N_2$ is a quantity of channel measurement resources included in the second group of channel measurement resources.

In an embodiment, when a frequency band used by the radio access network device falls within an FR 2, different resource pairs in the second resource pair include different channel measurement resources.

In an embodiment, the first configuration information further includes fourth indication information, the fourth indication information indicates a reporting mode, and the reporting mode includes at least a first mode and a second mode.

The first mode is to report one group of joint channel measurement results and one group of measurement results in at least one group of single channel measurement results.

The second mode is to report Y groups of joint channel measurement results and X groups of single channel measurement results, where a value of Y is 1 or is configured by the radio access network device, and a value of X is configured by the radio access network device.

In an embodiment, the fourth indication information includes two options. When the fourth indication information is a first option, the fourth indication information indicates the first mode. When the fourth indication information is a second option, the fourth indication information indicates the second mode.

In an embodiment, the reporting mode further includes a third mode, and only a single channel measurement result is reported in the third mode.

The fourth indication information includes three options. When the fourth indication information is a first option, the fourth indication information indicates the first mode. When the fourth indication information is a second option, the fourth indication information indicates the second mode. When the fourth indication information is a third option, the fourth indication information indicates the third mode.

In an embodiment, when a measurement manner is single channel measurement, the first configuration information does not include one or more of the following information: the second indication information, the third indication information, and the fourth indication information.

In an embodiment, when a third resource pair is measured, a reference signal on each of two channel measurement resources in the third resource pair is simultaneously received through receive beams of the two channel measurement resources, where the third resource pair is any resource pair in the second resource pair.

In an embodiment, a quantity of CPUs occupied by the measurement is 2*P, Q+2*P, or Q+k*P, where Q is a quantity of channel measurement resources included in the first resource, P is a quantity of resource pairs included in the second resource pair, and k is a value reported by a terminal device or configured by the radio access network device.

In an embodiment, the first measurement result further includes information about a second resource, and the second resource is a to-be-reported channel measurement resource in the first resource.

The information about the second resource is any one of the following:

a local index of the second resource in a group of channel measurement resources corresponding to the second resource;
a local index of the second resource in a channel measurement resource that belongs to the first resource in the group of channel measurement resources corresponding to the second resource; and
an index of a bit corresponding to the second resource in the first bitmap.

In an embodiment, the information about the first resource pair is an index of a bit corresponding to the first resource pair in the second bitmap.

In an embodiment, the first measurement result includes at least one group of joint channel measurement results and/or at least one group of single channel measurement results, a first reporting priority exists between the at least one group of joint channel measurement results and/or the at least one group of single channel measurement results, the at least one group of joint channel measurement results is in a one-to-one correspondence with a resource pair included in the first resource pair, and each of the at least one group of single channel measurement results corresponds to one of the two groups of channel measurement resources.

In an embodiment, the first reporting priority includes:

a reporting priority of the at least one group of joint channel measurement results is lower than a reporting priority of the at least one group of single channel measurement results.

In an embodiment, the first reporting priority includes:

a reporting priority of the at least one group of joint channel measurement results and/or a reporting priority of the at least one group of single channel measurement results are/is determined based on a CQI corresponding to each group of measurement results.

In an embodiment, that a reporting priority of the at least one group of joint channel measurement results and/or a reporting priority of the at least one group of single channel measurement results are/is determined based on a CQI corresponding to each group of measurement results includes:

when CQIs corresponding to two groups of measurement results are different, a measurement result with a larger CQI has a higher reporting priority; or

when CQIs corresponding to two groups of measurement results are the same, reporting priorities of the two groups of measurement results are determined based on a configuration sequence of two groups of channel measurement resources corresponding to the two groups of measurement results.

In an embodiment, the receiving unit 601 is further configured to receive second configuration information from the radio access network device, where the first configuration information is different from the second configuration information.

The measurement unit 602 is further configured to perform channel measurement based on the second configuration information to obtain a second measurement result.

A second reporting priority exists between the first measurement result and the second measurement result.

The terminal device first determines a reporting priority between the first measurement result and the second measurement result based on the second reporting priority, and then separately determines, based on the first reporting priority, a reporting priority between at least two groups of measurement results included in the first measurement result and the second measurement result.

In an embodiment, when a frequency domain granularity of channel measurement is a subband, a third reporting priority exists between a measurement result corresponding to an even-numbered subband and a measurement result corresponding to an odd-numbered subband in a same group of measurement results in the first measurement result.

The terminal device first determines, based on the first reporting priority, a reporting priority between at least one group of measurement results included in the first measurement result, and then determines, based on the third reporting priority, a reporting priority between a measurement result corresponding to an even-numbered subband and a measurement result corresponding to an odd-numbered subband that are included in each of the at least one group of measurement results.

In an embodiment, the first configuration information further includes at least one interference measurement resource.

A quantity of interference measurement resources in the at least one interference measurement resource is equal to a sum of Q and P.

A type of the interference measurement resource is an NZP CSI-RS resource, a CSI-IM resource, or another type of reference signal resource.

In an embodiment, first Q interference measurement resources in the at least one interference measurement resource are in a one-to-one correspondence with Q channel measurement resources included in the first resource, and remaining P interference measurement resources in the at least one interference measurement resource are in a one-to-one correspondence with P resource pairs included in the second resource pair.

For more detailed descriptions of the receiving unit 601, the measurement unit 602, and the sending unit 603, directly refer to related descriptions of the terminal device in the method embodiments shown in FIG. 4 and FIG. 5. Details are not described herein again.

Based on the foregoing network architecture, FIG. 7 is another schematic diagram of a structure of a communication apparatus according to an embodiment of the present invention. As shown in FIG. 7, the communication apparatus may include:

a sending unit 701, configured to send first configuration information to a terminal device, where the first configuration information includes a plurality of channel measurement resources, and the plurality of channel measurement resources correspond to two groups of channel measurement resources; and

a receiving unit 702, configured to receive a first measurement result from the terminal device, where

the first measurement result includes a joint channel measurement result, the joint channel measurement result is a channel measurement result of a first resource pair, the first resource pair includes one or more resource pairs including two channel measurement resources, the two channel measurement resources respectively belong to the two groups of channel measurement resources, and the joint channel measurement result includes information about the first resource pair.

In an embodiment, the first configuration information includes first indication information, and the first indication information indicates a quantity $N_1$ of channel measurement resources included in a first group of channel measurement resources in the two groups of channel measurement resources, where $N_1$ is an integer greater than or equal to 1.

In an embodiment, a channel measurement resource included in a first group of channel measurement resources in the two groups of channel measurement resources is first $N_1$ channel measurement resources or last $N_1$ channel measurement resources in the plurality of channel measurement resources, and a channel measurement resource included in a second group of channel measurement resources in the two groups of channel measurement resources is a channel measurement resource other than the $N_1$ channel measurement resources in the plurality of channel measurement resources.

In an embodiment, the first configuration information further includes second indication information, the second indication information indicates a first resource, and the first resource is one or more channel measurement resources used for single channel measurement in the plurality of channel measurement resources.

In an embodiment, the second indication information indicates a quantity M of channel measurement resources used for single channel measurement in channel measurement resources included in each of the two groups of channel measurement resources, where M is an integer greater than or equal to 1.

In an embodiment, a channel measurement resource used for single channel measurement in each group of channel measurement resources is first M channel measurement resources or last M channel measurement resources in each group of channel measurement resources.

In an embodiment, the second indication information is a first bitmap.

In an embodiment, the first configuration information further includes third indication information, the third indication information indicates a second resource pair, the second resource pair is a resource pair used for joint channel measurement, and the second resource pair includes the first resource pair.

In an embodiment, the third indication information is a second bitmap.

In an embodiment, the first bitmap and the second bitmap are two parts of a third bitmap.

In an embodiment, an $((i-1)*N_2+j)^{th}$ bit or an $((j-1)*N_1+i)^{th}$ bit in the second bitmap corresponds to a resource pair including an $i^{th}$ channel measurement resource in the first group of channel measurement resources and a $j^{th}$ channel measurement resource in the second group of channel measurement resources, where $N_1$ is a quantity of channel measurement resources included in the first group of channel measurement resources, and $N_2$ is a quantity of channel measurement resources included in the second group of channel measurement resources.

In an embodiment, when a frequency band used by a radio access network device falls within an FR 2, different resource pairs in the second resource pair include different channel measurement resources.

In an embodiment, the first configuration information further includes fourth indication information, the fourth indication information indicates a reporting mode, and the reporting mode includes at least a first mode and a second mode.

The first mode is to report one group of joint channel measurement results and one group of measurement results in at least one group of single channel measurement results.

The second mode is to report Y groups of joint channel measurement results and X groups of single channel measurement results, where a value of Y is 1 or is configured by the radio access network device, and a value of X is configured by the radio access network device.

In an embodiment, the fourth indication information includes two options. When the fourth indication information is a first option, the fourth indication information indicates the first mode. When the fourth indication information is a second option, the fourth indication information indicates the second mode.

In an embodiment, the reporting mode further includes a third mode, and only a single channel measurement result is reported in the third mode.

The fourth indication information includes three options. When the fourth indication information is a first option, the fourth indication information indicates the first mode. When the fourth indication information is a second option, the fourth indication information indicates the second mode. When the fourth indication information is a third option, the fourth indication information indicates the third mode.

In an embodiment, when a measurement manner is single channel measurement, the first configuration information does not include one or more of the following information: the second indication information, the third indication information, and the fourth indication information.

In an embodiment, the first measurement result further includes information about a second resource, and the second resource is a to-be-reported channel measurement resource in the first resource.

The information about the second resource is any one of the following:

a local index of the second resource in a group of channel measurement resources corresponding to the second resource;
a local index of the second resource in a channel measurement resource that belongs to the first resource in the group of channel measurement resources corresponding to the second resource; and
an index of a bit corresponding to the second resource in the first bitmap.

In an embodiment, the information about the first resource pair is an index of a bit corresponding to the first resource pair in the second bitmap.

In an embodiment, the first configuration information further includes at least one interference measurement resource.

A quantity of interference measurement resources in the at least one interference measurement resource is equal to a sum of Q and P.

A type of the interference measurement resource is an NZP CSI-RS resource, a CSI-IM resource, or another type of interference measurement resource.

In an embodiment, first Q interference measurement resources in the at least one interference measurement resource are in a one-to-one correspondence with Q channel measurement resources included in the first resource, and remaining P interference measurement resources in the at least one interference measurement resource are in a one-to-one correspondence with P resource pairs included in the second resource pair.

For more detailed descriptions of the sending unit 701 and the receiving unit 702, directly refer to related descriptions of the radio access network device in the method embodiments shown in FIG. 4 and FIG. 5. Details are not described herein again.

Based on the foregoing network architecture, FIG. 8 is still another schematic diagram of a structure of a communication apparatus according to an embodiment of the present invention. As shown in FIG. 8, the communication apparatus may include a processor 801, a memory 802, a transceiver 803, and a bus 804. The memory 802 may exist independently, and may be connected to the processor 801 through the bus 804. Alternatively, the memory 802 and the processor 801 may be integrated together. The bus 804 is configured to implement connections between these components. In one case, as shown in FIG. 8, the transceiver 803 may include a transmitter 8031, a receiver 8032, and an antenna 8033. In another case, the transceiver 803 may include a transmitter (that is, an output interface) and a receiver (that is, an input interface). The transmitter may include a transmitter machine and an antenna, and the receiver may include a receiver machine and an antenna.

In an embodiment, the communication apparatus may be a terminal device or a module (for example, a chip) in the terminal device. When computer program instructions stored in the memory 802 are executed, the processor 801 is configured to control the receiving unit 601 and the sending unit 603 to perform the operations performed in the foregoing embodiment, and the transceiver 803 is configured to perform the operations performed by the receiving unit 801 and the sending unit 603 in the foregoing embodiment. The terminal device or the module in the terminal device may be further configured to perform various methods performed by the terminal device in the method embodiments in FIG. 4 and FIG. 5. Details are not described again.

In an embodiment, the communication apparatus may be a radio access network device or a module (for example, a chip) in the radio access network device. When computer program instructions stored in the memory 802 are executed, the processor 801 is configured to control the sending unit 701 and the receiving unit 702 to perform the operations performed in the foregoing embodiment, and the transceiver 803 is configured to perform the operations performed by the sending unit 701 and the receiving unit 702 in the foregoing embodiment. The radio access network device or the module in the radio access network device may be further configured to perform various methods performed by the radio access network device in the method embodiments in FIG. 4 and FIG. 5. Details are not described again.

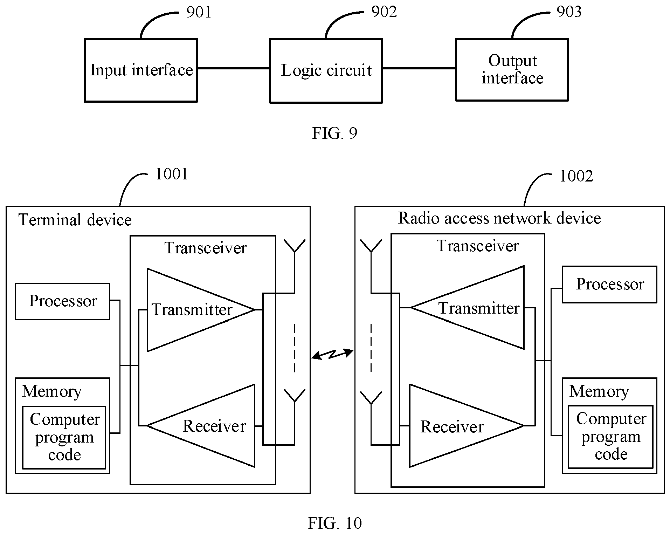

Based on the foregoing network architecture, FIG. 9 is still another schematic diagram of a structure of a communication apparatus according to an embodiment of the present invention. As shown in FIG. 9, the communication apparatus may include an input interface 901, a logic circuit 902, and an output interface 903. The input interface 901 is connected to the output interface 903 through the logic circuit 902. The input interface 901 is configured to receive information from another communication apparatus, and the output interface 903 is configured to: output, schedule, or send information to the another communication apparatus. The logic circuit 902 is configured to perform an operation other than the operations of the input interface 901 and the output interface 903, for example, implement functions implemented by the processor 801 in the foregoing embodiment. The communication apparatus may be a terminal device or a module in the terminal device, or may be a radio access network device or a module in the radio access network device. For more detailed descriptions of the input interface 901, the logic circuit 902, and the output interface 903, directly refer to related descriptions of the terminal device or the radio access network device in the foregoing method embodiments. Details are not described herein again.

Based on the foregoing network architecture, FIG. 10 is a schematic diagram of a structure of a communication system according to an embodiment of the present invention. As shown in FIG. 10, the communication system may include a terminal device 1001 and a radio access network device 1002. For detailed descriptions, refer to the communication methods shown in FIG. 4 and FIG. 5.

An embodiment of the present invention further discloses a computer-readable storage medium. The computer-readable storage medium stores instructions, and when the instructions are executed, the method in the foregoing method embodiment is performed.

An embodiment of the present invention further discloses a computer program product including instructions. When the instructions are executed, the method in the foregoing method embodiment is performed.

The objectives, technical solutions, and beneficial effects of this application are further described in detail in the foregoing specific implementations. It should be understood that the foregoing descriptions are merely specific implementations of this application, but are not intended to limit the protection scope of this application. Based on the technical solutions of this application, any modification, equivalent replacement, or improvement made shall fall within the protection scope of this application.

**Claims**

1.   A communication method, comprising:

receiving first configuration information from a radio access network device, wherein the first configuration information is used to configure a plurality of channel measurement resources;
performing channel measurement based on the first configuration information to obtain a first measurement result; and
sending the first measurement result to the radio access network device, wherein
the first measurement result comprises a joint channel measurement result, the joint channel measurement result is a channel measurement result of a first resource pair, the first resource pair comprises one or more resource pairs comprising two channel measurement resources, the two channel measurement resources belong to the plurality of channel measurement resources, and the joint channel measurement result comprises indication information of the first resource pair.

2.   The method according to claim 1, wherein the plurality of channel measurement resources correspond to two groups of channel measurement resources, and two channel measurement resources of each resource pair in the first resource pair respectively belong to the two groups of channel measurement resources.

3.   The method according to claim 1 or 2, wherein the indication information of the first resource pair is an index of the first resource pair.

4.   The method according to any one of claims 1 to 3, wherein the first configuration information comprises second indication information, the second indication information indicates a first resource, and the first resource is one or more channel measurement resources used for single channel measurement in the plurality of channel measurement resources.

5.   The method according to any one of claims 1 to 4, wherein the first configuration information further comprises third indication information, the third indication information indicates a second resource pair, the second resource pair is one or more resource pairs that are in the plurality of channel measurement resources, that comprise two channel measurement resources, and that are used for joint channel measurement, and the second resource pair comprises the first resource pair.

6.   The method according to claim 5, wherein when a frequency band used by the radio access network device falls within a frequency range FR 2, channel measurement resources of different resource pairs in the second resource pair are different.

7.   The method according to claim 5 or 6, wherein a quantity of channel state information processing units CPUs occupied by the channel measurement is 2*P, Q+2*P, or Q+k*P, wherein Q is a quantity of channel measurement resources comprised in the first resource, P is a quantity of resource pairs comprised in the second resource pair, k is a value reported by a terminal device or configured by the radio access network device, and Q, P, and k are positive integers.

8. The method according to any one of claims 4 to 7, wherein the first measurement result further comprises information about a second resource, the second resource is a to-be-reported channel measurement resource in the first resource, the plurality of channel measurement resources correspond to the two groups of channel measurement resources, and the two channel measurement resources respectively belong to the two groups of channel measurement resources; and
the information about the second resource is any one of the following:

a local index of the second resource in a group of channel measurement resources corresponding to the second resource;
a local index of the second resource in a channel measurement resource that belongs to the first resource in the group of channel measurement resources corresponding to the second resource; and
an index of a bit corresponding to the second resource in a first bitmap.

9. The method according to claim 7 or 8, wherein the first configuration information further comprises fifth indication information, and the fifth indication information indicates at least one interference measurement resource;

a quantity of interference measurement resources in the at least one interference measurement resource is equal to a sum of Q and P; and
a type of the interference measurement resource is a non-zero power channel state information-reference signal NZP CSI-RS resource or a channel state information-interference measurement CSI-IM resource.

10. The method according to claim 9, wherein first Q interference measurement resources in the at least one interference measurement resource are in a one-to-one correspondence with Q channel measurement resources comprised in the first resource, and remaining P interference measurement resources in the at least one interference measurement resource are in a one-to-one correspondence with P resource pairs comprised in the second resource pair.

11. The method according to any one of claims 1 to 10, wherein the first measurement result further comprises at least one group of single channel measurement results, a first reporting priority exists between the joint channel measurement result and the at least one group of single channel measurement results, the joint channel measurement result is in a one-to-one correspondence with a resource pair comprised in the first resource pair, and each of the at least one group of single channel measurement results corresponds to one of the two groups of channel measurement resources.

12. The method according to claim 11, wherein the first reporting priority comprises:
a reporting priority of the joint channel measurement result is lower than a reporting priority of the at least one group of single channel measurement results.

13. The method according to claim 11, wherein the first reporting priority comprises:
a reporting priority of the joint channel measurement result and a reporting priority of the at least one group of single channel measurement results are determined based on a channel quality indicator CQI corresponding to each group of measurement results.

14. The method according to any one of claims 11 to 13, wherein the method further comprises:

receiving second configuration information from the radio access network device, wherein the first configuration information is different from the second configuration information; and
performing channel measurement based on the second configuration information to obtain a second measurement result, wherein
a second reporting priority exists between the first measurement result and the second measurement result; and
the terminal device first determines a reporting priority between the first measurement result and the second measurement result based on the second reporting priority, and then separately determines, based on the first reporting priority, a reporting priority between at least two groups of measurement results comprised in the first measurement result and the second measurement result.

15. The method according to any one of claims 11 to 14, wherein when a frequency domain granularity of channel measurement is a subband, a third reporting priority exists between a measurement result corresponding to an even-numbered subband and a measurement result corresponding to an odd-numbered subband in a same group of measurement results in the first measurement result; and

the terminal device first determines, based on the first reporting priority, a reporting priority between at least one group of measurement results comprised in the first measurement result, and then determines, based on the third reporting priority, a reporting priority between a measurement result corresponding to an even-numbered subband and a measurement result corresponding to an odd-numbered subband that are comprised in each of the at least one group of measurement results.

16. A communication apparatus, comprising:

a receiving unit, configured to receive first configuration information from a radio access network device, wherein the first configuration information is used to configure a plurality of channel measurement resources;
a measurement unit, configured to perform channel measurement on the plurality of channel measurement resources based on the first configuration information to obtain a first measurement result; and
a sending unit, configured to send the first measurement result to the radio access network device, wherein the first measurement result comprises a joint channel measurement result, the joint channel measurement result is a channel measurement result of a first resource pair, the first resource pair comprises one or more resource pairs comprising two channel measurement resources, the two channel measurement resources belong to the plurality of channel measurement resources, and the joint channel measurement result comprises indication information of the first resource pair.

17. The apparatus according to claim 16, wherein the plurality of channel measurement resources correspond to two groups of channel measurement resources, and two channel measurement resources of each resource pair in the first resource pair respectively belong to the two groups of channel measurement resources.

18. The apparatus according to claim 16 or 17, wherein the indication information of the first resource pair is an index of the first resource pair.

19. The apparatus according to any one of claims 16 to 18, wherein the first configuration information comprises second indication information, the second indication information indicates a first resource, and the first resource is one or more channel measurement resources used for single channel measurement in the plurality of channel measurement resources.

20. The apparatus according to any one of claims 16 to 19, wherein the first configuration information further comprises third indication information, the third indication information indicates a second resource pair, the second resource pair is one or more resource pairs that are in the plurality of channel measurement resources, that comprise two channel measurement resources, and that are used for joint channel measurement, and the second resource pair comprises the first resource pair.

21. The apparatus according to claim 20, wherein when a frequency band used by the radio access network device falls within a frequency range FR 2, channel measurement resources of different resource pairs in the second resource pair are different.

22. The apparatus according to claim 20 or 21, wherein a quantity of channel state information processing units CPUs occupied by the channel measurement is 2*P, Q+2*P, or Q+k*P, wherein Q is a quantity of channel measurement resources comprised in the first resource, P is a quantity of resource pairs comprised in the second resource pair, k is a value reported by a terminal device or configured by the radio access network device, and Q, P, and k are positive integers.

23. The apparatus according to any one of claims 19 to 22, wherein the first measurement result further comprises information about a second resource, the second resource is a to-be-reported channel measurement resource in the first resource, and the plurality of channel measurement resources correspond to the two groups of channel measurement resources; and
the information about the second resource is any one of the following:

a local index of the second resource in a group of channel measurement resources corresponding to the second resource;
a local index of the second resource in a channel measurement resource that belongs to the first resource in the group of channel measurement resources corresponding to the second resource; and
an index of a bit corresponding to the second resource in a first bitmap.

**24.** The apparatus according to claim 22 or 23, wherein the first configuration information further comprises fifth indication information, and the fifth indication information indicates at least one interference measurement resource;

> a quantity of interference measurement resources in the at least one interference measurement resource is equal to a sum of Q and P; and
> a type of the interference measurement resource is a non-zero power channel state information-reference signal NZP CSI-RS resource or a channel state information-interference measurement CSI-IM resource.

**25.** The apparatus according to claim 24, wherein first Q interference measurement resources in the at least one interference measurement resource are in a one-to-one correspondence with Q channel measurement resources comprised in the first resource, and remaining P interference measurement resources in the at least one interference measurement resource are in a one-to-one correspondence with P resource pairs comprised in the second resource pair.

**26.** The apparatus according to any one of claims 16 to 25, wherein the first measurement result further comprises at least one group of single channel measurement results, a first reporting priority exists between the joint channel measurement result and the at least one group of single channel measurement results, the joint channel measurement result is in a one-to-one correspondence with a resource pair comprised in the first resource pair, and each of the at least one group of single channel measurement results corresponds to one of the two groups of channel measurement resources.

**27.** The apparatus according to claim 26, wherein the first reporting priority comprises:
a reporting priority of the joint channel measurement result is lower than a reporting priority of the at least one group of single channel measurement results.

**28.** The apparatus according to claim 26, wherein the first reporting priority comprises:
a reporting priority of the joint channel measurement result and a reporting priority of the at least one group of single channel measurement results are determined based on a channel quality indicator CQI corresponding to each group of measurement results.

**29.** The apparatus according to any one of claims 26 to 28, wherein the receiving unit is further configured to receive second configuration information from the radio access network device, wherein the first configuration information is different from the second configuration information; and

> the measurement unit is further configured to perform channel measurement based on the second configuration information to obtain a second measurement result, wherein
> a second reporting priority exists between the first measurement result and the second measurement result; and
> the terminal device first determines a reporting priority between the first measurement result and the second measurement result based on the second reporting priority, and then separately determines, based on the first reporting priority, a reporting priority between at least two groups of measurement results comprised in the first measurement result and the second measurement result.

**30.** The apparatus according to any one of claims 26 to 29, wherein when a frequency domain granularity of channel measurement is a subband, a third reporting priority exists between a measurement result corresponding to an even-numbered subband and a measurement result corresponding to an odd-numbered subband in a same group of measurement results in the first measurement result; and
the terminal device first determines, based on the first reporting priority, a reporting priority between at least one group of measurement results comprised in the first measurement result, and then determines, based on the third reporting priority, a reporting priority between a measurement result corresponding to an even-numbered subband and a measurement result corresponding to an odd-numbered subband that are comprised in each of the at least one group of measurement results.

**31.** A communication apparatus, comprising a processor, wherein the processor is configured to implement the method according to any one of claims 1 to 15.

**32.** A communication apparatus, comprising a processor and a memory, wherein the processor invokes a computer program stored in the memory to implement the method according to any one of claims 1 to 15.

33. A communication apparatus, comprising a processor, a memory, and a transceiver, wherein the transceiver is configured to: receive information from a communication apparatus other than the communication apparatus, and output information to the communication apparatus other than the communication apparatus, and the processor invokes a computer program stored in the memory to implement the method according to any one of claims 1 to 15.

34. A computer-readable storage medium, wherein the computer-readable storage medium stores a computer program or computer instructions, and when the computer program or the computer instructions are run, the method according to any one of claims 1 to 15 is implemented.

35. A chip, comprising a processor, configured to execute a program stored in a memory, wherein when the program is executed, the chip is enabled to perform the method according to any one of claims 1 to 15.

36. A computer program product, wherein the computer program product comprises computer program code, and when the computer program code is run, the method according to any one of claims 1 to 15 is implemented.

FIG. 1

Channel
H1

Channel
H2

Joint
channel

FIG. 2

Port #1 of a channel
measurement resource #1

Port #2 of the channel
measurement resource #1

A terminal device can measure a multi-TRP joint channel
by measuring the channel measurement resource #1

FIG. 3

FIG. 4

FIG. 5

601

Receiving unit

602

Measurement unit

603

Sending unit

FIG. 6

701

Sending unit

702

Receiving unit

FIG. 7

803

804

801

Processor

Transceiver

8033

Transmitter

8031

802

8032

Memory

Receiver

Computer program code

FIG. 8

901

902

903

| Input interface | — | Logic circuit | — | Output interface |

FIG. 9

1001

1002

Terminal device

Transceiver

Processor

Transmitter

Memory

Computer program code

Receiver

Radio access network device

Transceiver

Processor

Transmitter

Memory

Computer program code

Receiver

FIG. 10

## INTERNATIONAL SEARCH REPORT

| International application No. |
|---|
| **PCT/CN2022/083818** |

### A. CLASSIFICATION OF SUBJECT MATTER

H04B 17/309(2015.01)i; H04W 72/04(2009.01)i

According to International Patent Classification (IPC) or to both national classification and IPC

### B. FIELDS SEARCHED

Minimum documentation searched (classification system followed by classification symbols)

H04B; H04W

Documentation searched other than minimum documentation to the extent that such documents are included in the fields searched

Electronic data base consulted during the international search (name of data base and, where practicable, search terms used)

CNABS; CNTXT; VEN; WPABS; ENTXTC; ENTXT; CNKI; 3GPP: 多个, 信道, 联合, 测量, 资源对, 波束对, 传输接收节点, 端口, 高频, 毫米波, multi+, channel?, joint+, measure+, resource?, beam?, pair?, trp?, port?, high frequence, mmw

### C. DOCUMENTS CONSIDERED TO BE RELEVANT

| Category* | Citation of document, with indication, where appropriate, of the relevant passages | Relevant to claim No. |
|---|---|---|
| PX | CN 113746573 A (HUAWEI TECHNOLOGIES CO., LTD.) 03 December 2021 (2021-12-03) description, paragraphs 141-213 | 1-36 |
| X | CN 108282212 A (HUAWEI TECHNOLOGIES CO., LTD.) 13 July 2018 (2018-07-13) description, paragraphs 233-239, 311-333, and 405 | 1-36 |
| X | CN 108810932 A (HUAWEI TECHNOLOGIES CO., LTD.) 13 November 2018 (2018-11-13) description, paragraphs 60-185 | 1-36 |
| X | WO 2020228971 A1 (TELEFONAKTIEBOLAGET LM ERICSSON (PUBL)) 19 November 2020 (2020-11-19) description, paragraphs 87-101 | 1-36 |
| X | HUAWEI et al. "R1-2007592 "Discussion on CSI Enhancements for Rel-17"" *3GPP tsg_ran\wg1_rl1*, 24 October 2020 (2020-10-24), pp. 11-14 | 1-36 |
| X | FUTUREWEI. "R1-1912732 "On Multi-TRP-Panel Transmission Enhancement"" *3GPP tsg_ran\wg1_rl1*, 08 November 2019 (2019-11-08), pp. 1-3 | 1-36 |

☑ Further documents are listed in the continuation of Box C.   ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 May 2022** | **24 May 2022** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/083818** |

**C. DOCUMENTS CONSIDERED TO BE RELEVANT**

| Category* | Citation of document, with indication, where appropriate, of the relevant passages | Relevant to claim No. |
| --- | --- | --- |
| A | US 2020136780 A1 (GUANGDONG OPPO MOBILE TELECOMMUNICATIONS CORP., LTD.) 30 April 2020 (2020-04-30)<br>entire document | 1-36 |
| A | US 2020336194 A1 (NOKIA TECHNOLOGIES OY) 22 October 2020 (2020-10-22)<br>entire document | 1-36 |

Form PCT/ISA/210 (second sheet) (January 2015)

**EP 4 311 131 A1**

| | Patent document<br>cited in search report | | | Publication date<br>(day/month/year) | Patent family member(s) | | | Publication date<br>(day/month/year) |
|---|---|---|---|---|---|---|---|---|
| | | | | **INTERNATIONAL SEARCH REPORT**<br>Information on patent family members | International application No.<br>**PCT/CN2022/083818** | | | |
| CN | 113746573 | A | | 03 December 2021 | WO | 2021244427 | A1 | 09 December 2021 |
| CN | 108282212 | A | | 13 July 2018 | EP | 3547745 | A1 | 02 October 2019 |
| | | | | | US | 2019335475 | A1 | 31 October 2019 |
| | | | | | WO | 2018127149 | A1 | 12 July 2018 |
| | | | | | EP | 3547745 | A4 | 01 January 2020 |
| | | | | | US | 11082986 | B2 | 03 August 2021 |
| | | | | | EP | 3547745 | B1 | 27 October 2021 |
| CN | 108810932 | A | | 13 November 2018 | BR | 112019015469 | A2 | 31 March 2020 |
| | | | | | CN | 110612734 | A | 24 December 2019 |
| | | | | | US | 2019297519 | A1 | 26 September 2019 |
| | | | | | WO | 2018202181 | A1 | 08 November 2018 |
| | | | | | EP | 3541111 | A1 | 18 September 2019 |
| | | | | | VN | 66046 | A | 25 September 2019 |
| | | | | | IN | 201937022329 | A | 08 November 2019 |
| | | | | | EP | 3541111 | A4 | 25 December 2019 |
| | | | | | EP | 3541111 | B1 | 24 November 2021 |
| WO | 2020228971 | A1 | | 19 November 2020 | EP | 3956994 | A1 | 23 February 2022 |
| | | | | | CN | 113841342 | A | 24 December 2021 |
| US | 2020136780 | A1 | | 30 April 2020 | WO | 2019213841 | A1 | 14 November 2019 |
| | | | | | CN | 109644119 | A | 16 April 2019 |
| | | | | | EP | 3618557 | A1 | 04 March 2020 |
| | | | | | CN | 109644119 | B | 21 April 2020 |
| | | | | | EP | 3618557 | A4 | 17 June 2020 |
| | | | | | EP | 3618557 | B1 | 24 March 2021 |
| | | | | | US | 11190323 | B2 | 30 November 2021 |
| US | 2020336194 | A1 | | 22 October 2020 | EP | 3718360 | A1 | 07 October 2020 |
| | | | | | WO | 2019102064 | A1 | 31 May 2019 |
| | | | | | KR | 20200088452 | A | 22 July 2020 |
| | | | | | CN | 111406434 | A | 10 July 2020 |
| | | | | | JP | 2021505045 | A | 15 February 2021 |
| | | | | | IN | 202047026177 | A | 21 August 2020 |
| | | | | | EP | 3718360 | A4 | 11 August 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110363822